# EUROPEAN PATENT SPECIFICATION

(11) **EP 0 940 726 B1**
(45) Date of publication and mention of the grant of the patent: **26.05.2004**
(21) Application number: 99301683.1
(22) Date of filing: 05.03.1999
(51) Int. Cl.: G03G 5/06

(54) **Electrophotographic photosensitive member, process cartridge and electrophotographic apparatus**
Elektrophotographisches, lichtempfindliches Element, Vorrichtungseinheit und elektrophotographischer Apparat
Elément photosensible, électrophotographique, unité de traitement et appareil électrophotographique

(30) Priority: 06.03.1998 JP 7120698; 06.03.1998 JP 7120798; 09.03.1998 JP 7301398; 24.03.1998 JP 9392898
(43) Date of publication of application: 08.09.1999
(73) Proprietor: CANON KABUSHIKI KAISHA, Tokyo (JP)
(72) Inventor: Tanaka, Masato, Ohta-ku, Tokyo (JP); Nakata, Kouichi, Ohta-ku, Tokyo (JP)
(74) Representative: Beresford, Keith Denis Lewis

(56) References cited:
- EP-A- 0 322 823
- EP-A- 0 451 844
- EP-A- 0 628 881

## Description

### FIELD OF THE INVENTION AND RELATED ART

The present invention relates to an electrophotographic photosensitive member containing a photoconductive substance of a specific structure, and a process cartridge and an electrophotographic apparatus equipped with the electrophotographic photosensitive member.

Hitherto, inorganic photoconductive substances, such as selenium, cadmium sulfide and zinc oxide, have been extensively used as photoconductive substances for use in electrophotographic photosensitive members. On the other hand, an electrophotographic photosensitive member using an organic photoconductive substance has an advantage that it provides an extremely good productivity because of good film-formability of the organic photoconductive substance allowing the production by wet-coating, thus providing an inexpensive electrophotographic photosensitive member. Further, such an organic photosensitive member also has an advantage that the sensitive wavelength region can be arbitrarily controlled by selection of a dye or pigment used as the photoconductive substance, and therefore has been extensively studied heretofore.

Particularly, in recent years, function separation-type photosensitive members comprising in lamination a charge generation layer containing an organic photoconductive dye or pigment and a charge transport layer comprising a photoconductive polymer and a low-molecular weight photoconductive substance, have been developed to provide remarkable improvements in sensitivity and durability which have been regarded as defects of conventional organic electrophotographic photosensitive members.

It is known that azo pigments exhibit excellent photoconductivity, and compounds having various properties can be easily obtained by selective combination of an azo component and a coupler component. Accordingly, a large number of compounds have been proposed heretofore. Examples of such azo pigment compounds are disclosed in, e.g., Japanese Laid-Open Patent Application (JP-A) 47-37543, JP-A 53-132347, JP-A 54-22834, JP-A 58-70232, JP-A 60-131539, JP-A 62-2267, JP-A 62-192747, JP-A 63-262656, JP-A 63-264762 and JP-A 1-180554.

European Patent Application Nos. 0322823 and 0628881 disclose organic photoconductive materials comprising an azo compound coupled with at least one coupler residue of the general formula shown below: 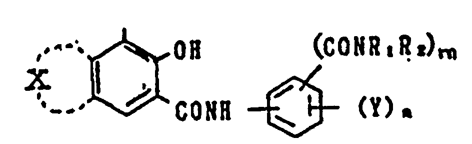 wherein X is a group capable of forming an optionally substituted aromatic or heteroaromatic ring by condensation with the benzene ring; Y is hydrogen, an alkyl group, an alkoxy group, a cyano group or a halogen; n is zero or an integer from 1 to 4; m is 1 or 2; and R₁ and R₂ denote respectively hydrogen, optionally substituted alkyl, optionally substituted alalkyl, optionally substituted aromatic hydrocarbon ring, or optionally substituted aromatic heterocycle. R₁ and R₂ may be the same or different and may form a ring together with the nitrogen atom to which they are attached.

However, conventional electrophotographic photosensitive members using azo pigments are not necessarily sufficient in respect of sensitivity and potential stability on repetitive use, so that only a few materials have been commercialised.

### SUMMARY OF THE INVENTION

A generic object of the present invention is to provide a novel electrophotographic photosensitive member.

A more specific object of the present invention is to provide an electrophotographic photosensitive member having practically high sensitivity and stable potential characteristic on repetitive use.

Another object of the present invention is to provide a process cartridge and an electrophotographic apparatus using the electrophotographic photosensitive member.

According to the present invention, there is provided an electrophotographic photosensitive member, comprising a support, and a photosensitive layer disposed on the support; said photosensitive layer containing an azo pigment having an organic group represented by formula (1) below: 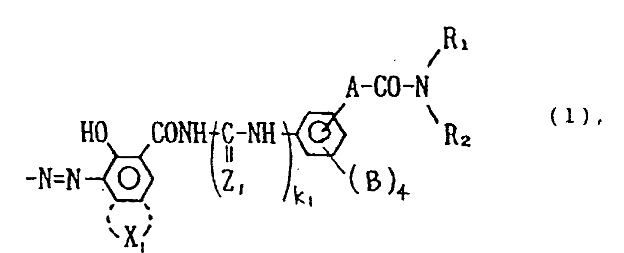 wherein X₁ is a group bonded to the benzene ring in the formula (1) to form a substituted or unsubstituted condensed hydrocarbon ring or substituted or unsubstituted condensed heterocyclic ring; each B independently denotes a hydrogen atom, halogen atom, nitro group, cyano group, carboxyl group, alkoxycarbonyl group, substituted or unsubstituted alkyl group, substituted or unsubstituted aralkyl group, or substituted or unsubstituted alkoxy group; R₁ and R₂ independently denote a hydrogen atom, a substituted or unsubstituted alkyl group, a substituted or unsubstituted aralkyl group, a substituted or unsubstituted aryl group, a substituted or unsubstituted heterocyclic group, or a group forming a substituted or unsubstituted cyclic amino group by a combination of the groups R₁ and R₂ together with the nitrogen (N) atom in the formula (1); Z₁ denotes an oxygen atom or sulfur atom; k₁ is 0 or 1; A denotes a substituted or unsubstituted alkylene group, substituted or unsubstituted alkenylene group, -R₃-CO- or 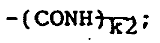 R₃ denotes a substituted or unsubstituted alkylene group; and k₂ is 0 or 1;
with the proviso that k₁ and k₂ cannot simultaneously be 0. The present invention further provides a process cartridge and an electrophotographic apparatus respectively including the above-mentioned electrophotographic photosensitive member.

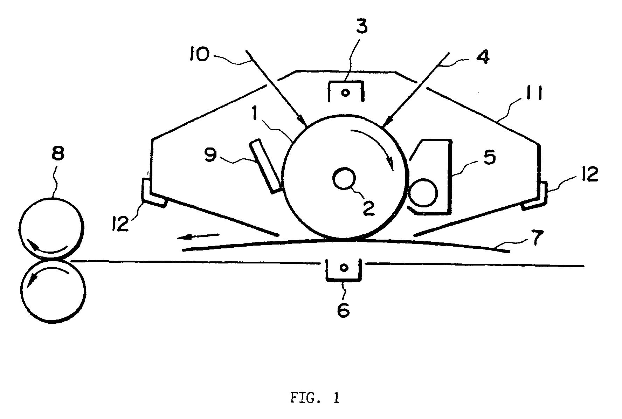

These and other objects, features and advantages of the present invention will become more apparent upon a consideration of the following description of the preferred embodiments of the present invention taken in conjunction with the accompanying drawing.

### BRIEF DESCRIPTION OF THE DRAWING

The sole figure in the drawing is a schematic illustration of an electrophotographic apparatus including a process cartridge which in turn includes an embodiment of the electrophotographic photosensitive member according to the invention.

### DETAILED DESCRIPTION OF THE INVENTION

As described above, the electrophotographic photosensitive member according to the present invention comprises a support and a photosensitive layer disposed on the support, and the photosensitive layer is characterized by containing an azo pigment having an organic group represented by formula (1) below: 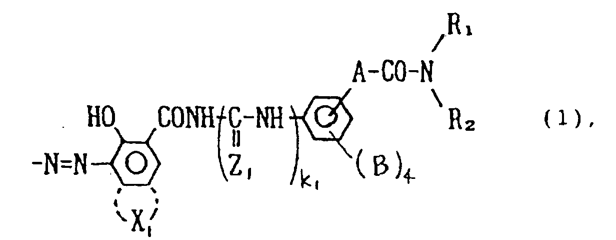 wherein X₁ is a group bonded to the benzene ring in the formula (1) to form a substituted or unsubstituted condensed hydrocarbon ring or substituted or unsubstituted condensed heterocyclic ring; each B independently denotes a hydrogen atom, halogen atom, nitro group, cyano group, carboxyl group, alkoxycarbonyl group, substituted or unsubstituted alkyl group, substituted or unsubstituted aralkyl group, or substituted or unsubstituted alkoxy group; R₁ and R₂ independently denote a hydrogen atom, a substituted or unsubstituted alkyl group, a substituted or unsubstituted aralkyl group, a substituted or unsubstituted aryl group, a substituted or unsubstituted heterocyclic group, or a group forming a substituted or unsubstituted cyclic amino group by a combination of the groups R₁ and R₂ together with the nitrogen (N) atom in the formula (1); Z₁ denotes an oxygen atom or sulfur atom; k₁ is 0 or 1; A denotes a substituted or unsubstituted alkylene group, substituted or unsubstituted alkenylene group, -R₃-CO- or 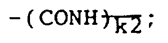 R₃ denotes a substituted or unsubstituted alkylene group; and k₂ is 0 or 1.

Examples of the condensed hydrocarbon ring or heterocyclic ring optionally having a substituent formed by a combination the group X₁ and the benzene ring in the formula (1) may include: substituted or unsubstituted naphthalene ring, substituted or unsubstituted anthracene ring, substituted or unsubstituted carbazole ring, substituted or unsubstituted benzocarbazole ring, substituted or unsubstituted dibenzofuran ring, substituted or unsubstituted benzonaphthofuran ring, substituted or unsubstituted diphenylene sulfite ring, substituted or unsubstituted quinoline ring, substituted or unsubstituted isoquinoline ring, and substituted or unsubstituted acridine ring.

Examples of the substituent optionally possessed by the group X₁ may include: alkyl group, such as methyl, ethyl, propyl and butyl; alkoxy groups. such as methoxy and ethoxy; halogen atoms, such as fluorine, chlorine, bromine, and iodine; alkylamino groups, such as dimethylamino and diethylamino; phenylcarbamoyl, nitro, cyano, hydroxyl, and halomethyl groups, such as trifluoromethyl.

Each substituent B may independently be a hydrogen atom; a halogen atom, such as fluorine, chlorine, bromine, or iodine; nitro, cyano, carboxyl; alkoxycarbonyl, such as methoxycarbonyl, or ethoxy carbonyl; substituted or unsubstituted alkyl group, such as methyl, ethyl or propyl; substituted or unsubstituted aralkyl group, such as benzyl or phenethyl; or substituted or unsubstituted alkoxy group, such as methoxy, ethoxy or propoxy.

Examples of the substituent optionally possessed by the group B may include: alkyl group, such as methyl, ethyl, propyl and butyl; alkoxy groups. such as methoxy and ethoxy; halogen atoms, such as fluorine, chlorine, bromine, and iodine; alkylamino groups, such as dimethylamino and diethylamino; phenylcarbamoyl, nitro, cyano, hydroxyl, and halomethyl groups, such as trifluoromethyl.

As for the groups R1 and R2 in the formula (1), examples of the alkyl group may include methyl, ethyl, propyl and butyl; examples of the aralkyl group may include benzyl, phenetyl and naphthyl methyl; examples of the aryl group may include phenyl, biphenyl, naphthyl and anthryl; and examples of the heterocyclic group may include; pyridyl, thienyl, furyl, thiazolyl, carbazolyl, dibenzofuryl, benzoimidazolyl, and benzothiazolyl. Examples of the substituent optionally possessed by the above-mentioned alkyl group may include: halogen atoms, such as fluorine, chlorine, bromine and iodine; nitro group and cyano group. Examples of the substituent optionally possessed by the above-mentioned aralkyl group, aryl group and heterocyclic group may include: alkyl groups, such as methyl, ethyl and propyl; halogen atoms, such as fluorine, chlorine, bromine and iodine; alkylamino groups, such as dimethylamino and diethylamino; phenylcarbamoyl, nitro, cyano, and halomethyl groups, such as trifluoromethyl.

Examples of the cyclic amino group formed by the groups R1, R2 and the nitrogen (N) in the formula (1) may include: pyrrolyl, pyrrolinyl, pyrrolidinyl, indolyl, piperidinyl, piperazinyl, isoindolyl, carbazolyl, benzoindolyl, imidazolyl, pyrazolyl, pyrazolinyl, oxadinyl, phenoxadinyl and benzocarbolyl. Examples of the substituent optionally possessed by these cyclic amino groups may include: alkyl groups, such as methyl, ethyl and propyl; alkoxy groups, such as methoxy and ethoxy; halogen atoms, such as fluorine, chlorine, bromine and iodine; nitro, cyano and halo-methyl groups, such as trifluoromethyl.

As will be described hereinafter, R1 may preferably be a hydrogen atom so as to exhibit an interaction between pigment molecules owing to hydrogen-bonding capability. Further, in the case where R1 is hydrogen, R2 may preferably be a substituted or unsubstituted alkyl group, or substituted or unsubstituted aralkyl group, or substituted or unsubstituted aryl group. Among these, a substituted or unsubstituted aryl group is particularly preferred, and substituted or unsubstituted phenyl is most preferred.

As for the group A in the formula (1), examples of the alkylene group may include: methylene, ethylene and propylene; and examples of the alkenylene group may include: vinylene and propenylene. Examples of the substituent optionally possessed by the alkylene and alkenylene groups may include: halogen atoms, such as fluorine, chlorine, bromine and iodine, nitro group and cyano group.

As for the group R₃, examples of the alkylene group may include: methylene, ethylene and propylene. Examples of the substituent optionally possessed by the alkylene group may include: halogen atoms, such as fluorine, chlorine, bromine and iodine; nitro group and cyano group.

As a preferred combination, it is preferred that A is an alkylene group or alkenylene group selected from -CH₂-, -CH₂CH₂-, -CH(CH₃)-, -CH₂CH₂CH₂- and -CH=CH; R₃ is -CH₂-, and all the four Bs are hydrogen atoms.

Alternatively, it is also preferred that Z is an oxygen atom when A is

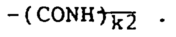

The azo pigment used in the present invention may preferably have an entire structure including a core unit to which the organic group of the formula (1) is bonded. The core unit includes at least one ring unit each comprising at least one of substituted or unsubstituted aromatic hydrocarbon rings and substituted or unsubstituted heterocyclic rings with the proviso that a plurality of such ring units can be bonded to each other via an intervening bonding group. Each ring unit may be composed of one ring or a plurality of fused rings. The core unit can comprise a single ring unit but may preferably comprise a plurality of such ring units bonded directly or via an intervening bonding group. The nature and examples of such an intervening bonding group will be understood from not a few preferred examples of the combinations of the ring units described below and the azo pigment enumerated hereinafter.

Examples of the ring units, i.e., (optionally substituted) aromatic hydrocarbon ring(s) and/or heterocyclic ring(s), may include: hydrocarbon rings, such as benzene, naphthalene, fluorene, phenanthrene, anthracene and pyrene; heterocyclic rings, such as furan, thiophene, pyridine, indole, benzothiazole, carbazole, acridone, dibenzothiophene, benzoxazole, oxadiazole, and thiazole; and combination of such hydrocarbon ring(s) and/or heterocyclic ring(s) bonded directly or via an aromatic group or non-aromatic group, such as biphenyl, binaphthyl, diphenylamine, triphenylamine, N-methyldiphenylamine, fluorenone, phenanthrenequinone, anthraquinone, benzanthrone, anthanthrone, terphenyl, diphenyloxadiazole, stilbene, distyrylbenzene, azobenzene, azoxybenzene, phenylbenzoxazole, diphenylmethane, diphenylsulfone, diphenyl ether, benzophenone, tetraphenyl-p-phenylenediamine, tetraphenylbenzidine, N-phenyl-2-pyridylamine, and N,N-diphenyl-2-pyridylamine.

Examples of the substituent optionally possessed by the aromatic hydrocarbon ring(s) and/or heterocyclic ring(s) may include: alkyl groups, such as methyl, ethyl, propyl and butyl; alkoxy groups, such as methoxy and ethoxy; dialkylamino groups, such as dimethylamino and diethylamino; halogen atoms, such as fluorine, chlorine, bromine and iodine; nitro, cyano and halo-methyl groups.

More specifically, the azo pigment used in the present invention may preferably have a structure represented by the following formula (2):

Ar(̵N=N-Cp)ₙ (2),

wherein Ar denotes a core unit as described above including at least one ring unit each comprising at least one of substituted or unsubstituted aromatic hydrocarbon rings and substituted or unsubstituted heterocyclic rings with the proviso that a plurality of such ring units can be bonded to each other via an intervening bonding group; n is an integer of 1 - 4; and each Cp denotes a coupler residue group having a phenolic hydroxy group with the proviso that at least one of up to 4 Cp groups constitutes the organic group of the formula (1). In the present invention, it is preferred that n is at least 2, and n = 2 is particularly preferred in view of the electrophotographic performances of the resultant photosensitive member.

Examples of the coupler groups Cp in the formula (2) other than that constituting the organic group of the formula (1) may include those of the following formula (3) - (17), while these are not exhaustive.

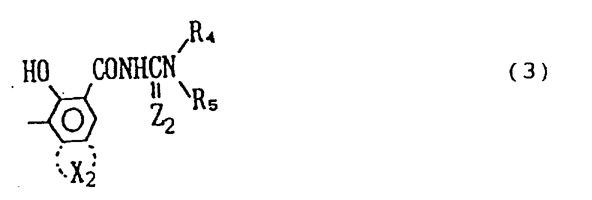

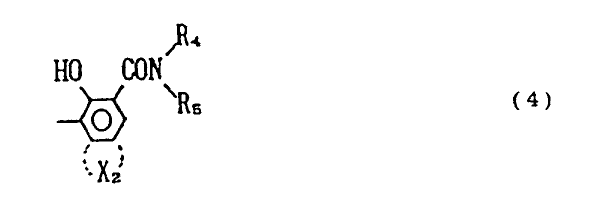

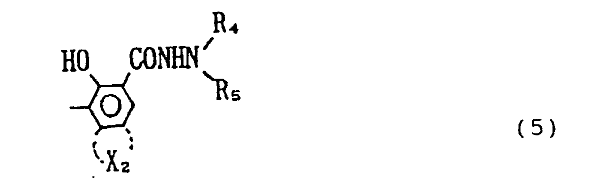

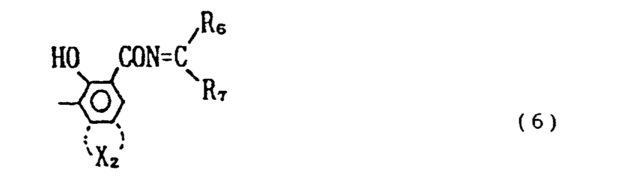

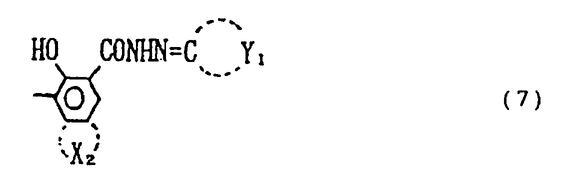

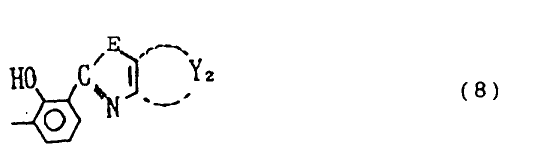

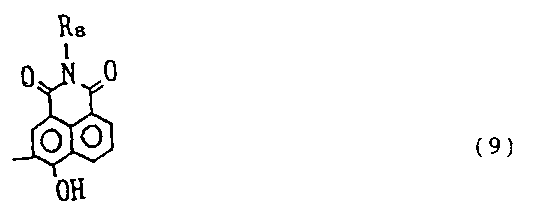

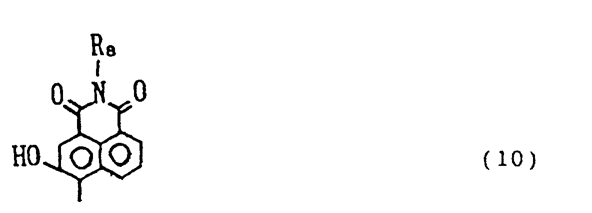

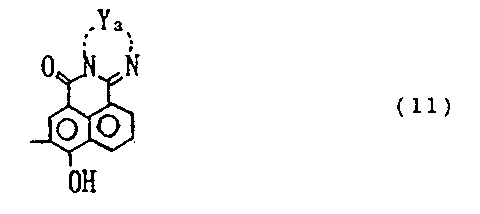

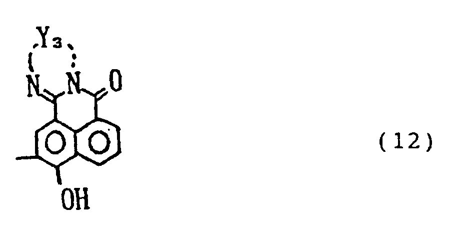

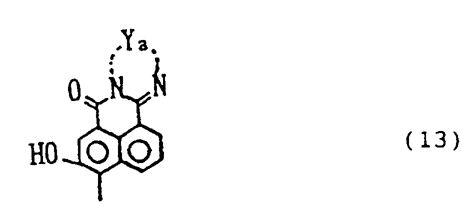

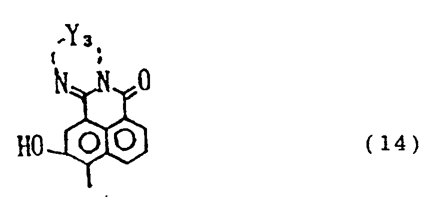

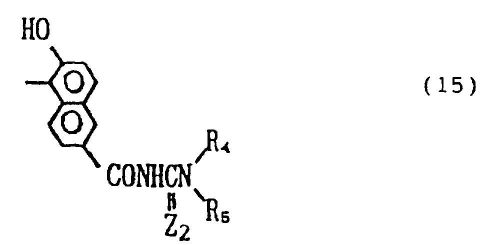

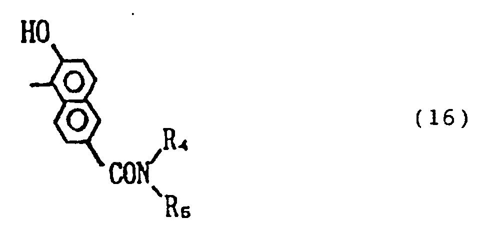

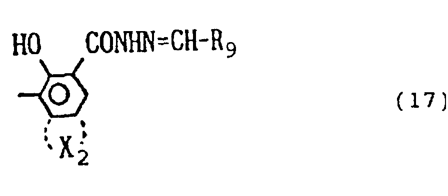

In the above formulae, X2 represents an organic residue group condensed with the benzene ring to form an aromatic hydrocarbon ring or heterocyclic ring, such as a substituted or unsubstituted naphthalene ring, substituted or unsubstituted anthracene ring, substituted or unsubstituted carbazole ring, substituted or unsubstituted benzocarbazole ring, substituted or unsubstituted dibenzofuran ring, substituted or unsubstituted benzonaphthofuran ring, substituted or unsubstituted fluorenone ring, substituted or unsubstituted dibenzophenylene sulfite ring, substituted or unsubstituted quinoline ring, substituted or unsubstituted isoquinoline ring, or substituted or unsubstituted acridine ring;

R4 and R5 independently denote a hydrogen atom, a substituted or unsubstituted alkyl group, a substituted or unsubstituted aralkyl group, a substituted or unsubstituted aryl group, a substituted or unsubstituted heterocyclic group, or a group forming a substituted or unsubstituted cyclic amino group by combination of the groups R4 and R5 with the nitrogen in the formula concerned;

R6 and R7 independently denote a hydrogen atom, a substituted or unsubstituted alkyl group, a substituted or unsubstituted aralkyl group, a substituted or unsubstituted aryl group, or a substituted or unsubstituted heterocyclic group;

R8 and R9 independently denote a substituted or unsubstituted alkyl group, a substituted or unsubstituted aralkyl group, a substituted or unsubstituted aryl group, or a substituted or unsubstituted heretocyclic group;

Y1 denotes a divalent group forming a substituted or unsubstituted hydrocarbon ring group or heterocyclic group together with the carbon in the formula concerned with preferred examples of the hydrocarbon ring group or heterocyclic group of 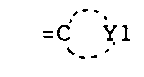 including the following: 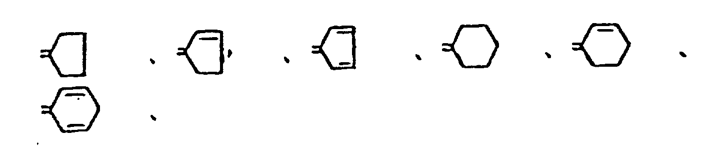 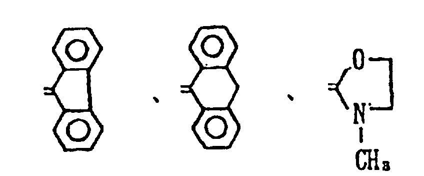 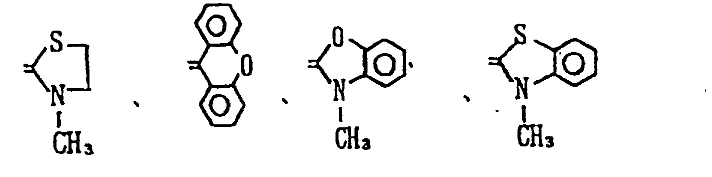
Y2 denotes a substituted or unsubstituted divalent aromatic hydrocarbon ring group, such as o-phenylene, o-naphthylene, peri-naphthylene, 1,2-anthrylene, or 9,10-phenanthrylene;
Y3 denotes a substituted or unsubstituted divalent aromatic hydrocarbon ring group or nitrogen-containing heterocyclic group with examples of the divalent aromatic hydrocarbon ring group including: o-phenylene, o-naphthylene, peri-naphthylene, 1,2-anthrylene and 9,10-phenanthrylene, and with examples of the divalent nitrogen-containing heterocyclic group including: 3,4-pyrazole-di-yl, 2,3-pyridine-di-yl, 4,5-pyridine-di-yl, 6,7-imidazole-di-yl, 5,6-benzimidazole-di-yl, and 6,7-quinoline-di-yl;

D denotes an oxygen atom, sulfur atom or N-substituted or unsubstituted imino group with examples of the N-substituent including: substituted or unsubstituted aralkyl group, substituted or unsubstituted aralkyl group, and substituted or unsubstituted aryl group such as phenyl and naphthyl; and

Z2 is an oxygen atom or sulfur atom.

As for the groups R4 to R9 and D in the above formulae (3) - (17), examples of the alkyl group may include: methyl, ethyl and propyl; the aralkyl group: benzyl, phenethyl and naphthyl; the aryl group: phenyl, diphenyl, naphthyl and anthryl; the heterocyclic group: pyridyl, thienyl, furyl, thiazolyl, carbazolyl, dibenzofuryl, benzimidazolyl and benzothiazolyl; the nitrogen-containing cyclic amino group: those derived from the corresponding amines of pyrrole, pyrroline, pyrrolidine, pyrrolidone, indole, indaline, isoindole, carbazole, benzindole, imidazole, pyrazole, pyrazoline, oxadine, phenoxazine and benzcarbazole.

Further, examples of the optional substituents that may be contained the groups X2, R4 - R9, Y1 - Y3 and D may include: alkyl groups, such as methyl, ethyl, propyl and butyl; alkoxy groups, such as methoxy and ethoxy; halogen atoms, such as fluorine, chlorine, bromine and iodine; alkylamino groups, such as dimethylamino and diethylamino; phenylcarbamoyl, nitro, cyano and halo-methyl groups, such as trifluoromethyl.

Preferred examples of the azo pigment used in the present invention are enumerated hereinbelow with their example numbers each followed by its entire structural formula on the left side and structural formula of the coupler residue (Cp) in the entire structural formula on the right side.

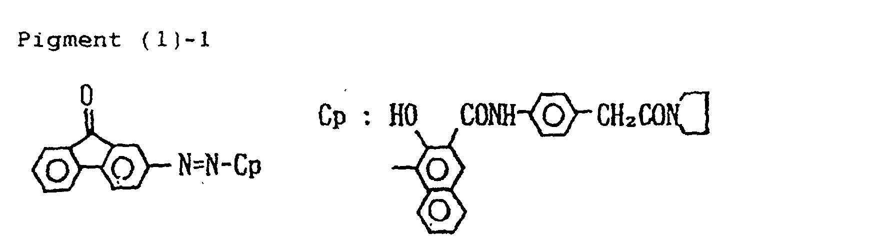

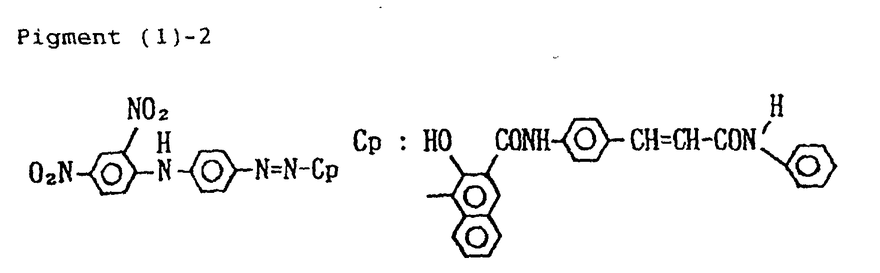

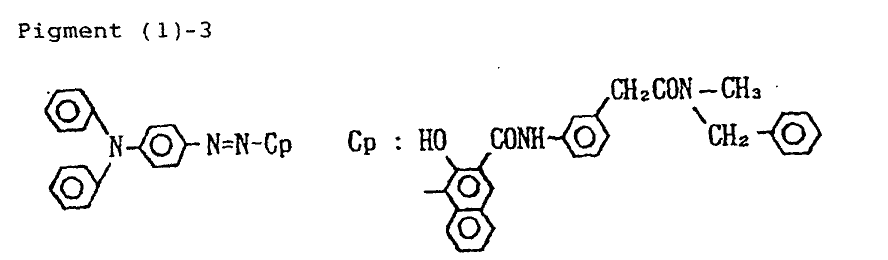

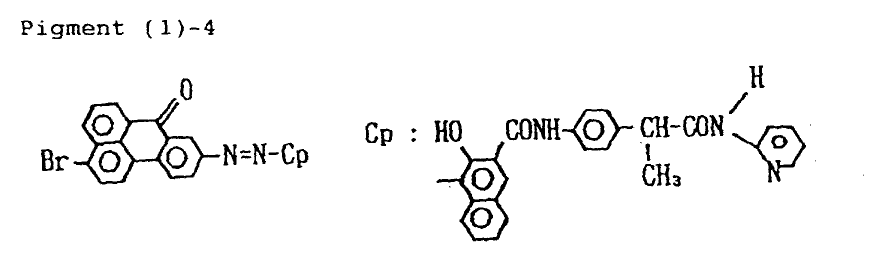

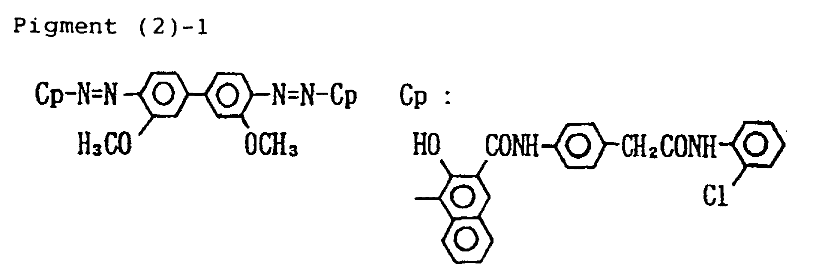

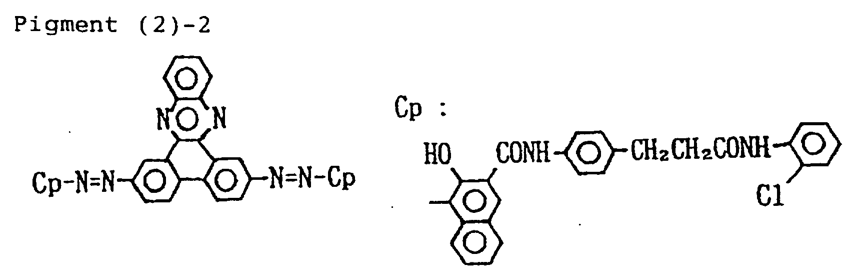

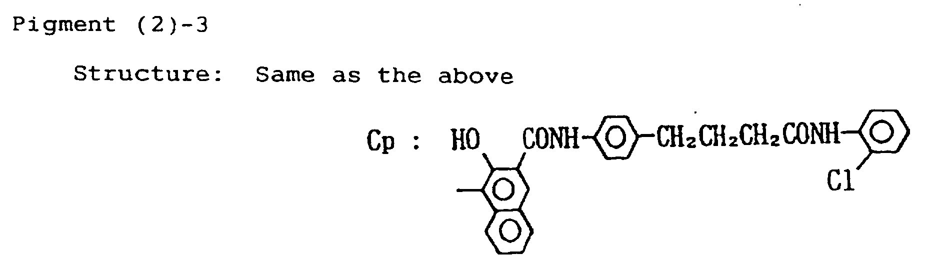

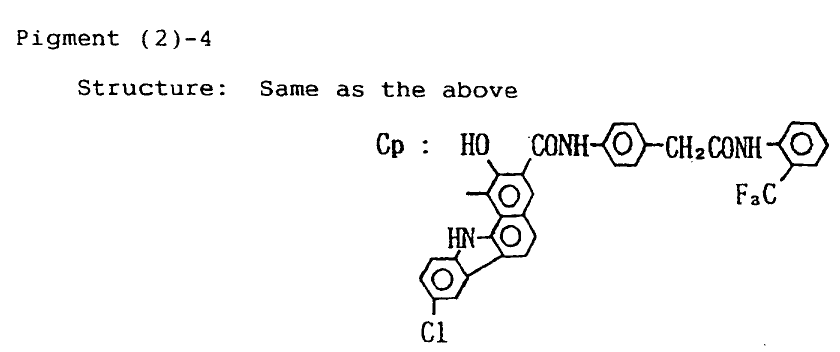

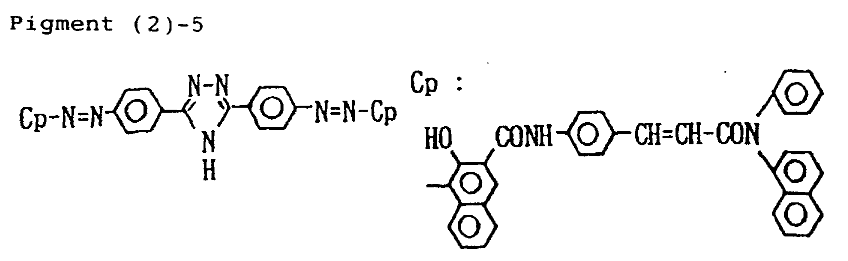

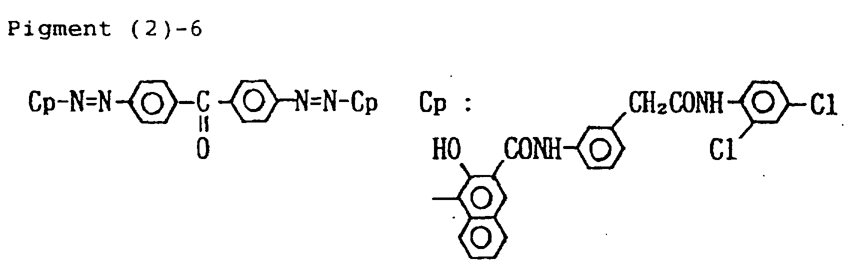

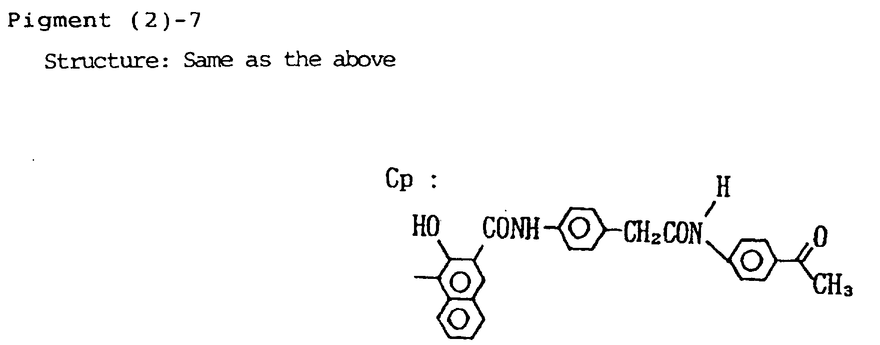

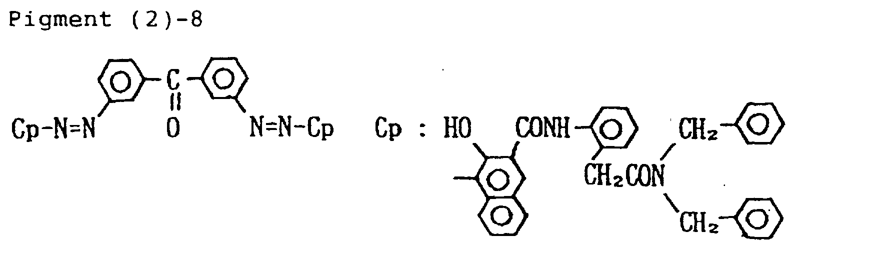

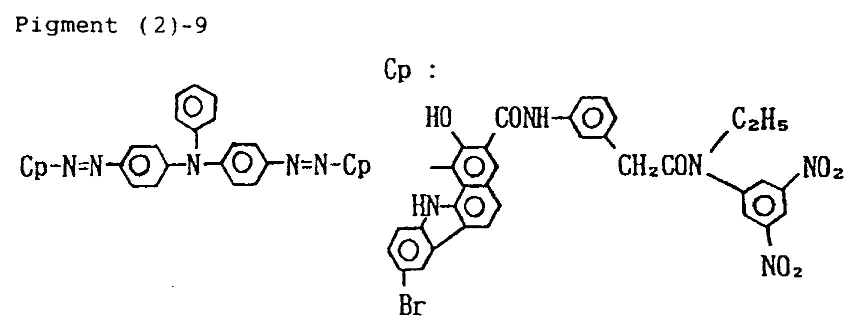

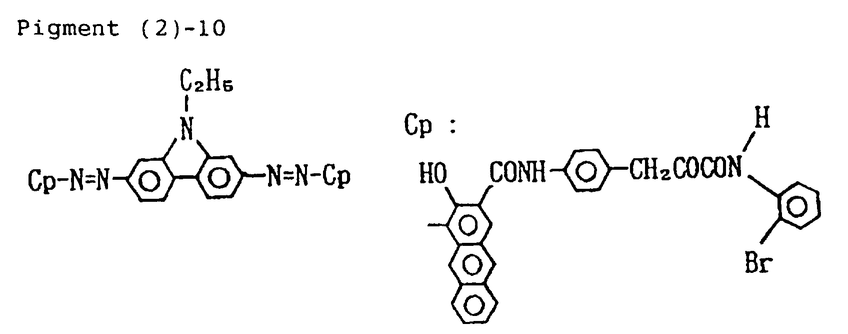

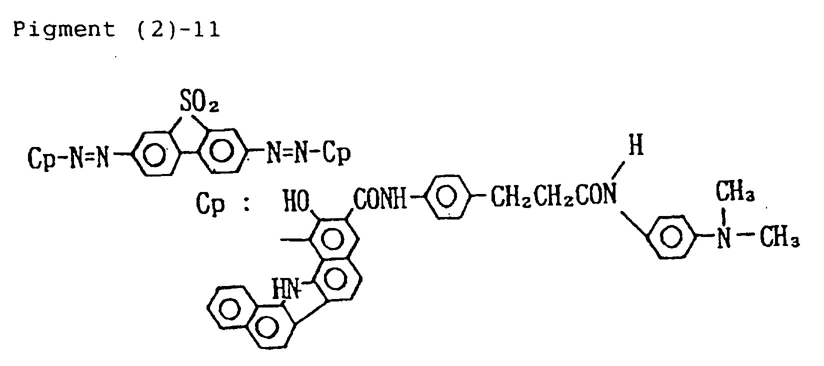

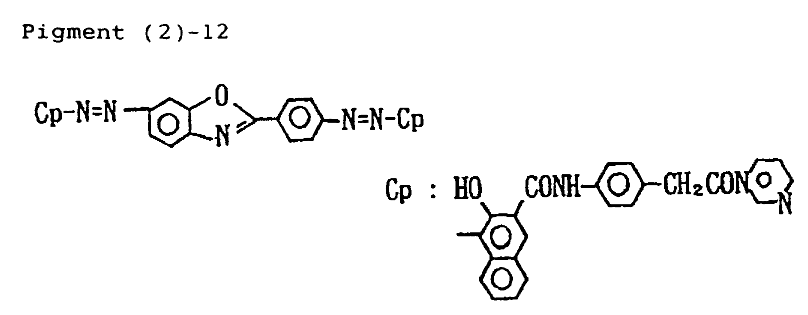

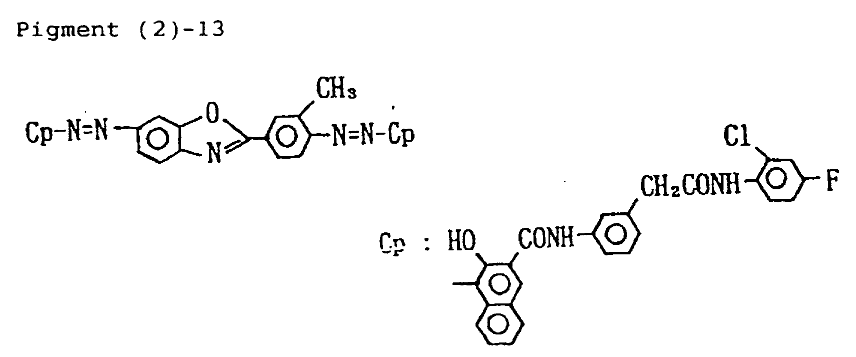

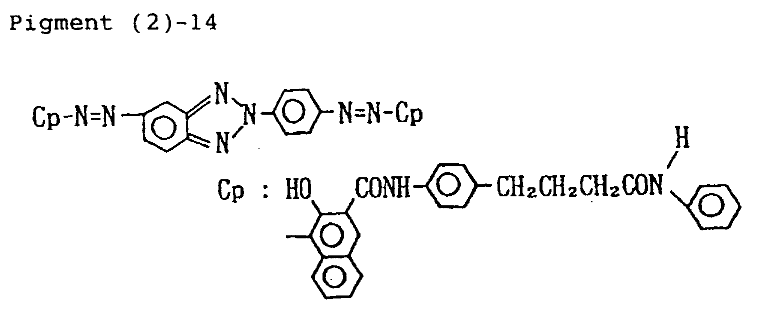

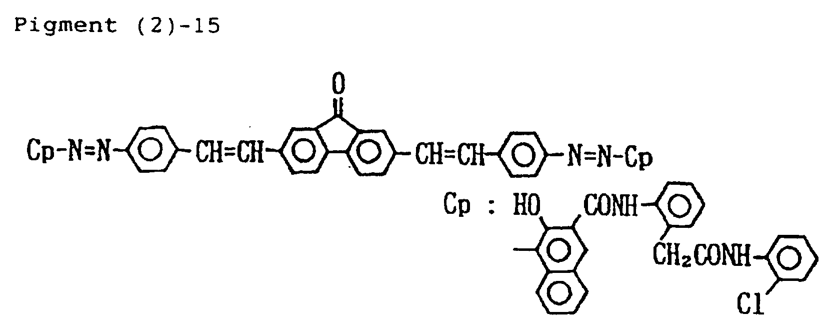

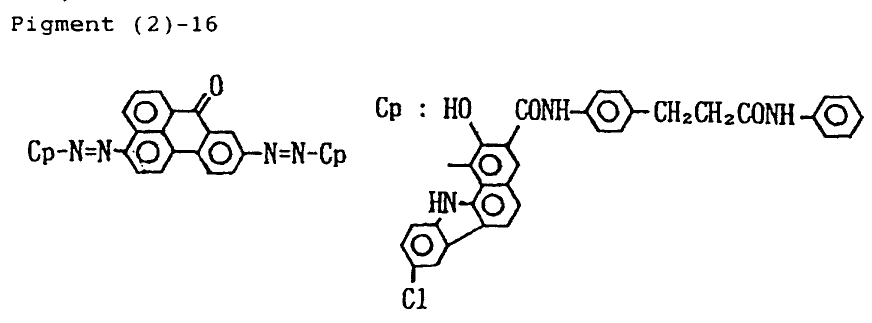

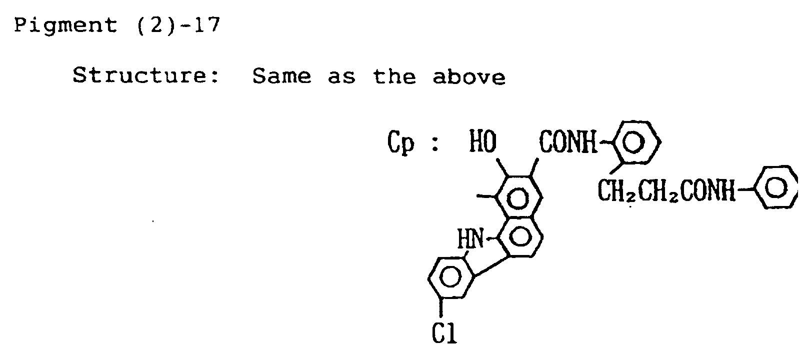

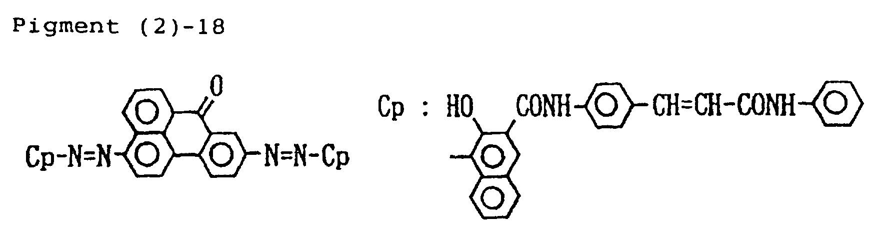

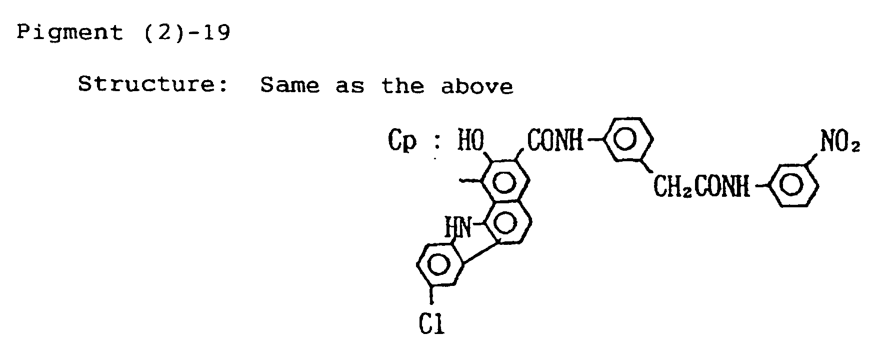

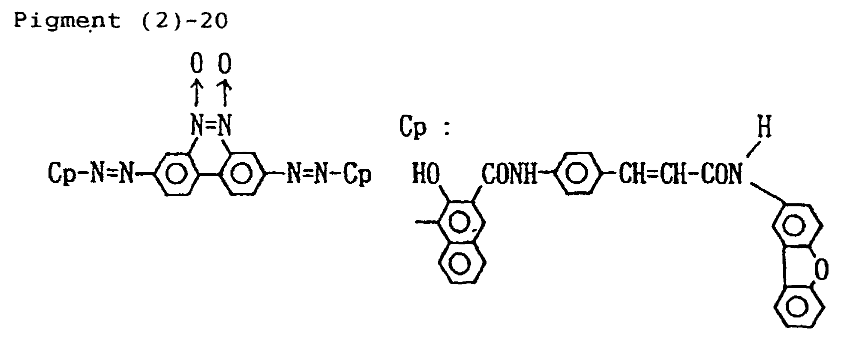

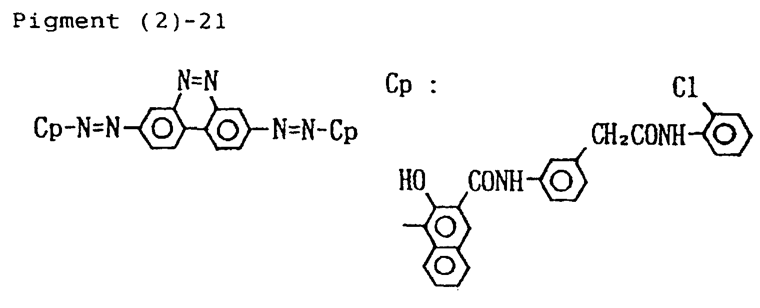

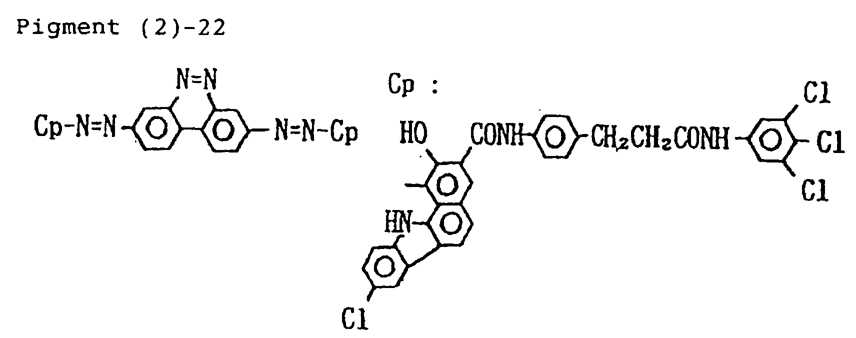

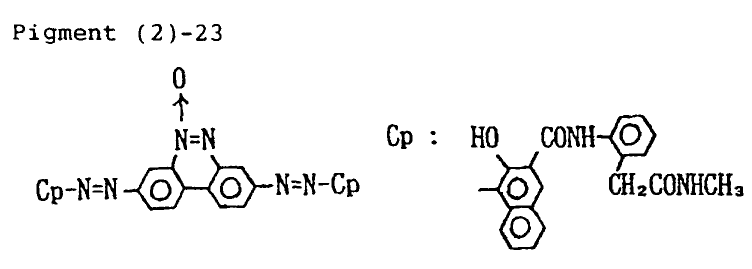

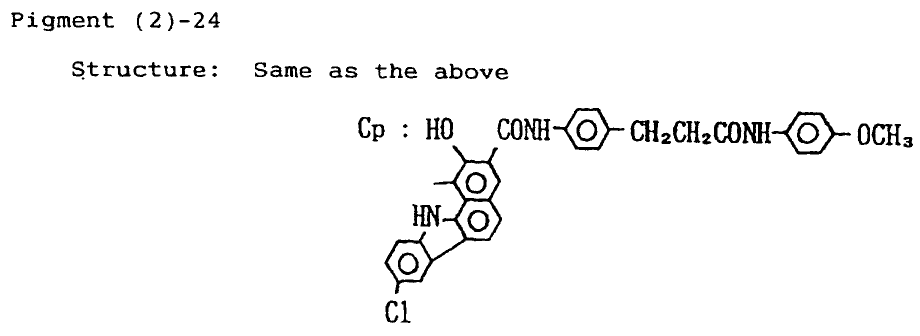

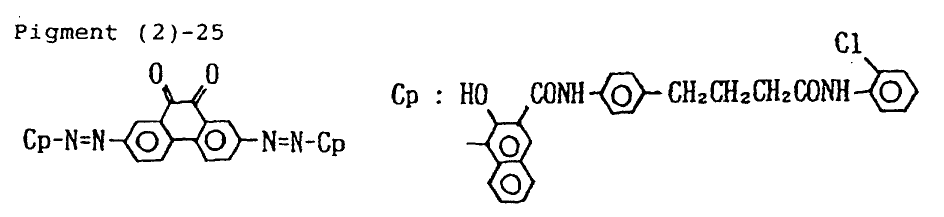

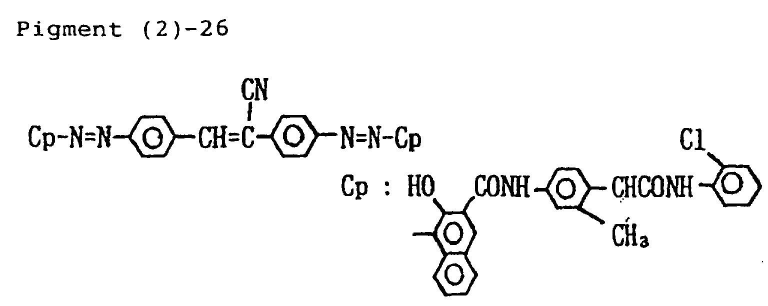

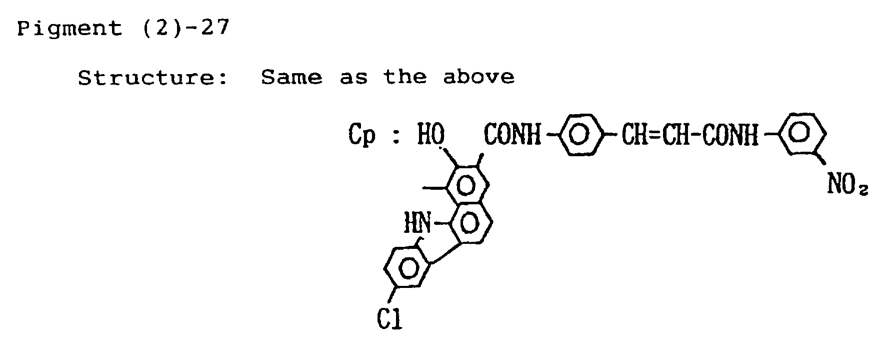

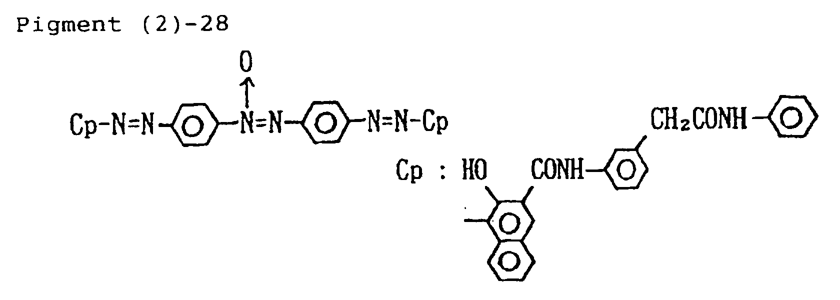

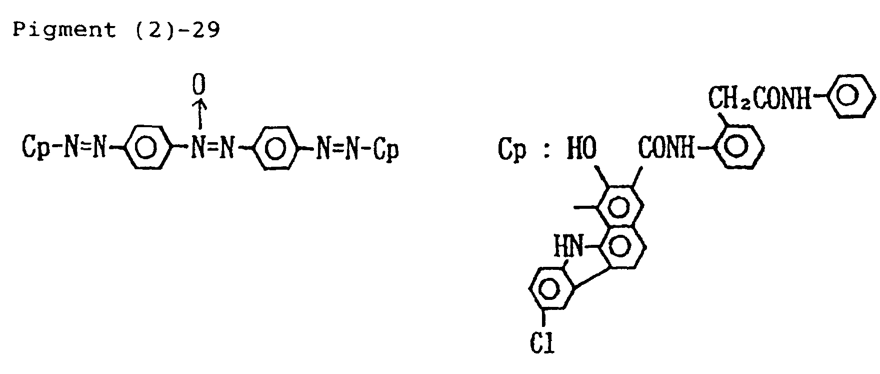

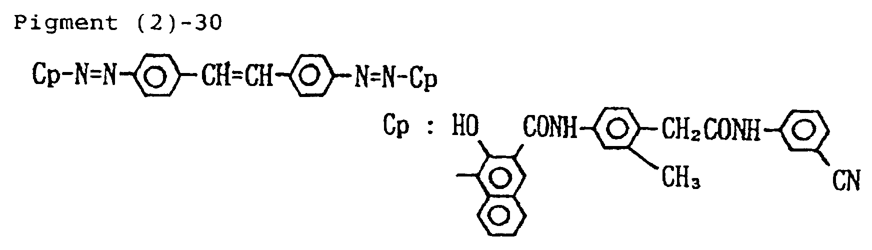

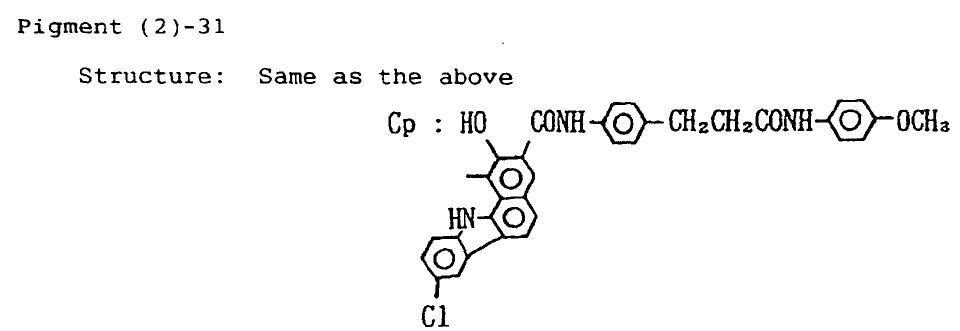

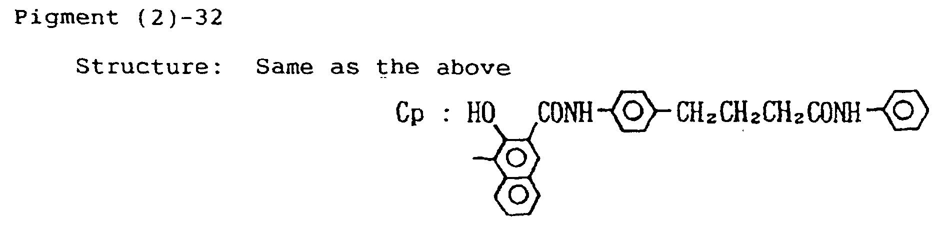

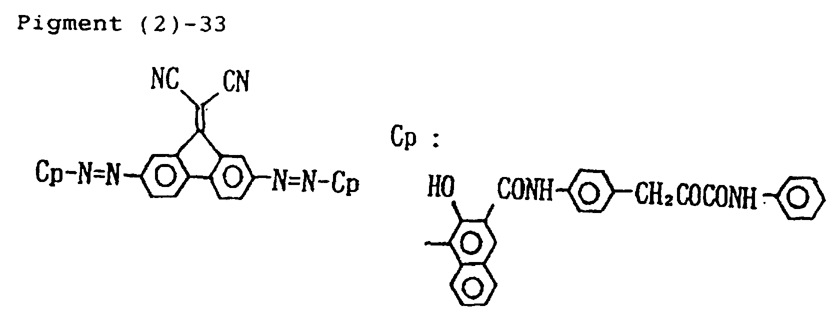

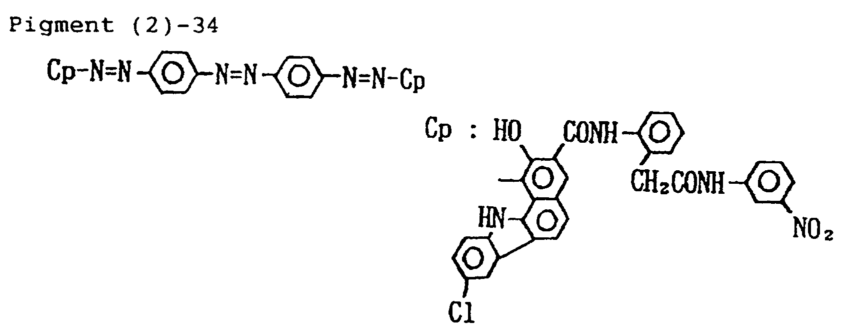

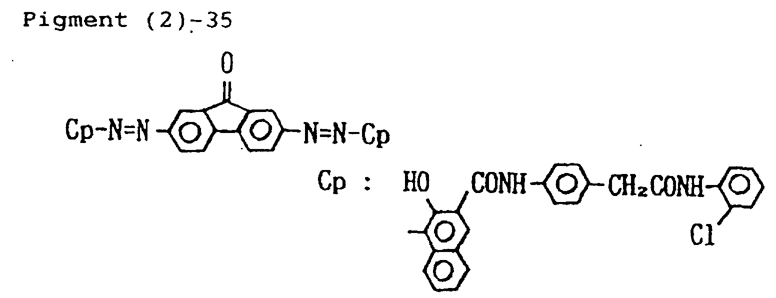

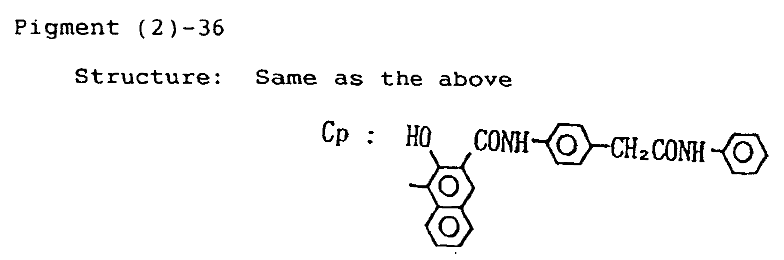

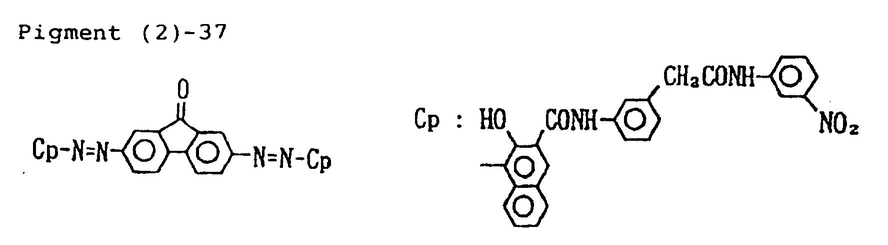

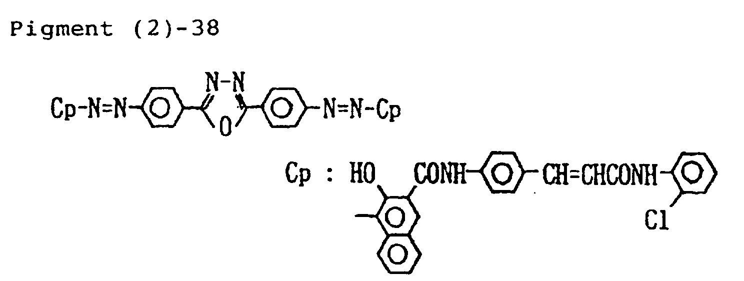

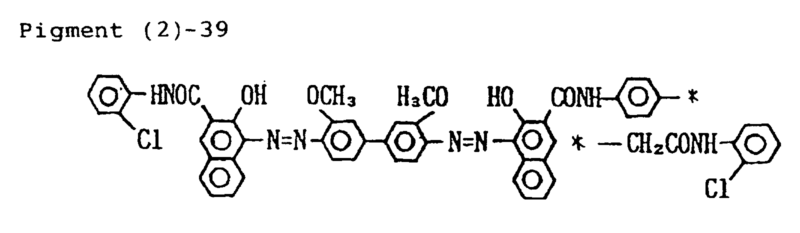

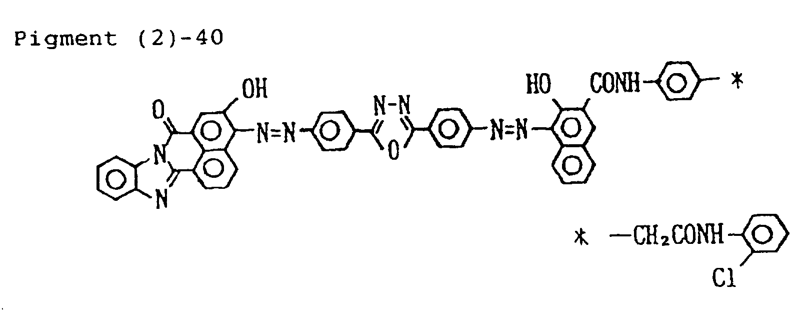

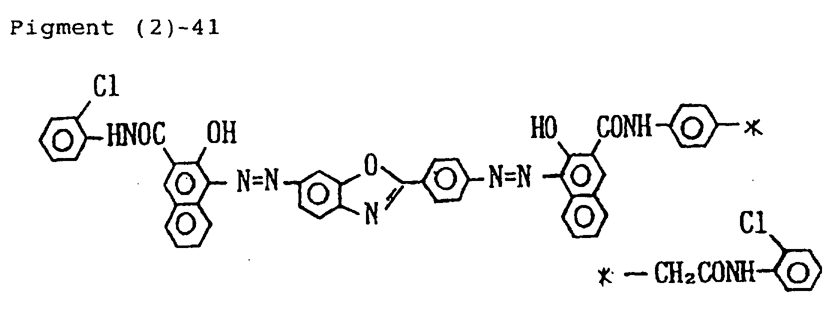

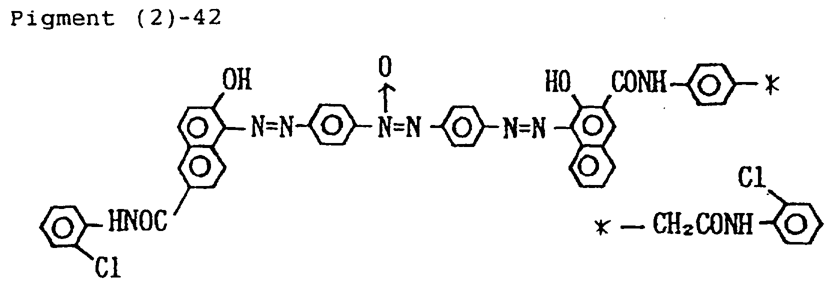

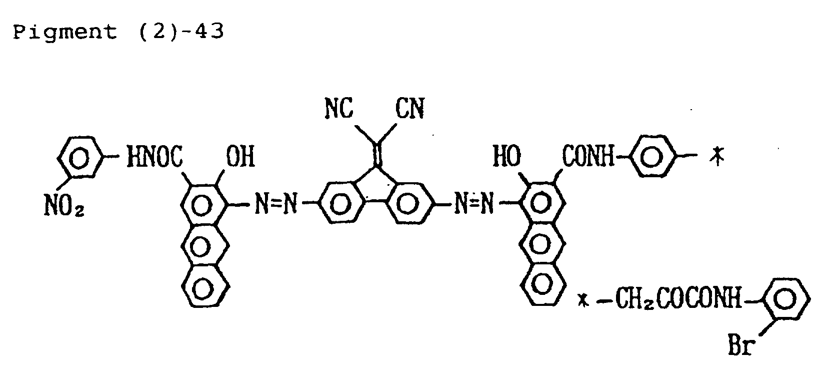

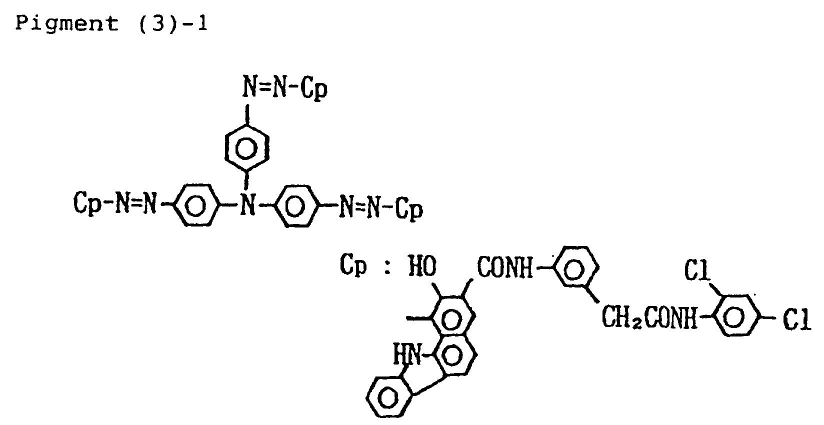

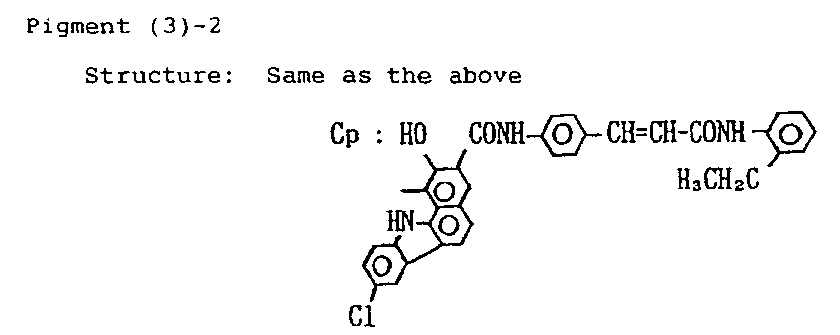

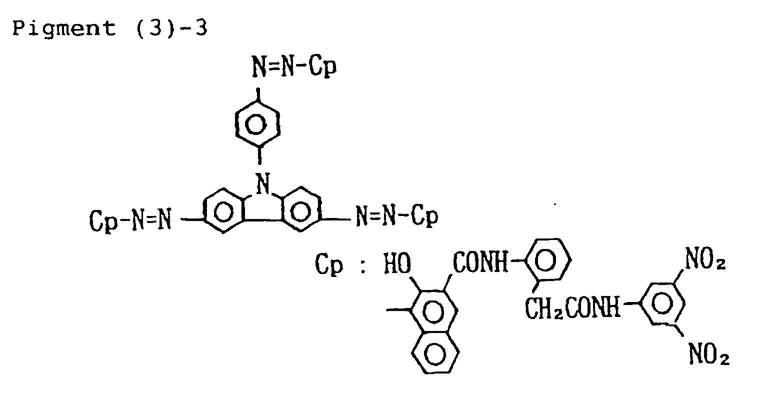

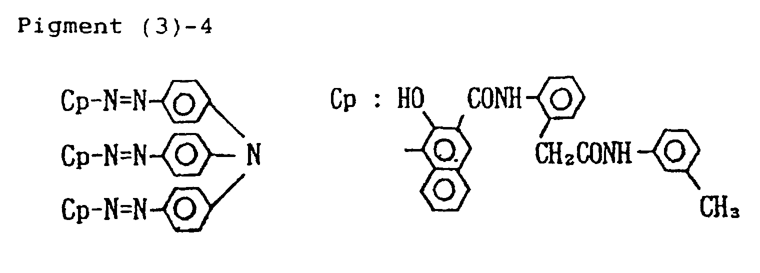

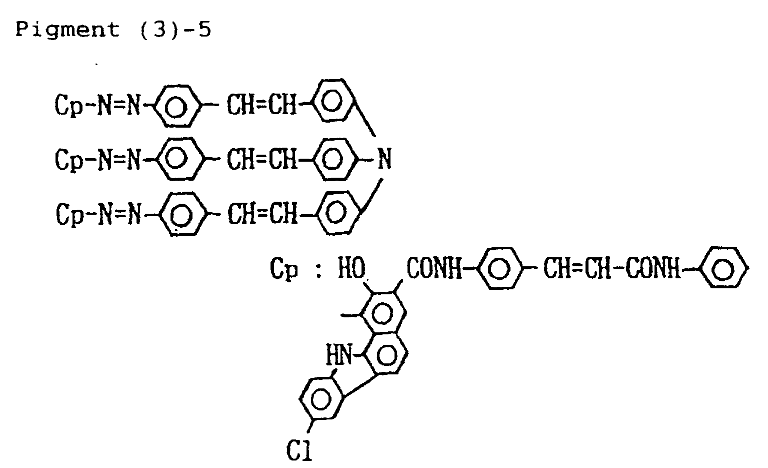

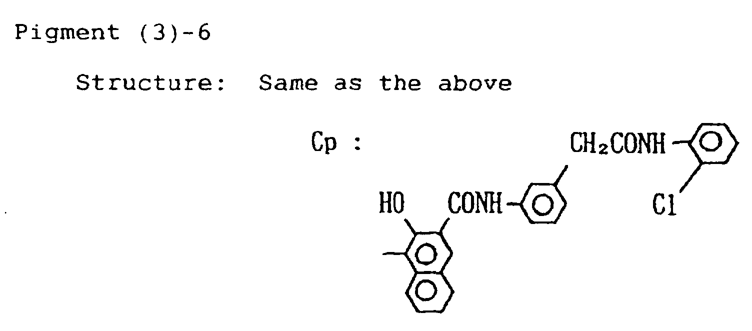

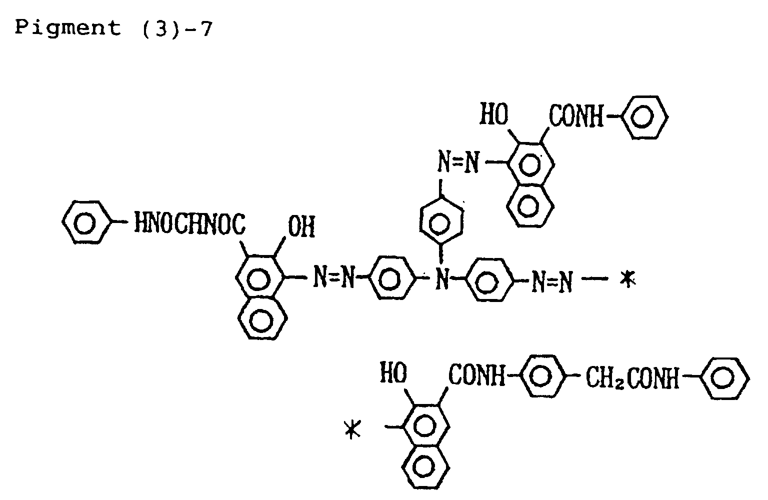

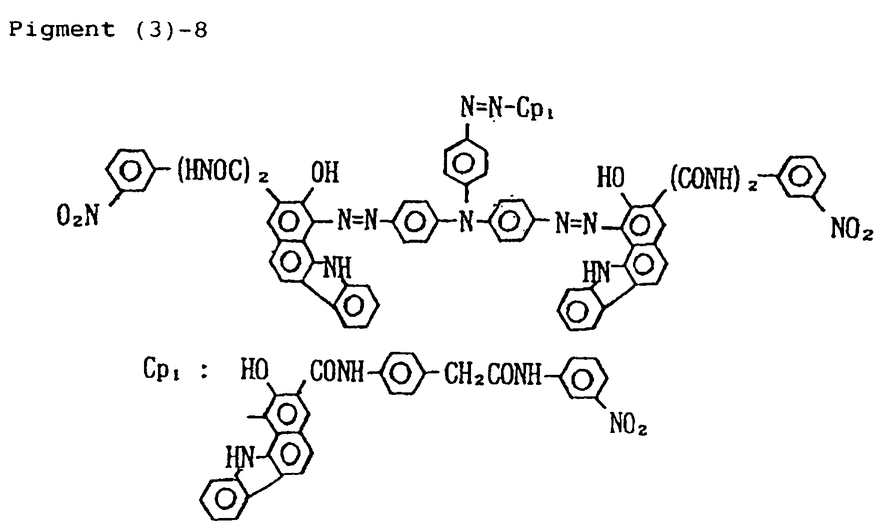

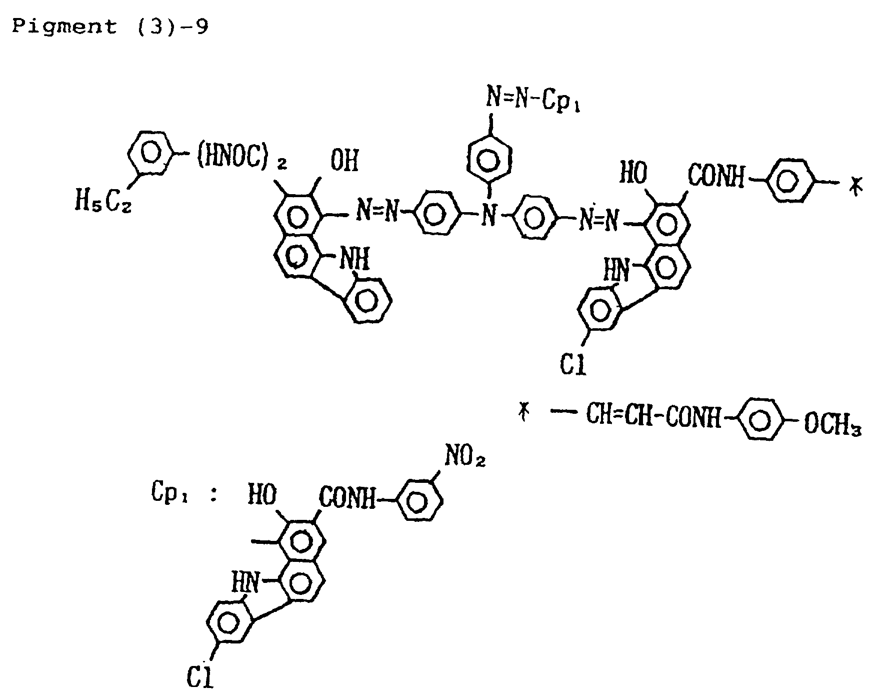

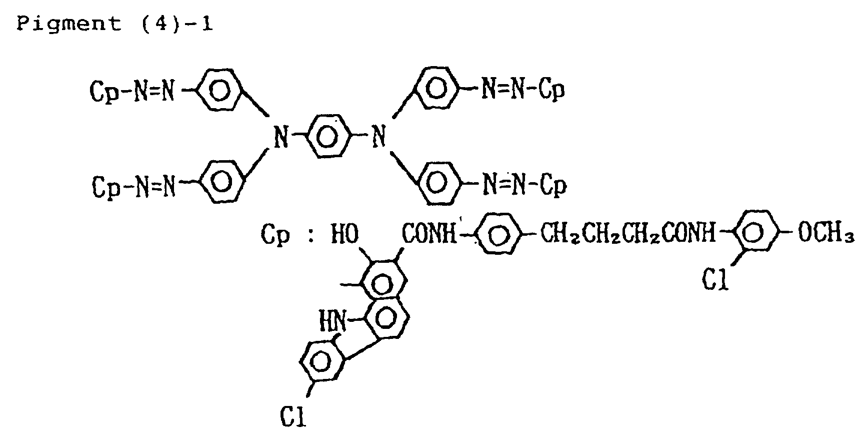

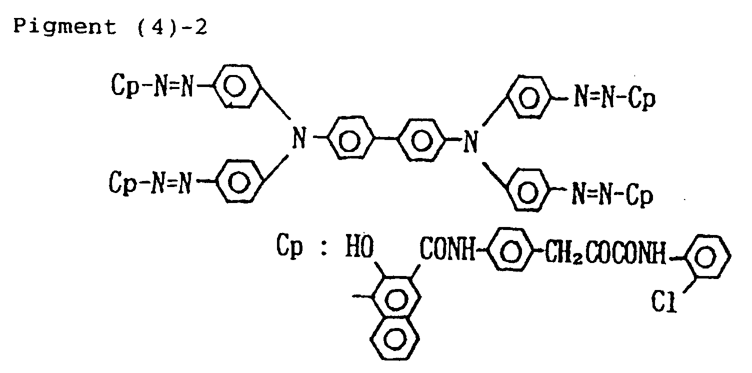

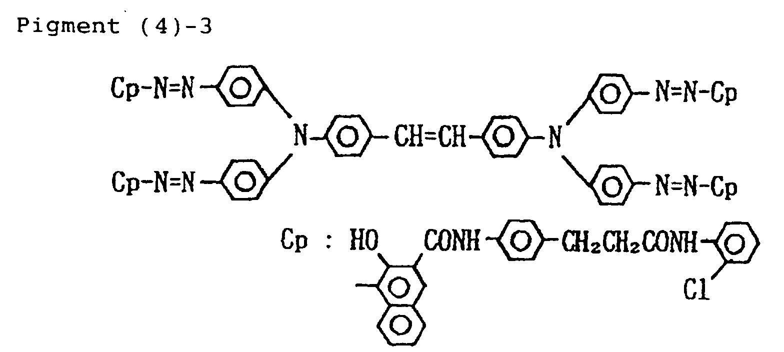

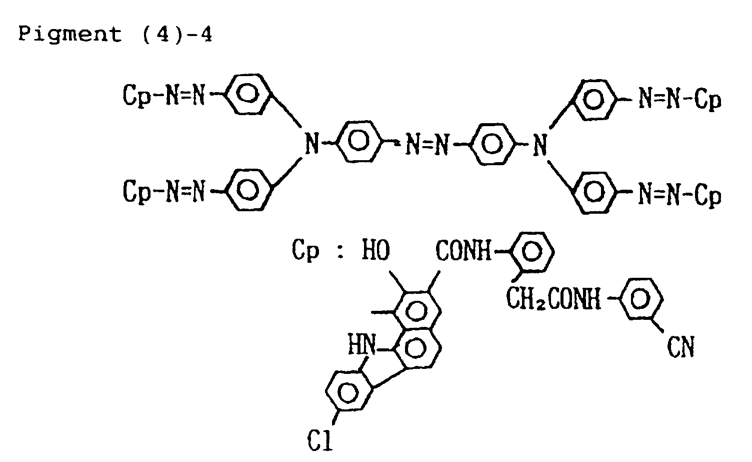

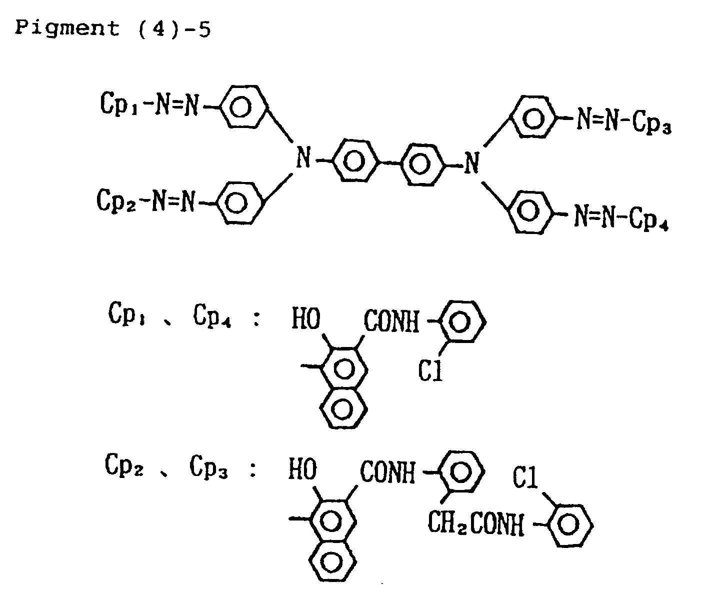

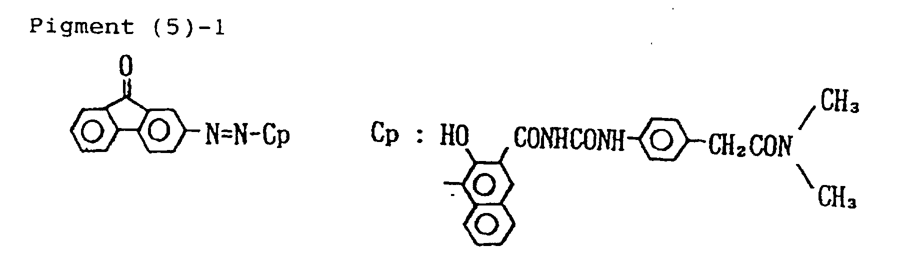

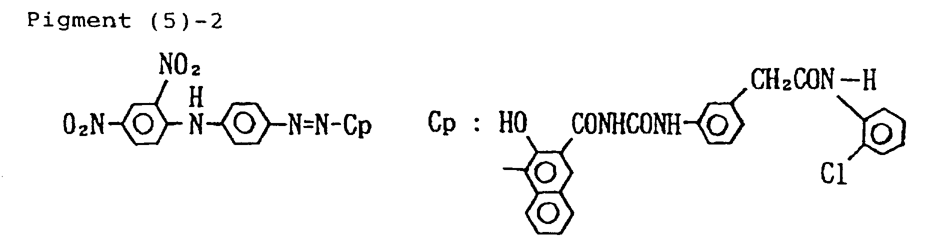

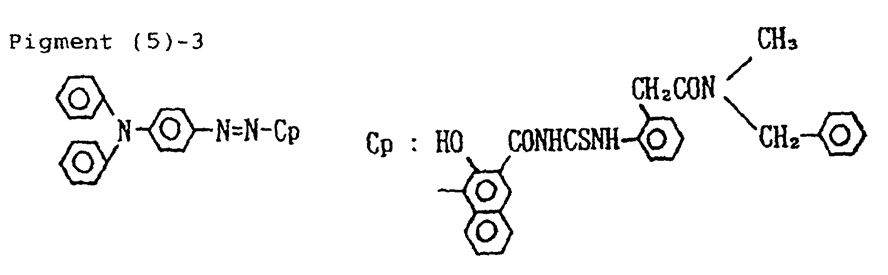

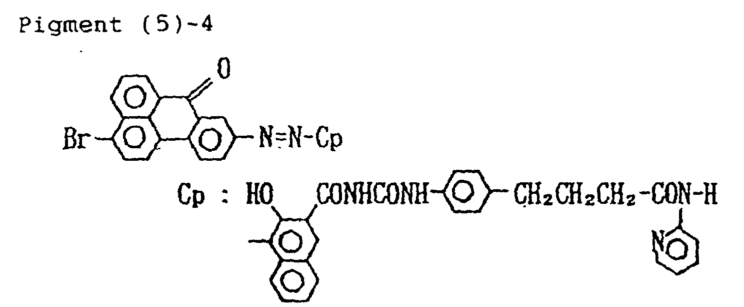

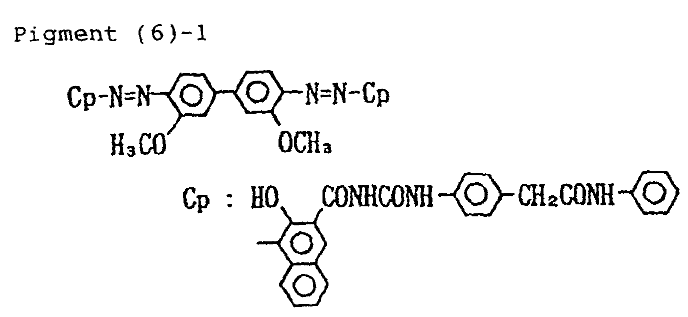

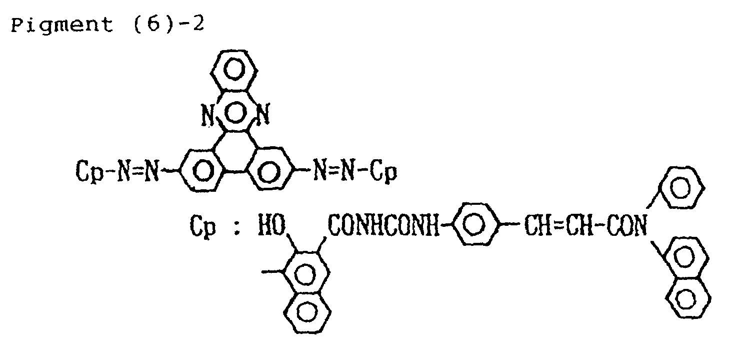

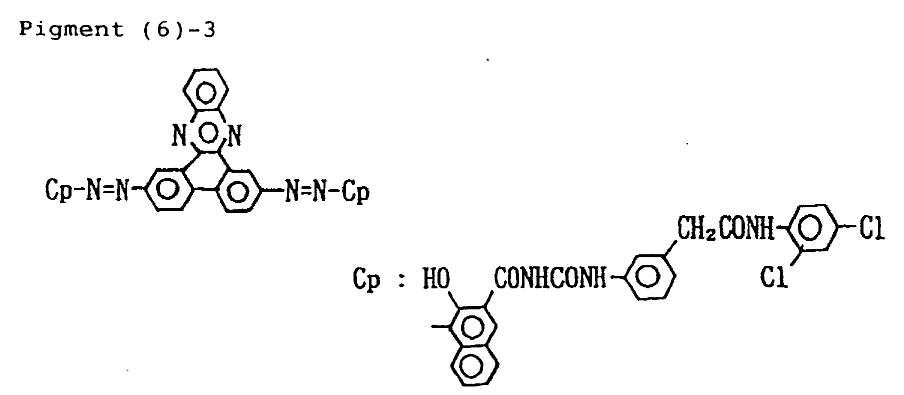

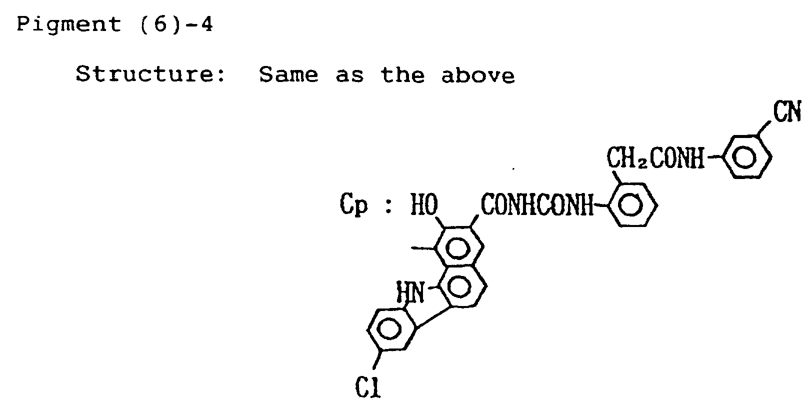

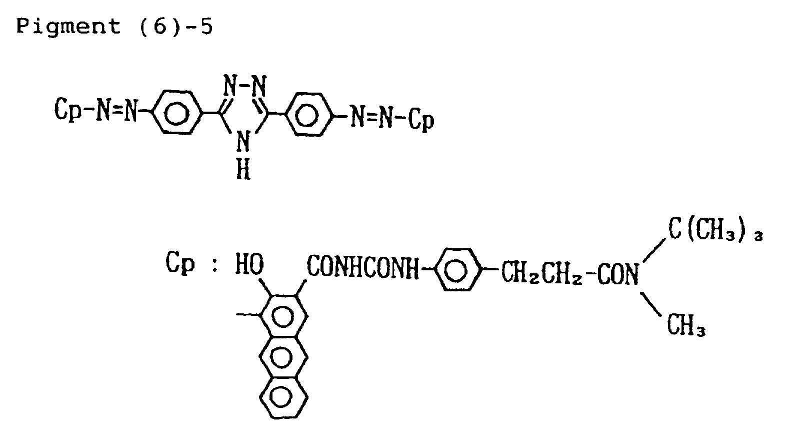

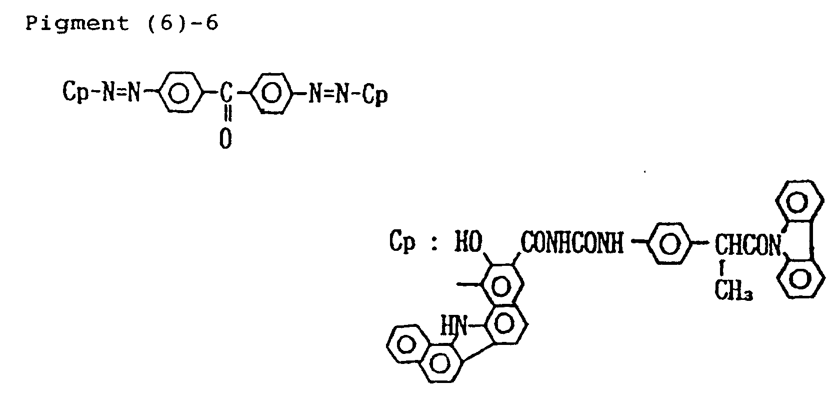

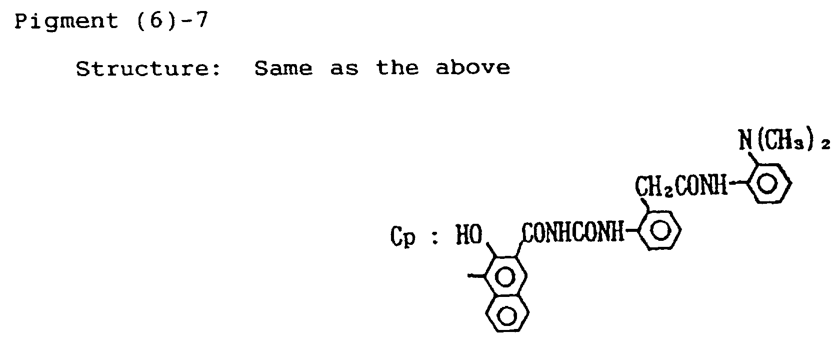

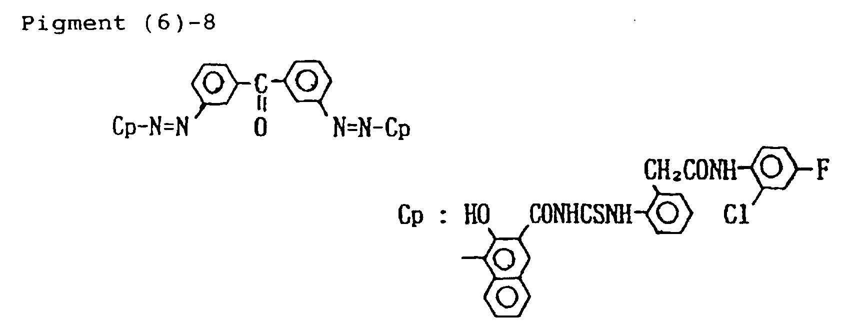

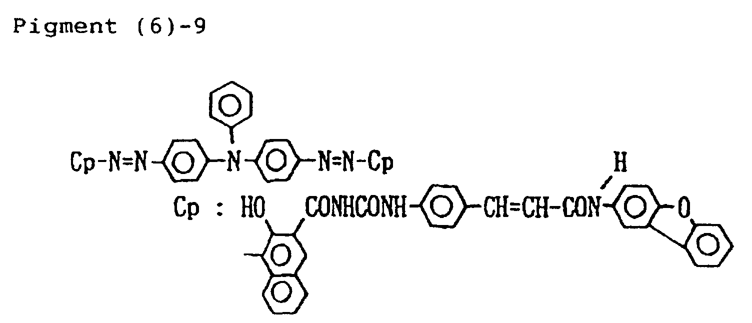

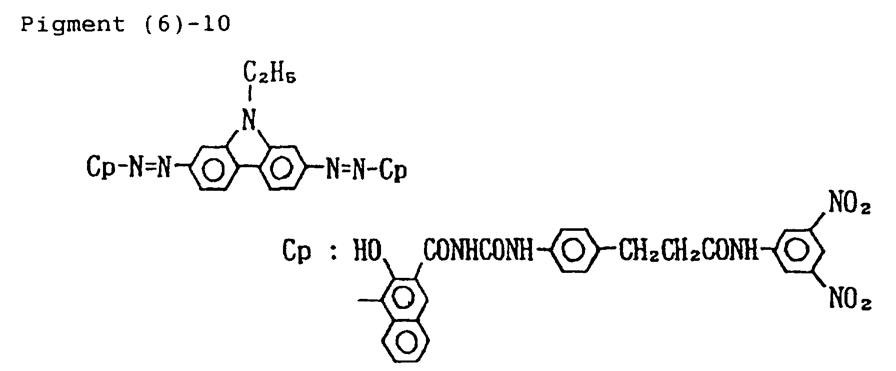

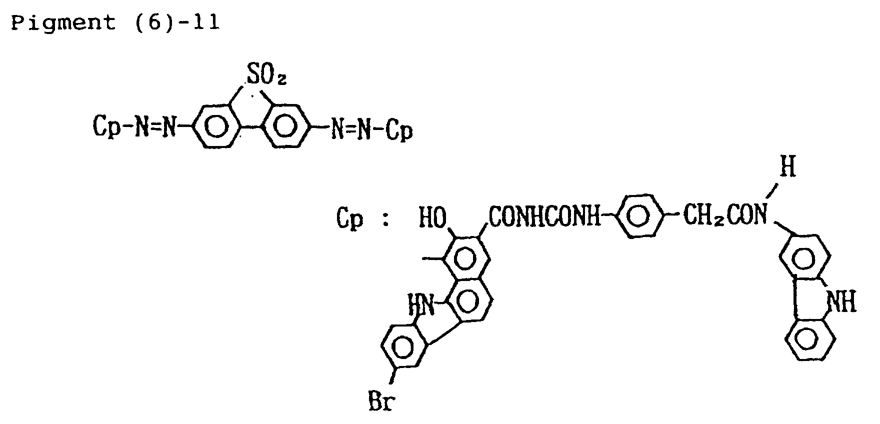

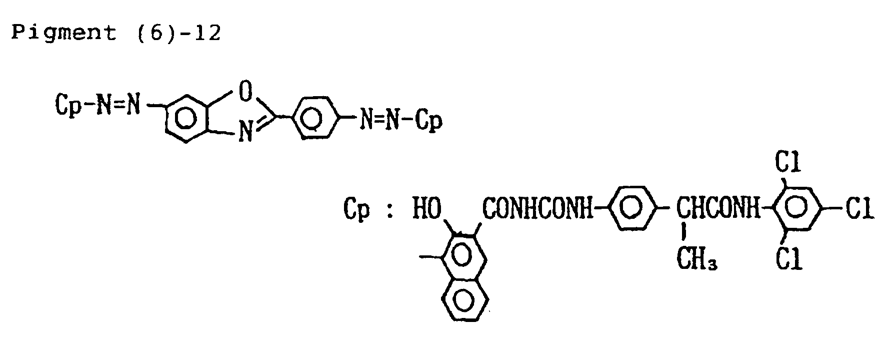

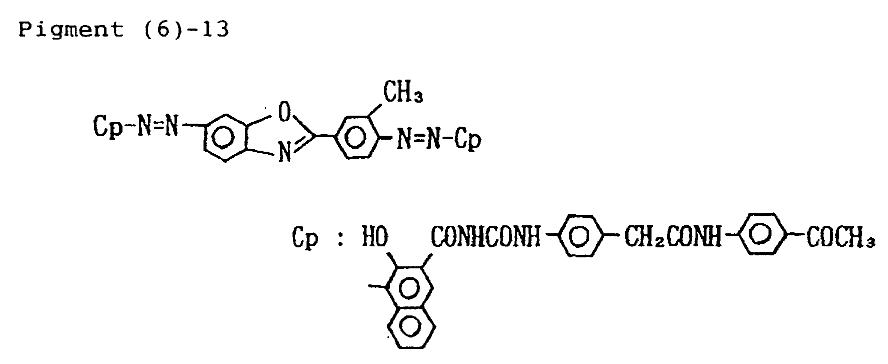

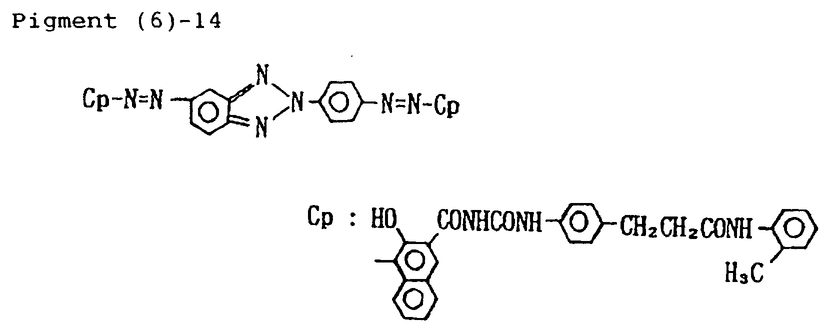

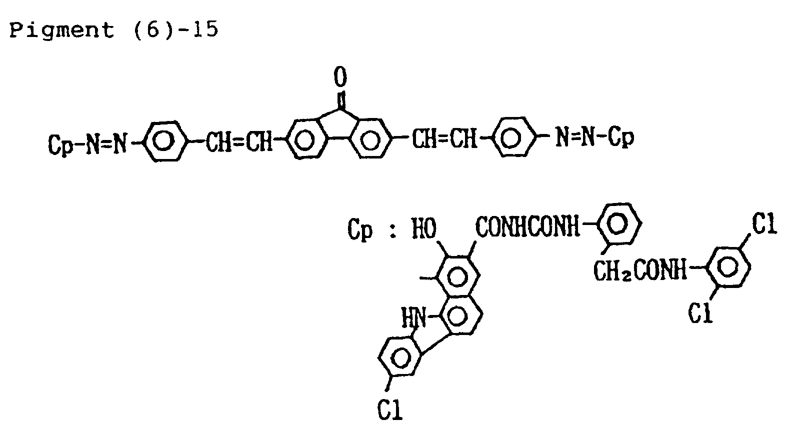

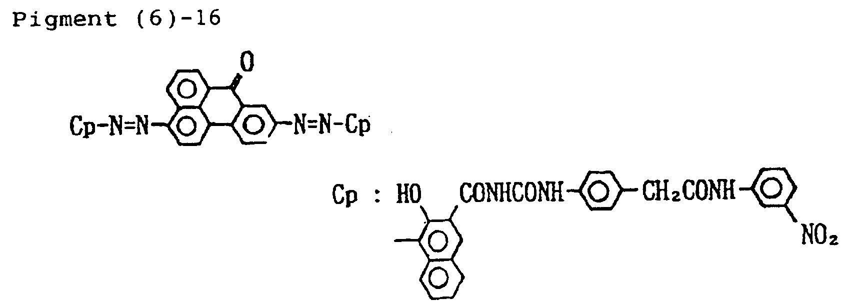

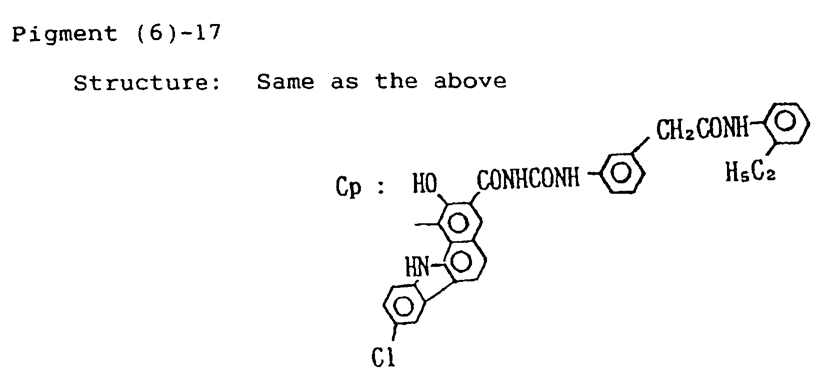

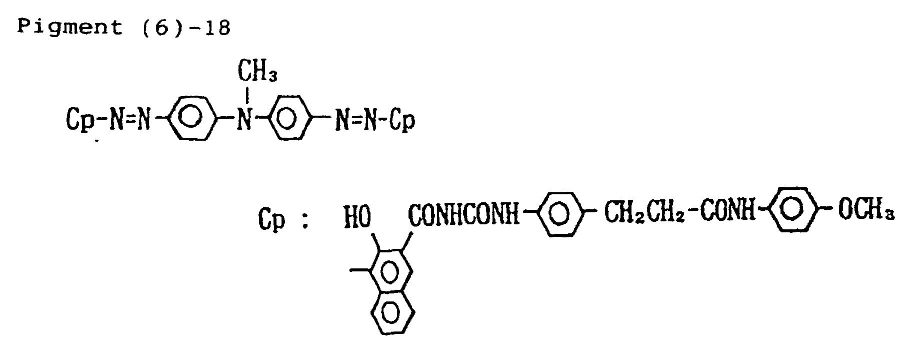

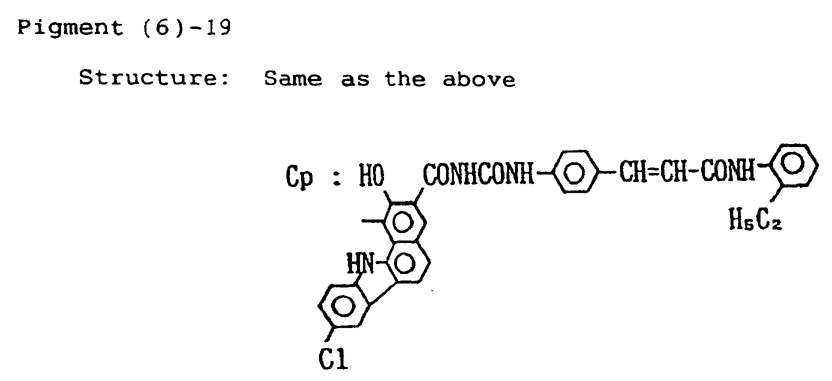

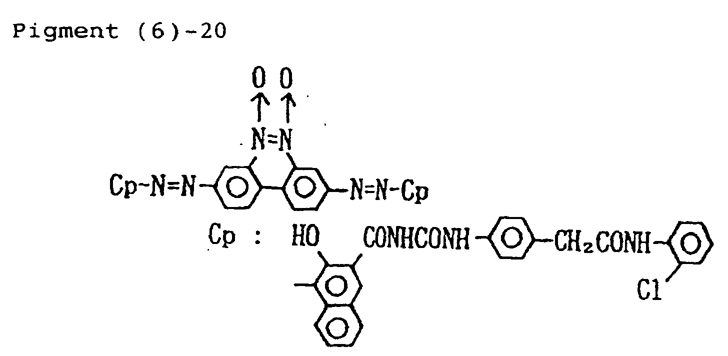

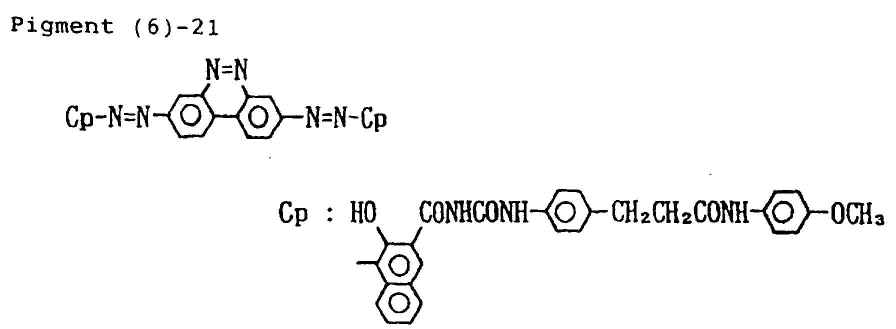

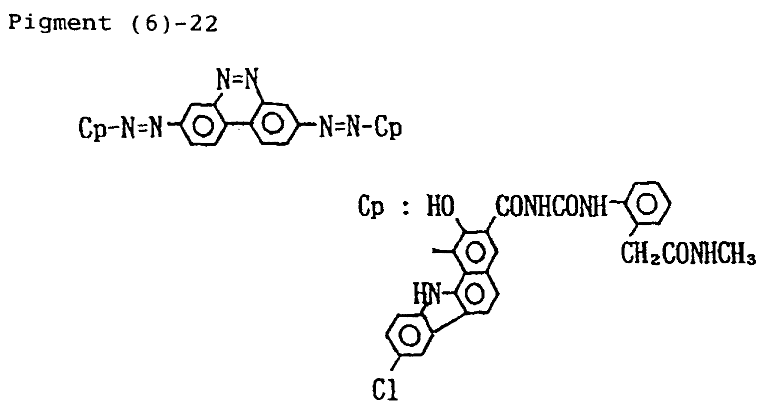

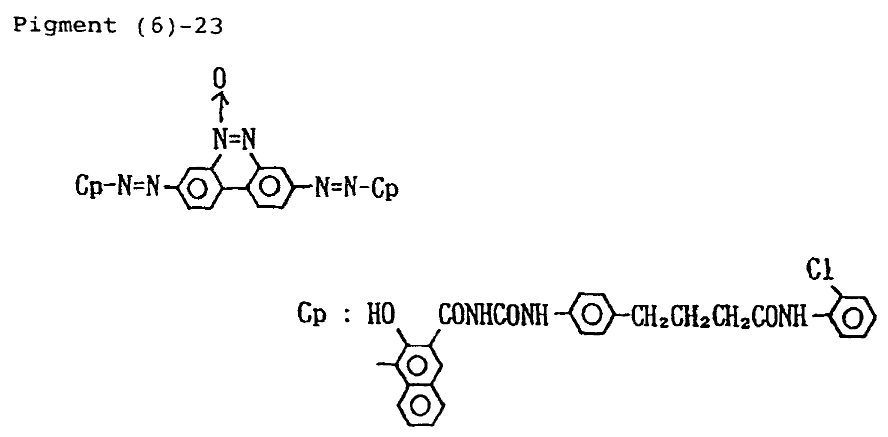

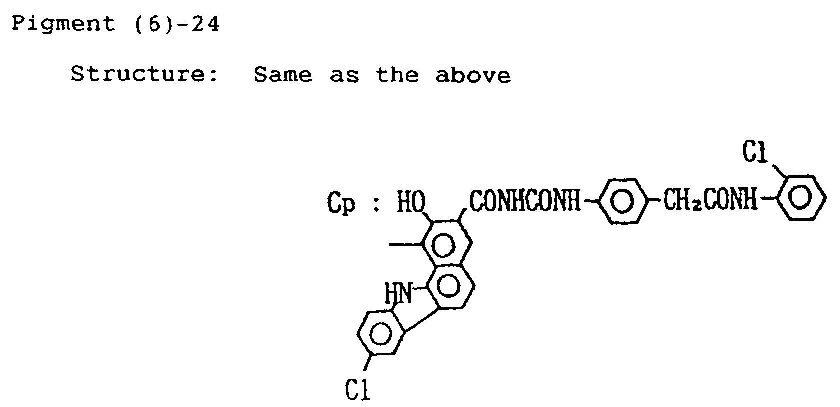

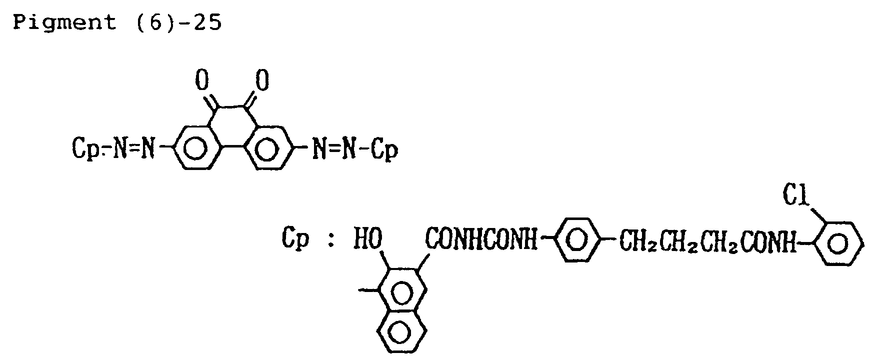

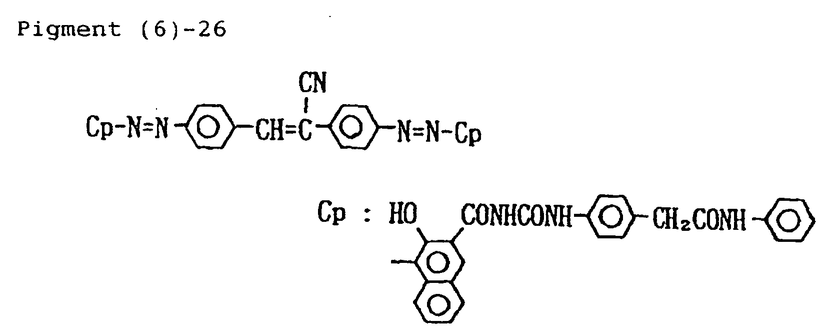

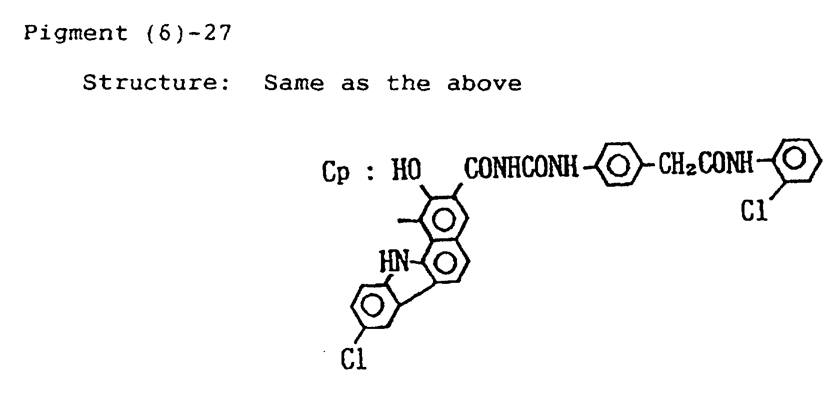

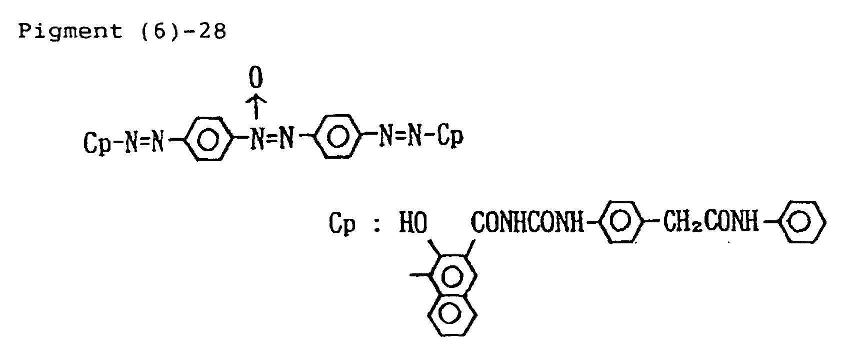

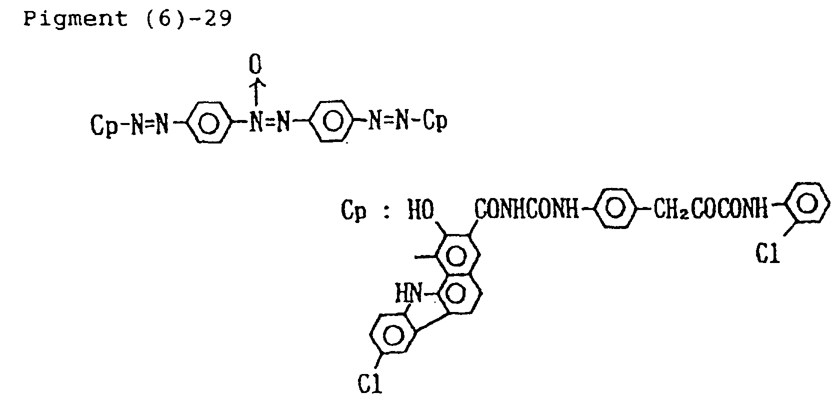

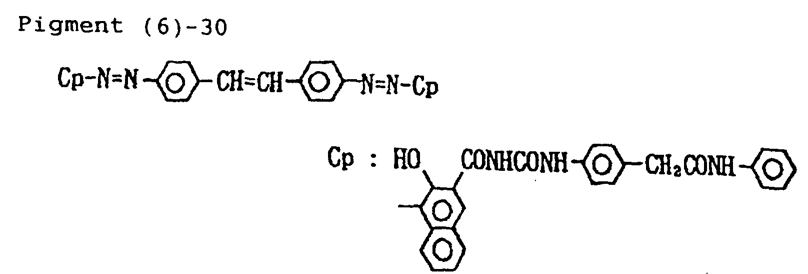

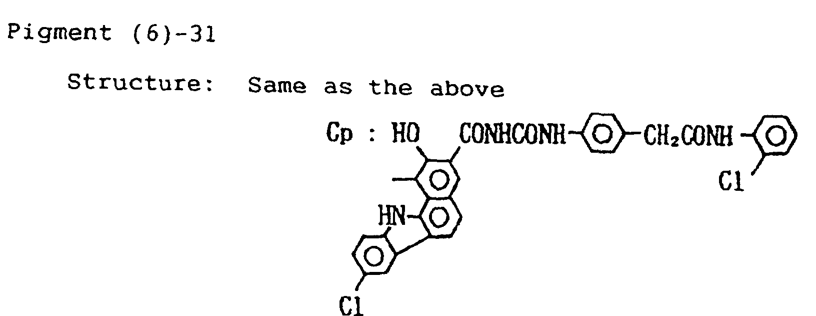

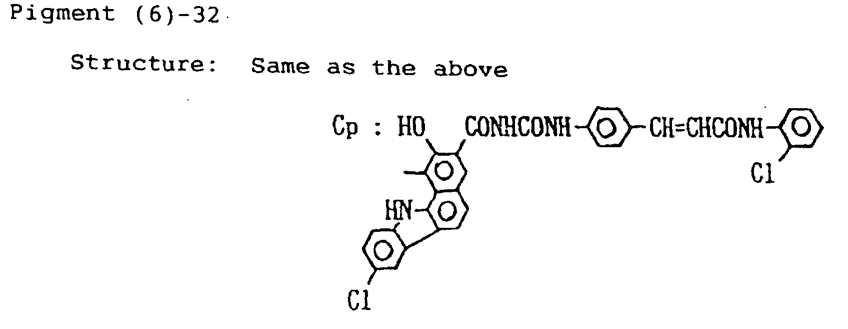

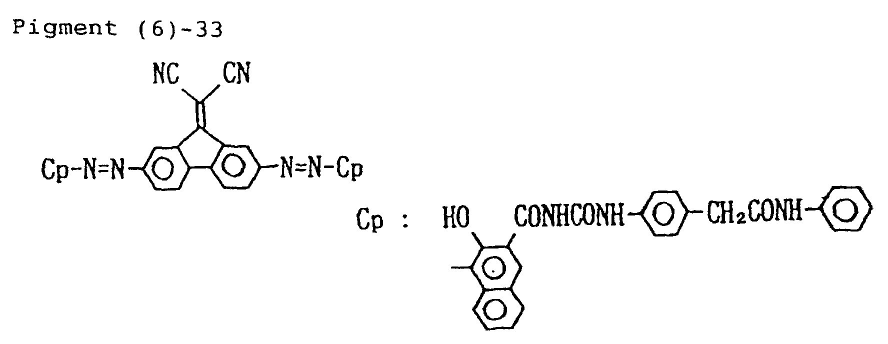

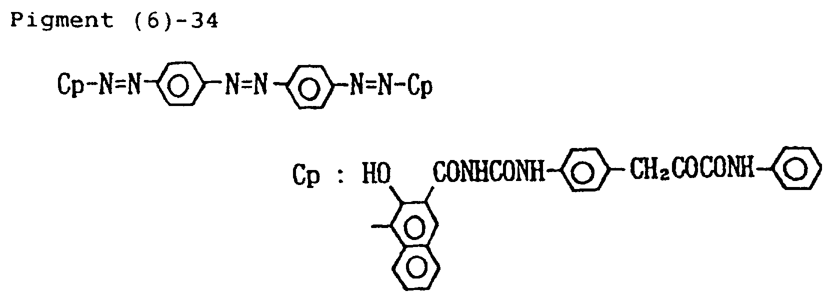

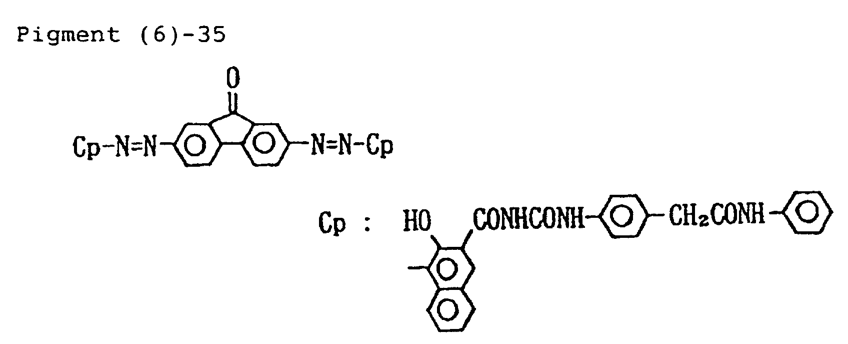

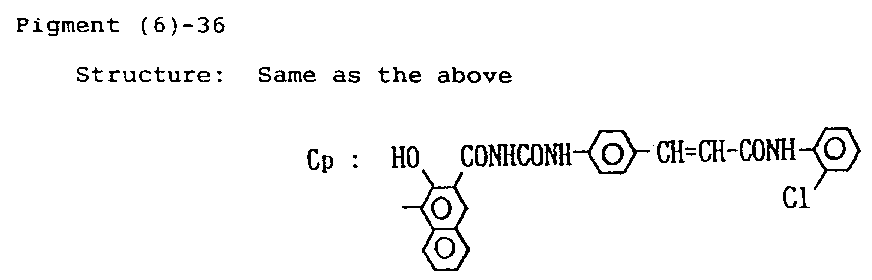

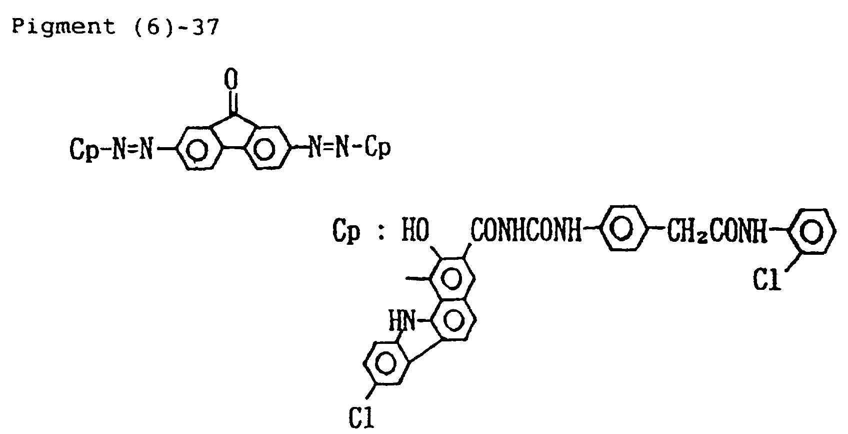

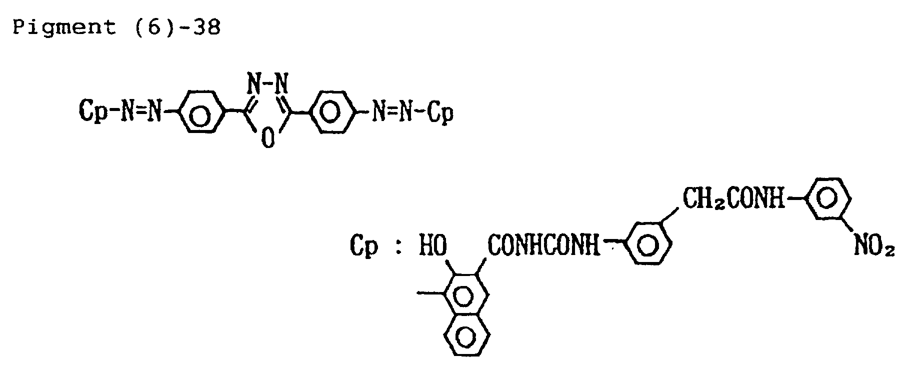

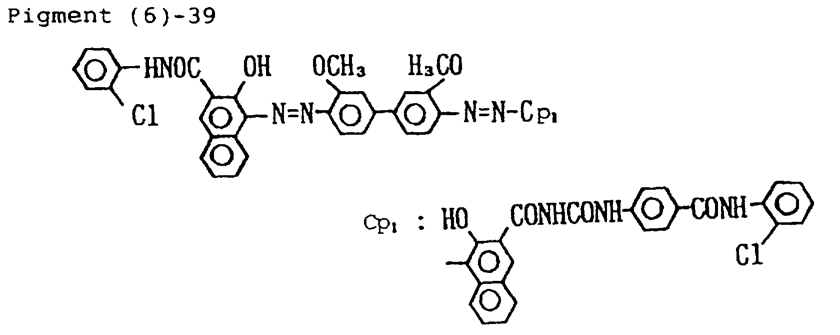

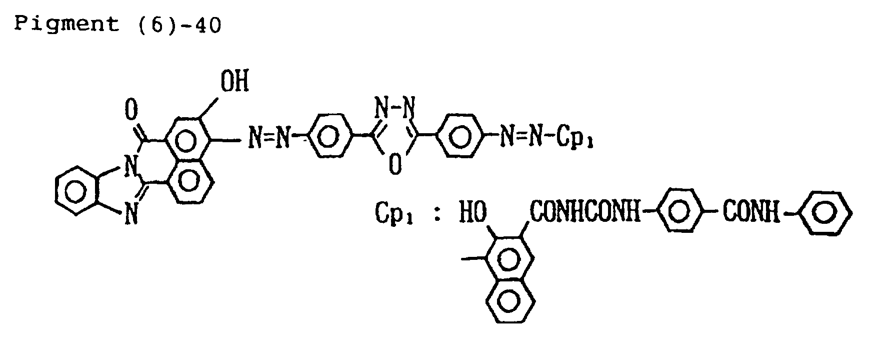

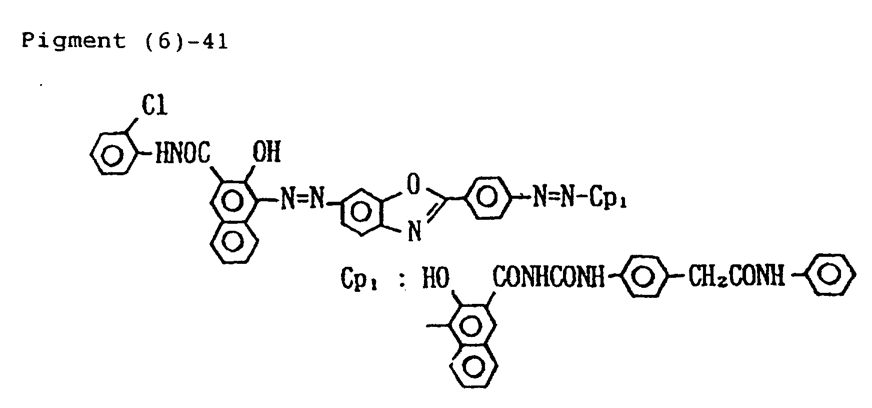

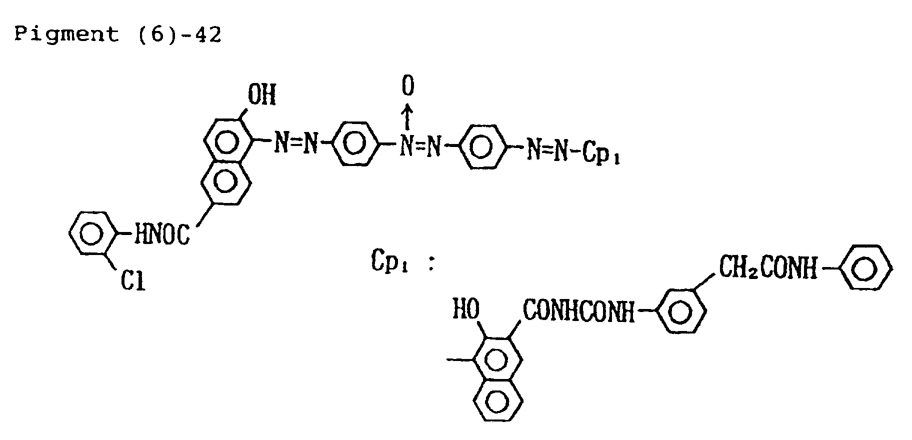

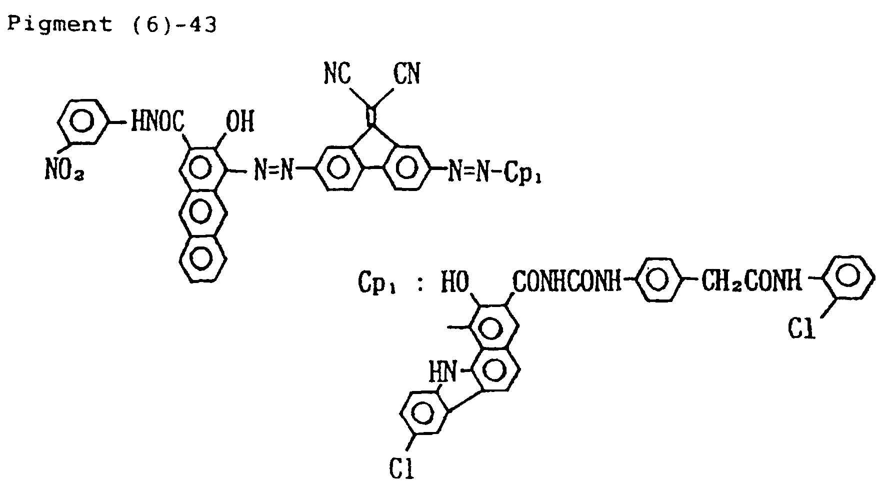

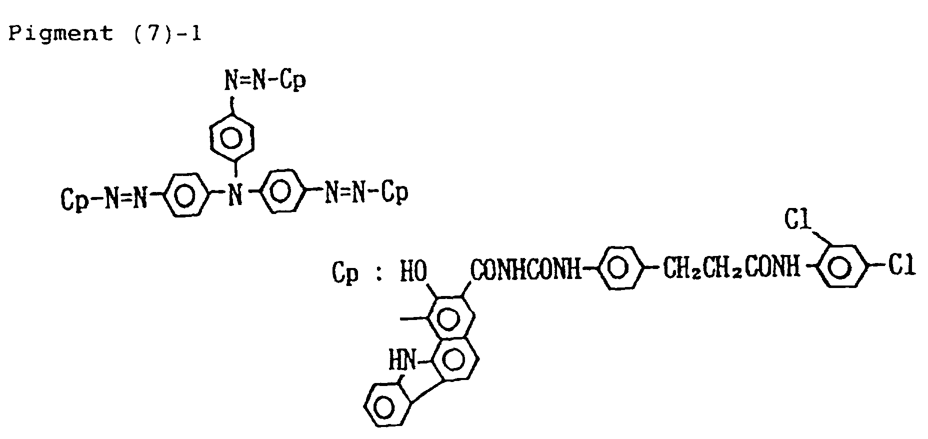

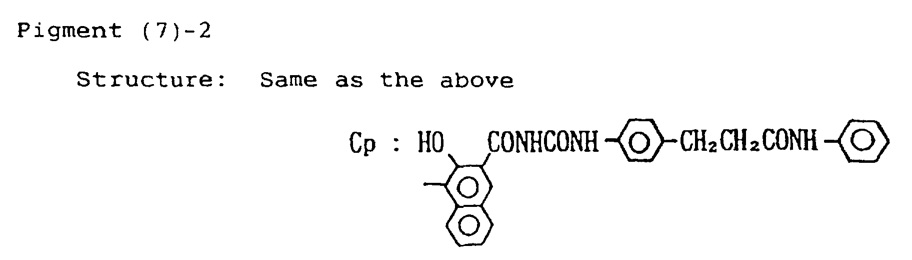

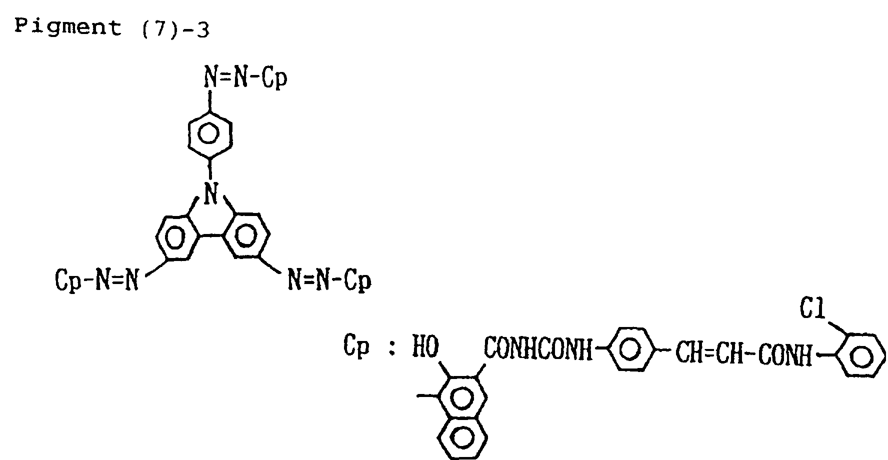

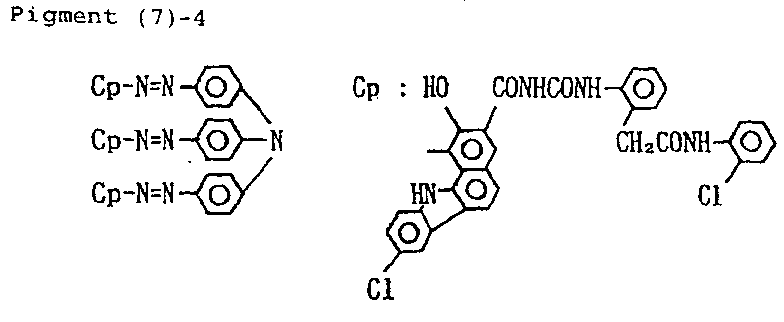

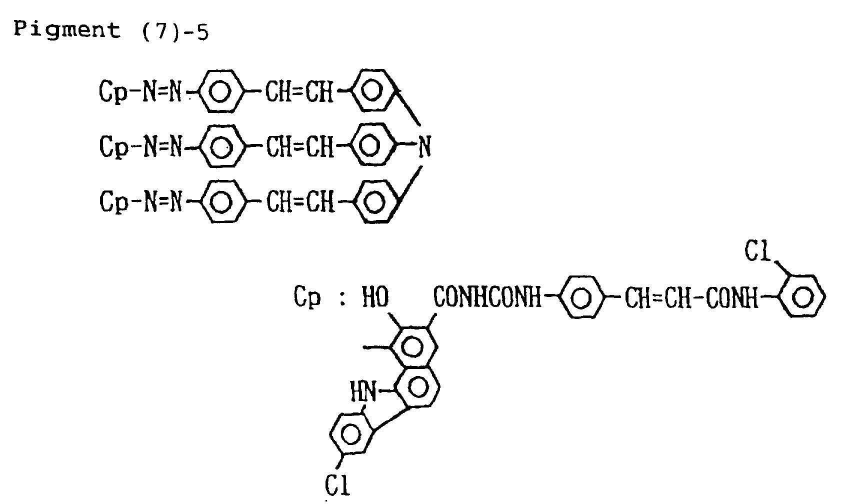

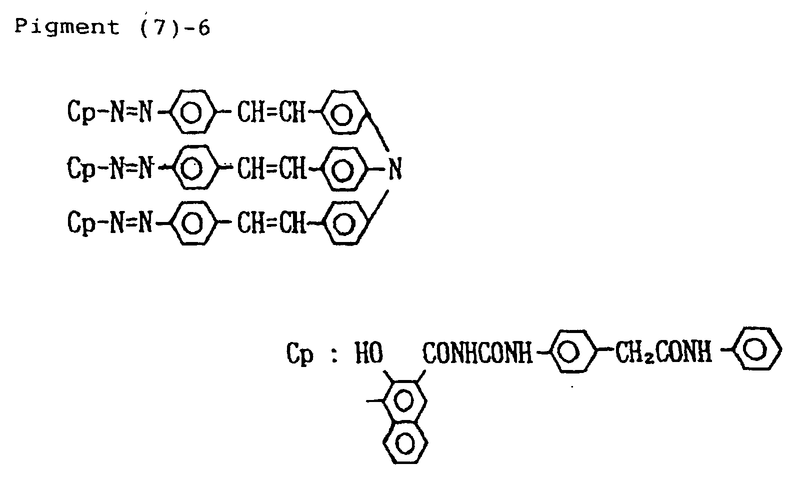

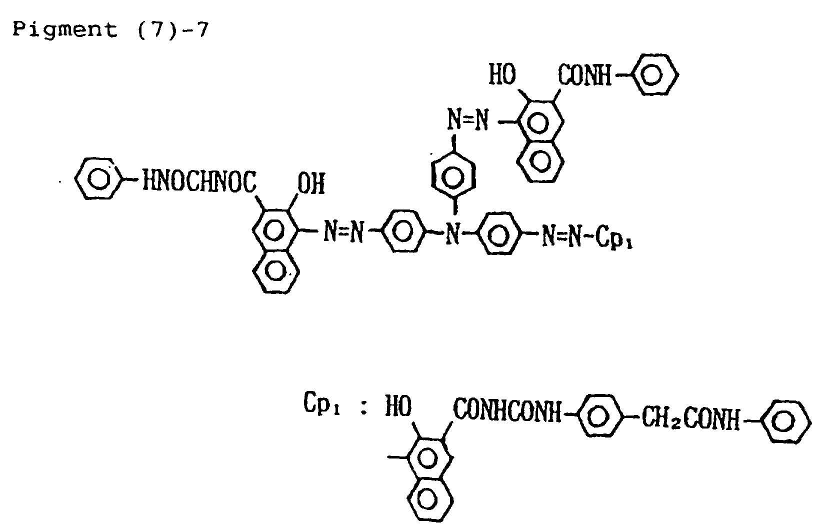

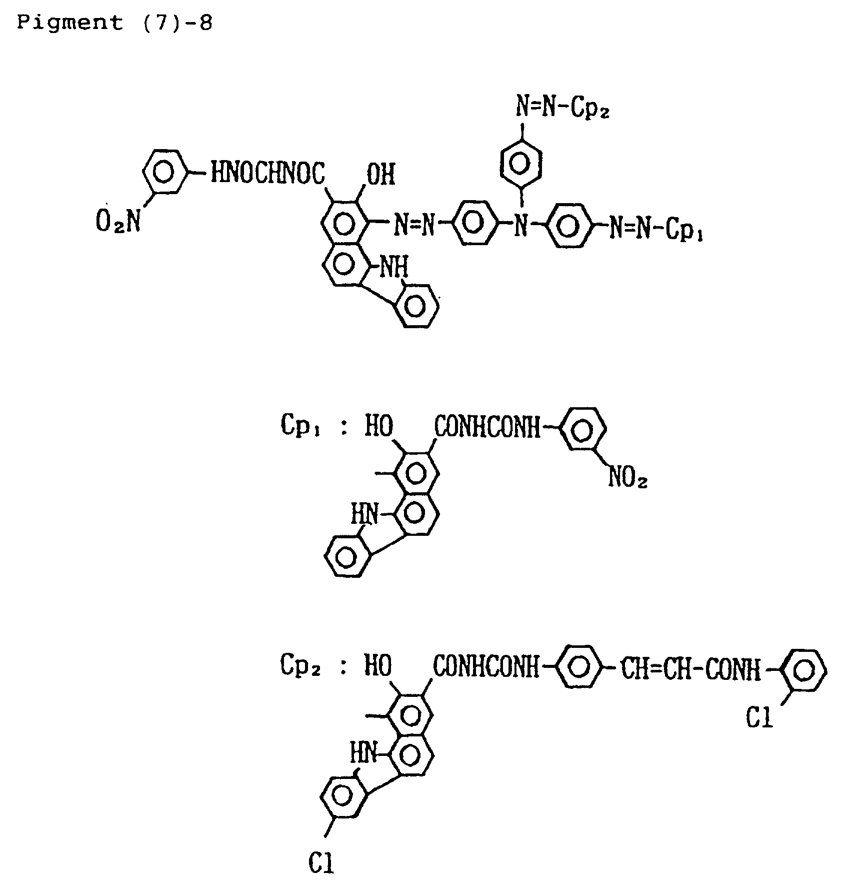

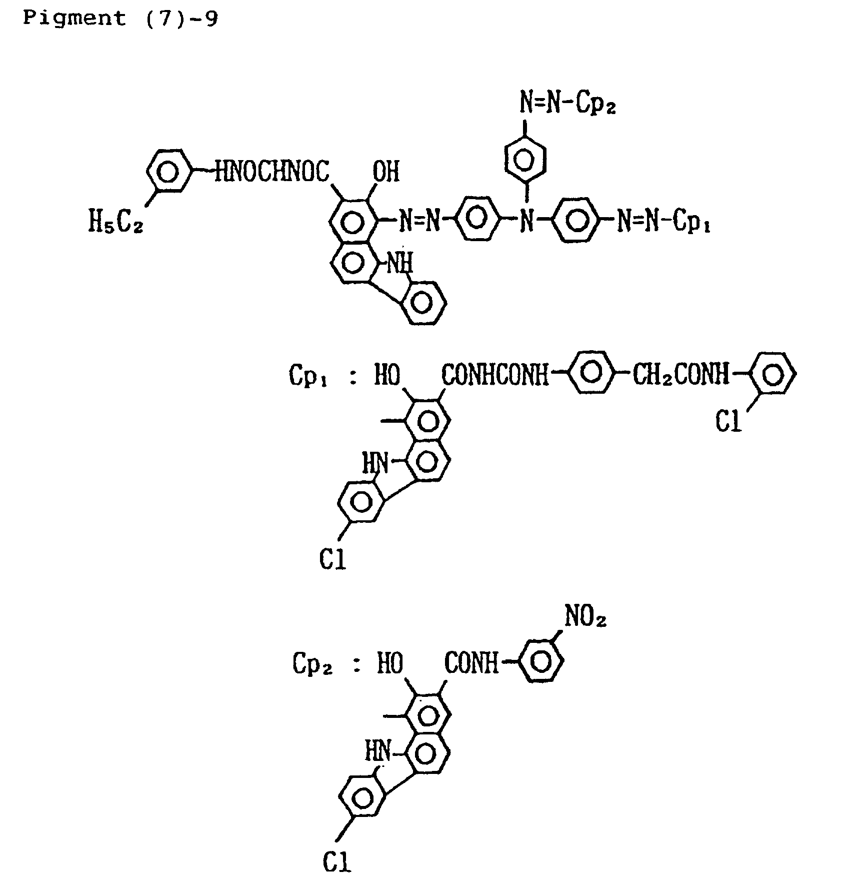

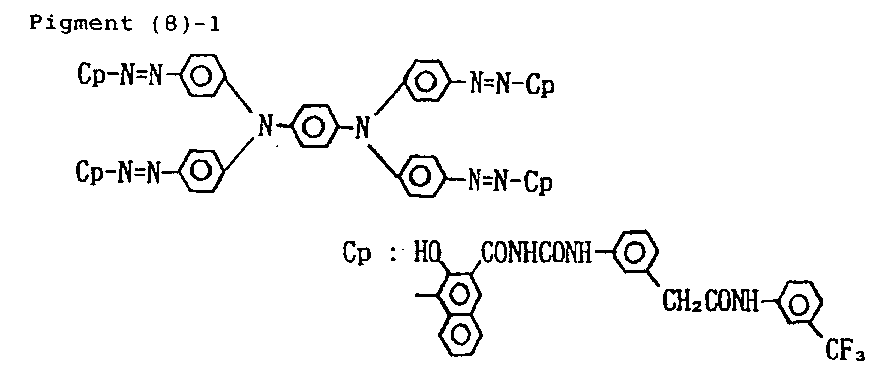

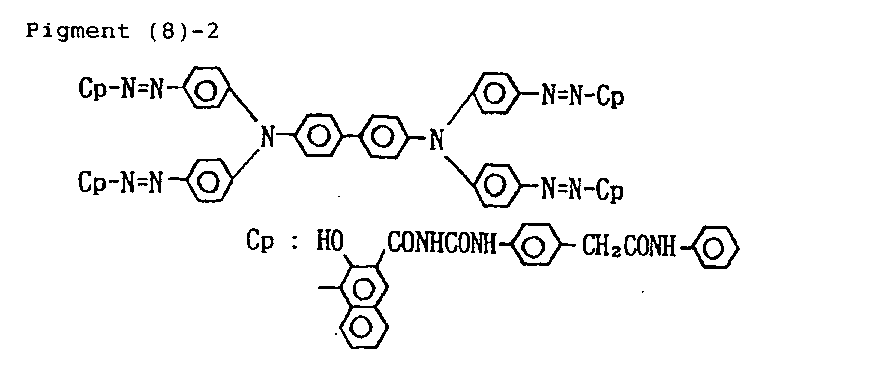

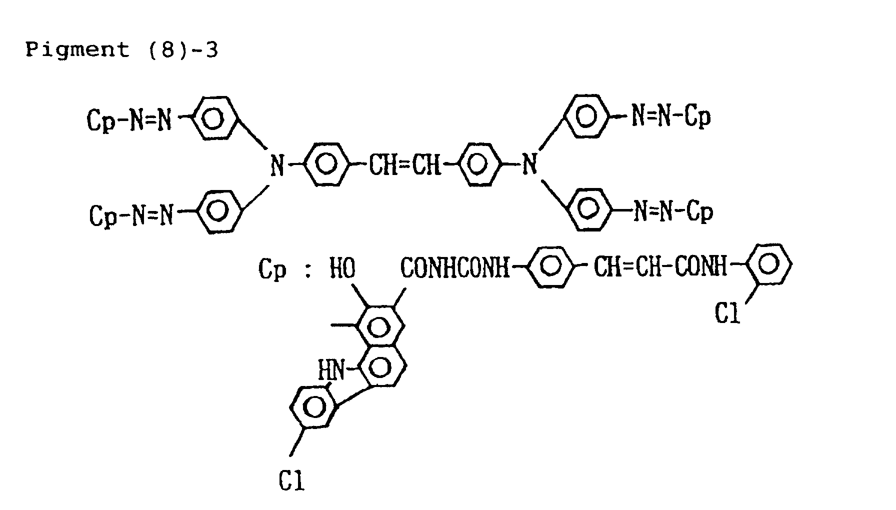

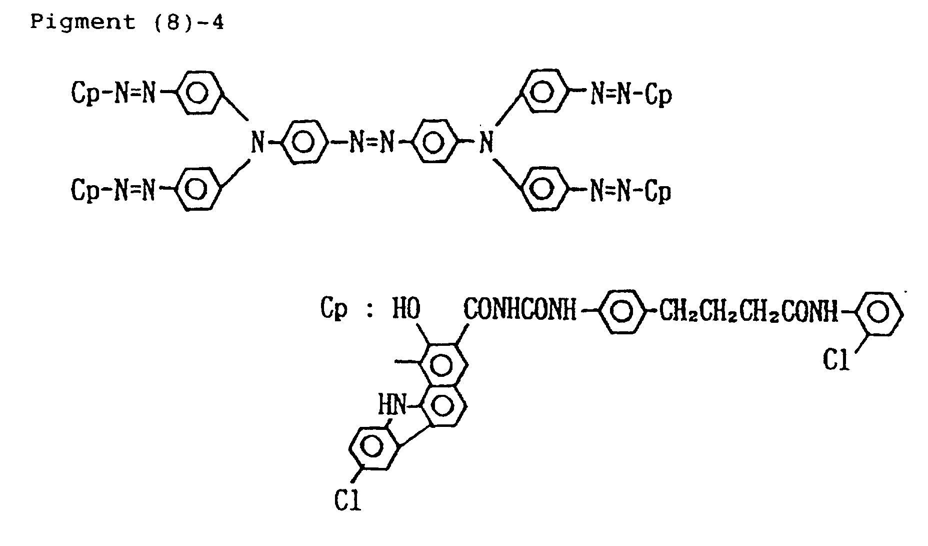

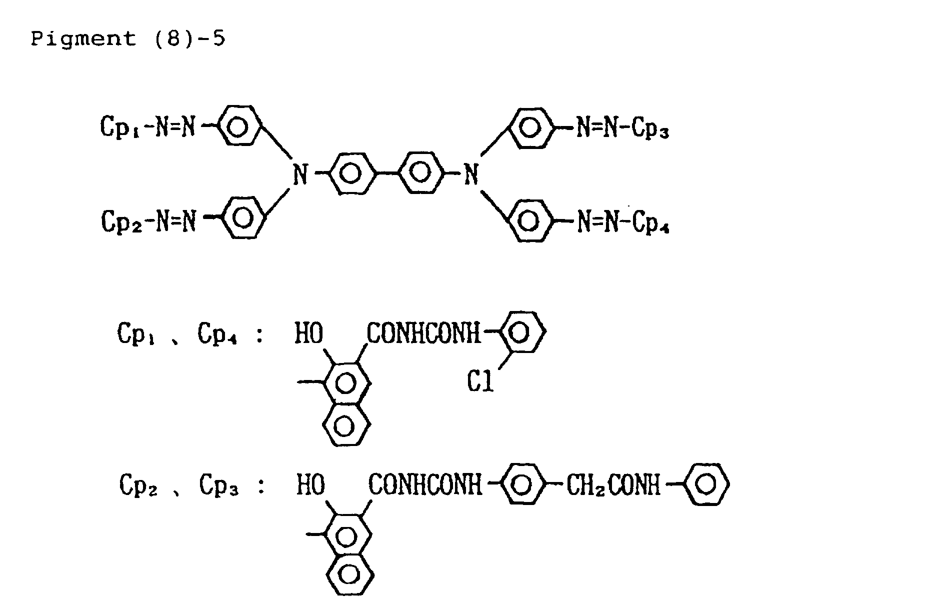

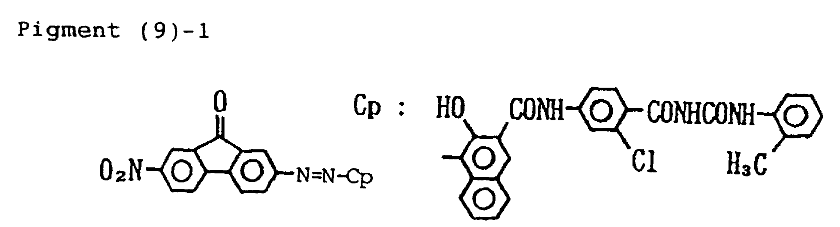

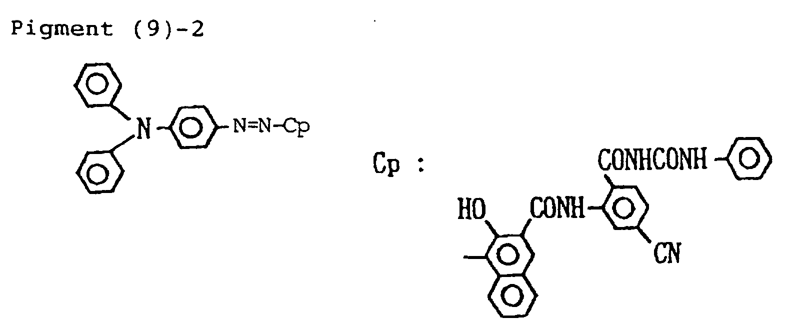

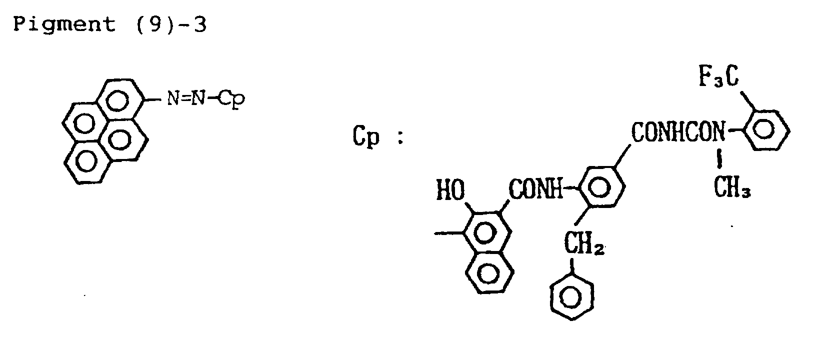

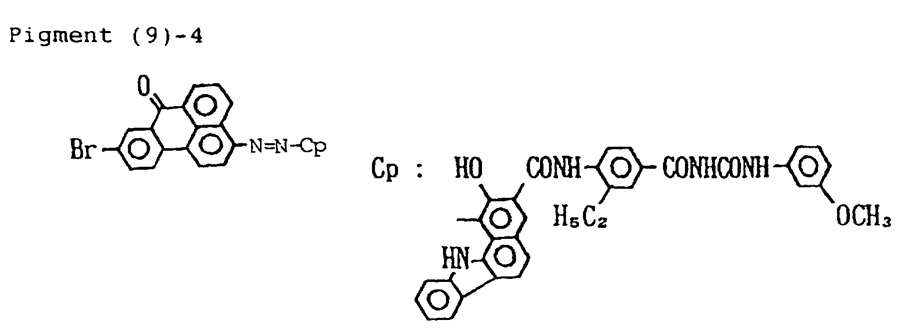

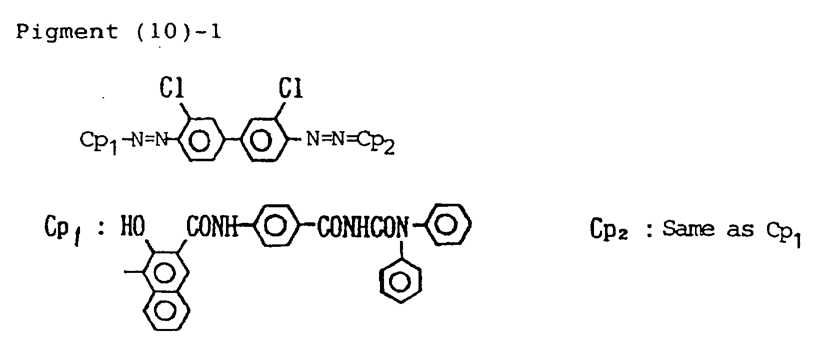

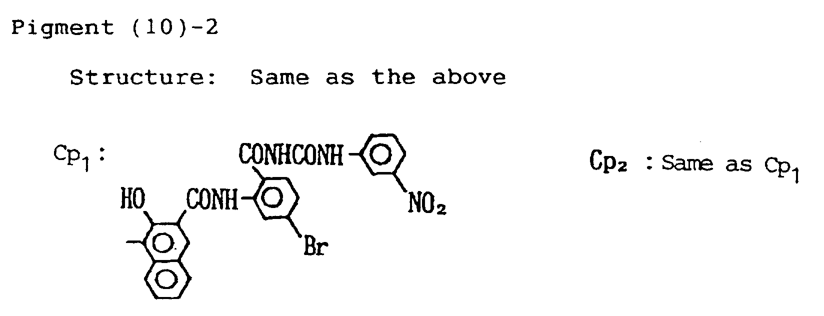

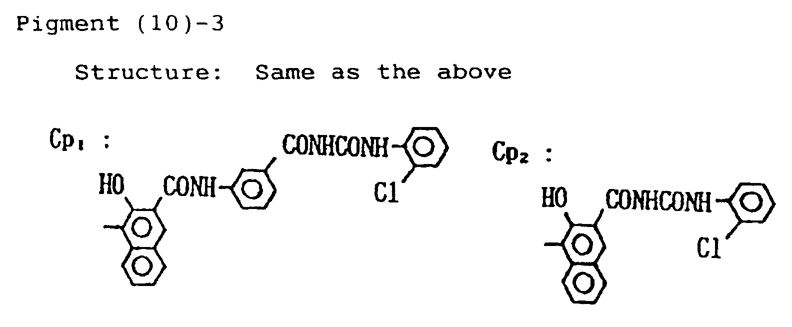

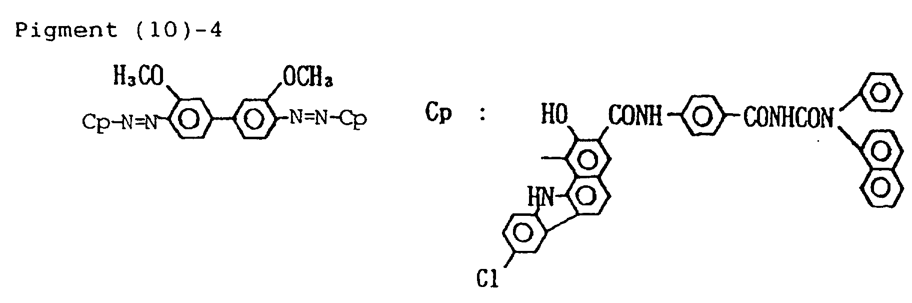

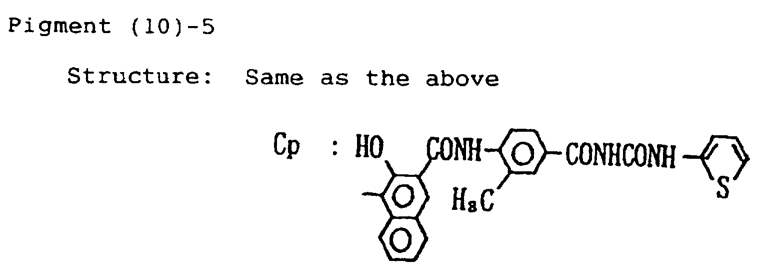

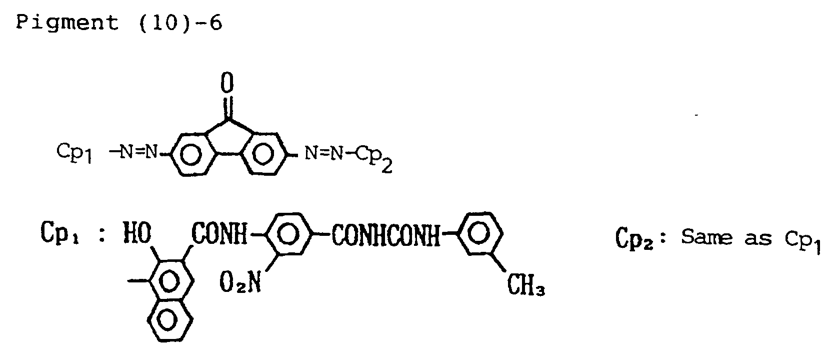

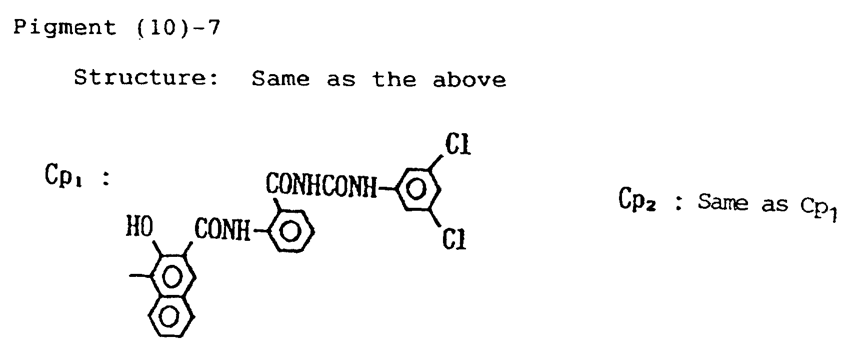

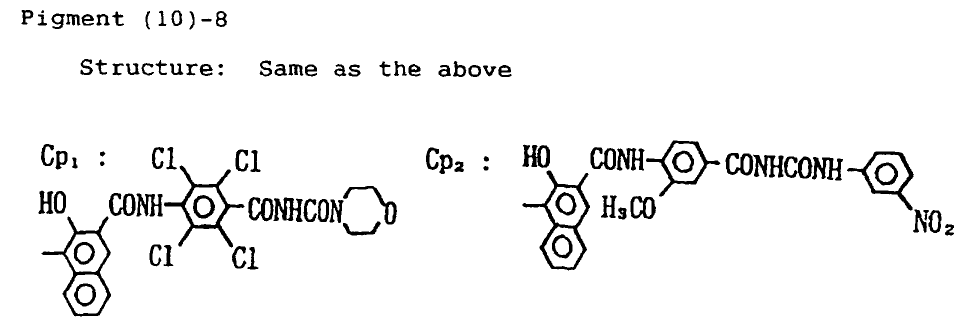

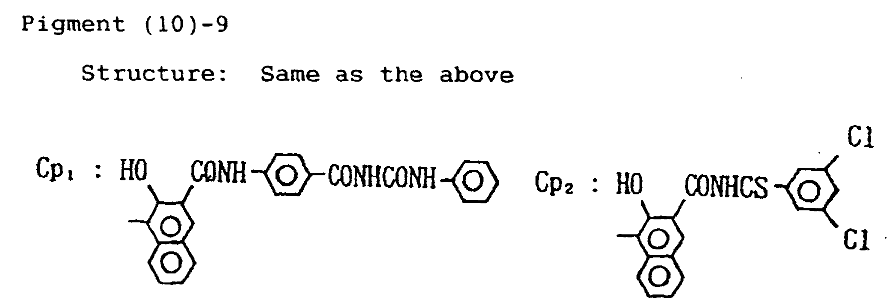

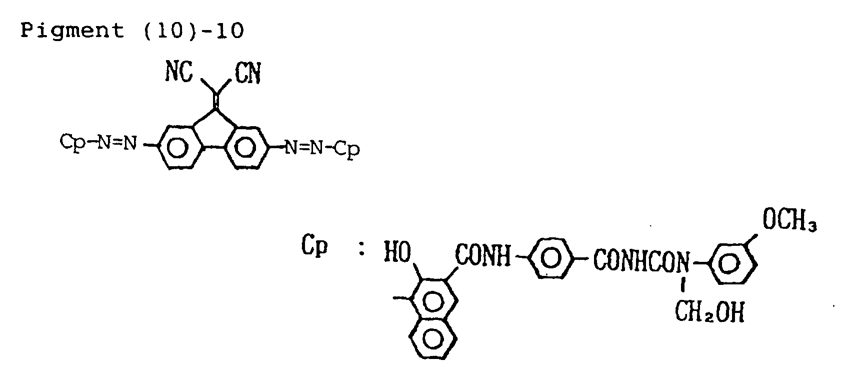

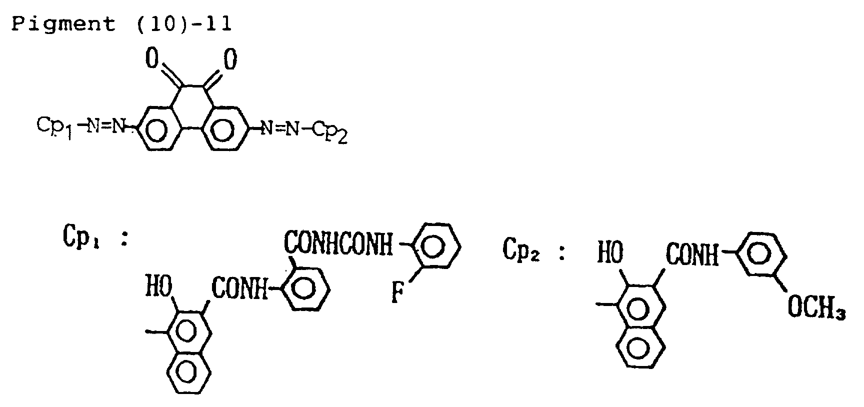

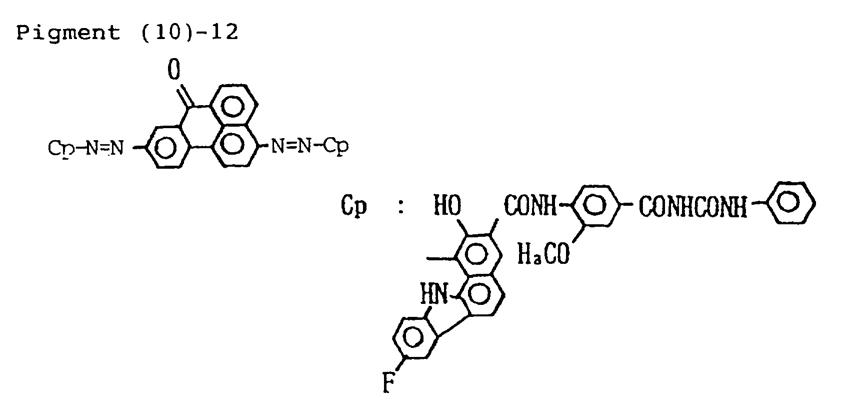

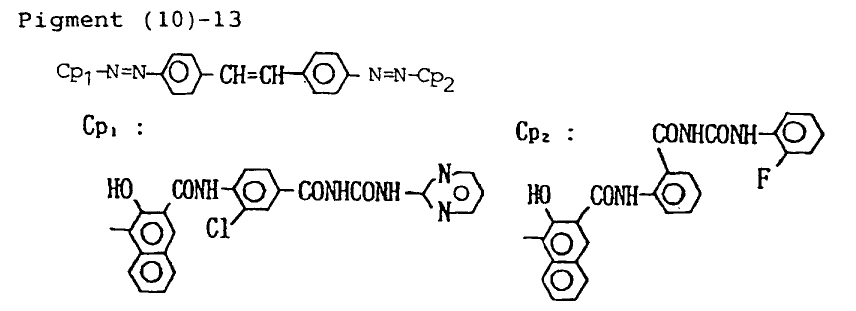

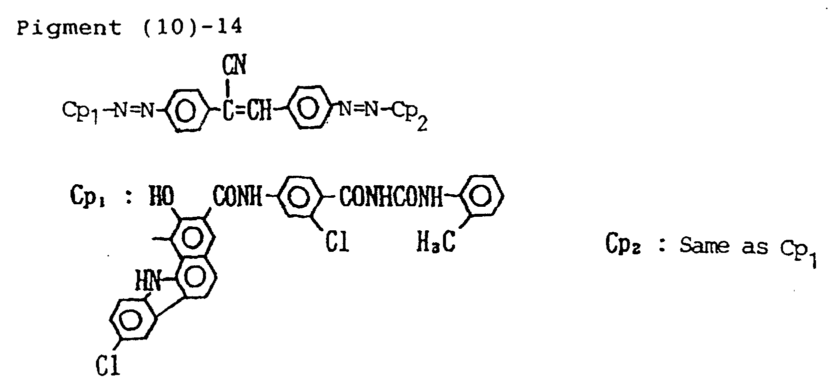

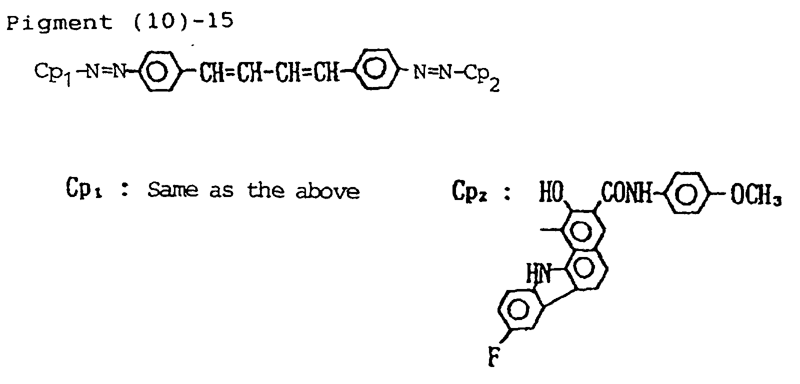

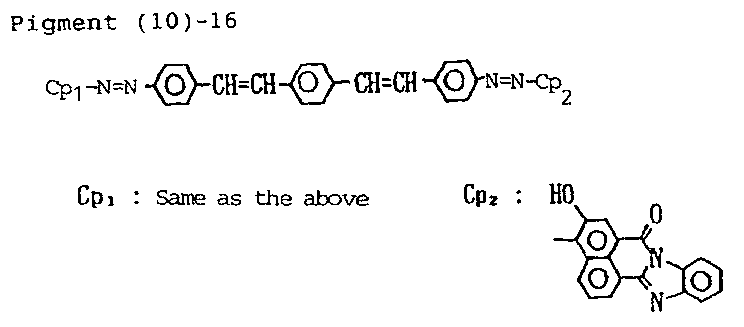

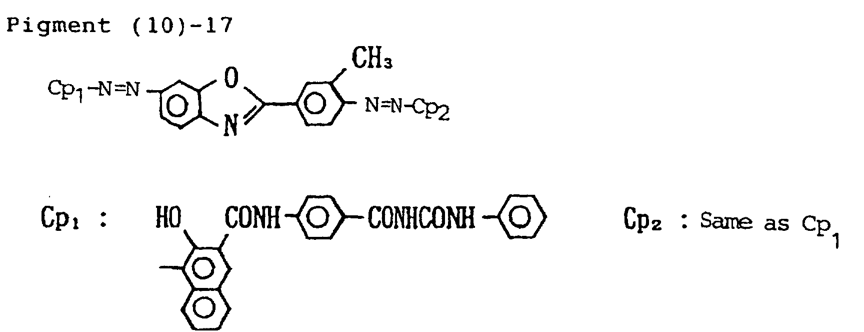

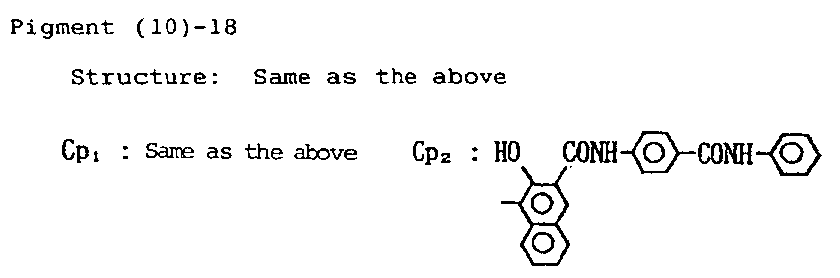

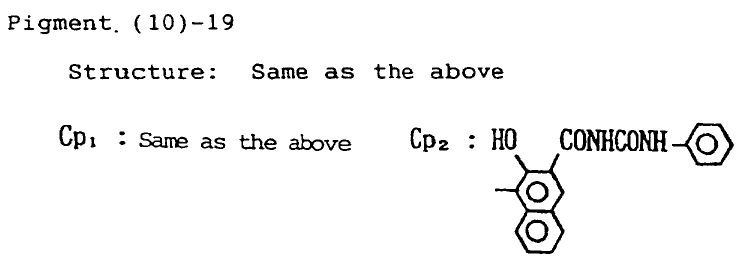

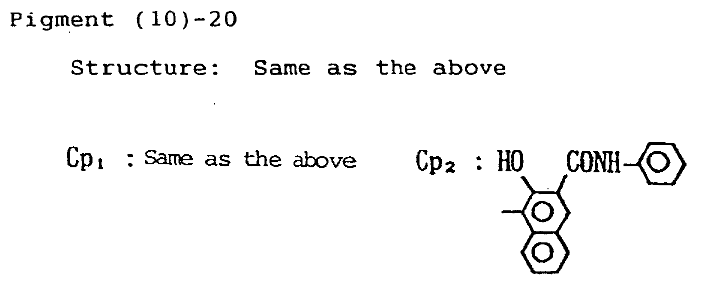

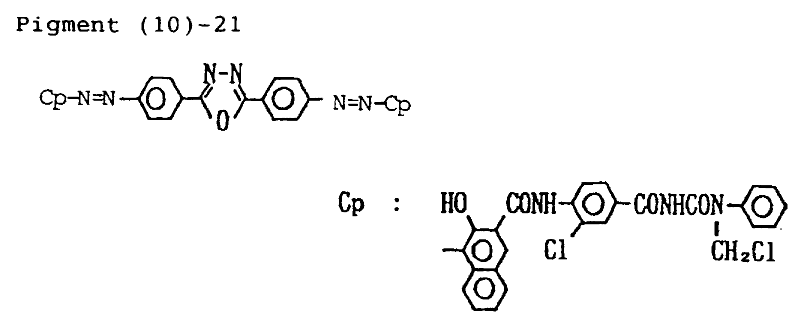

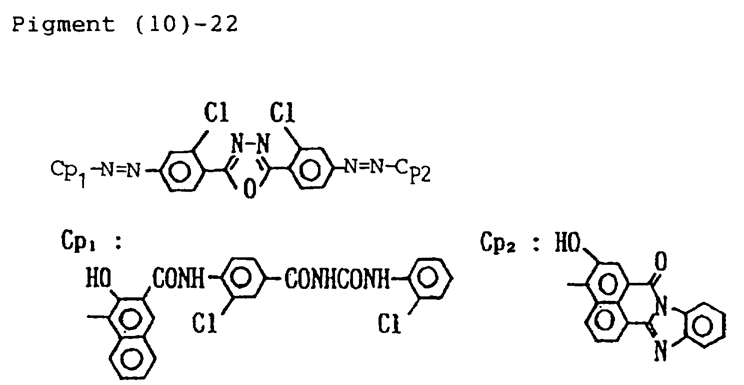

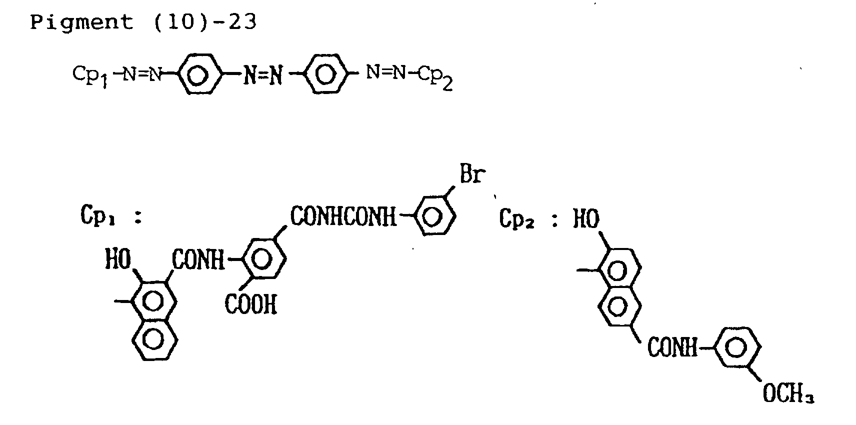

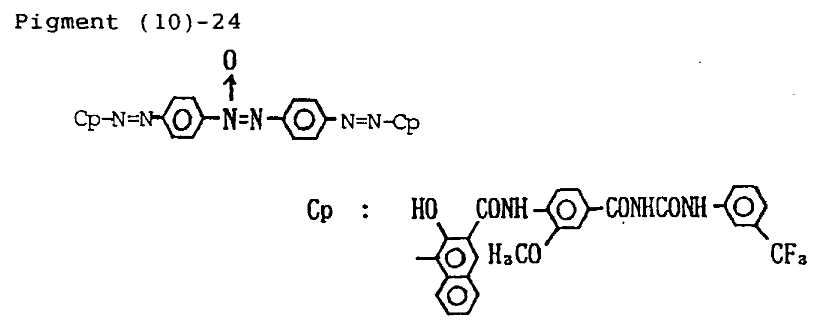

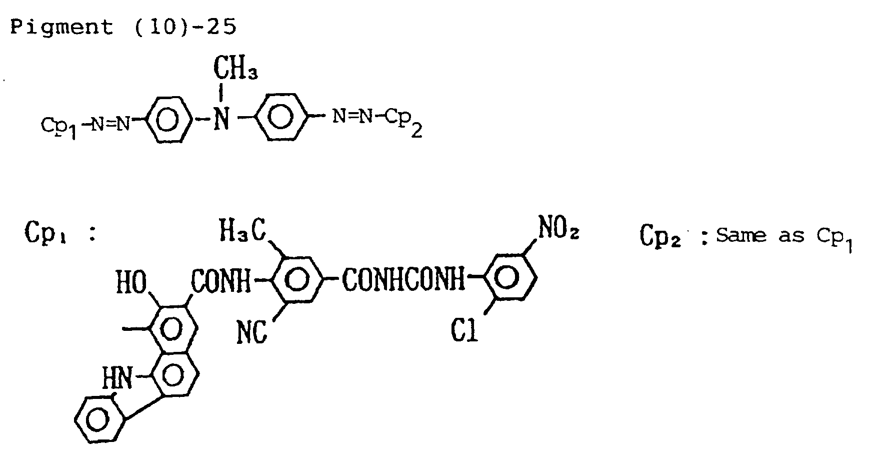

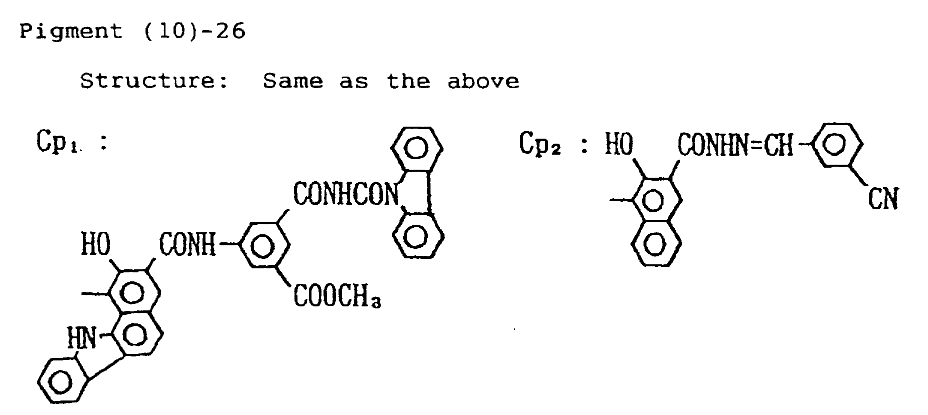

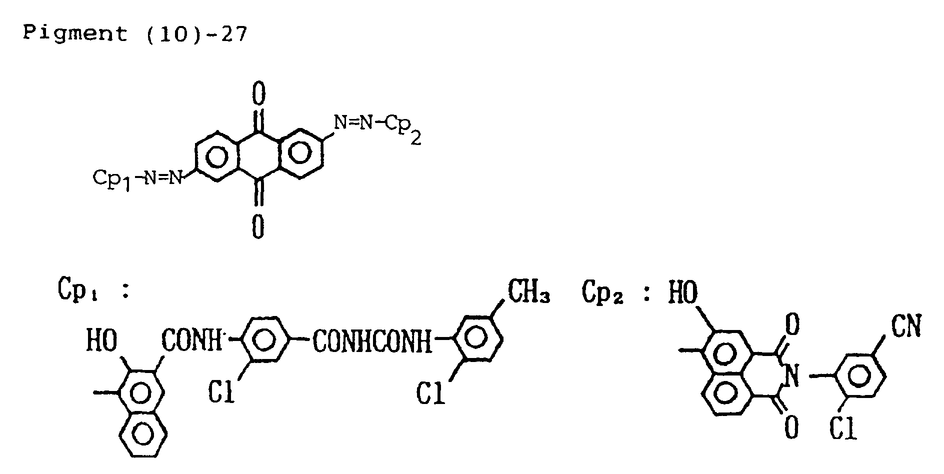

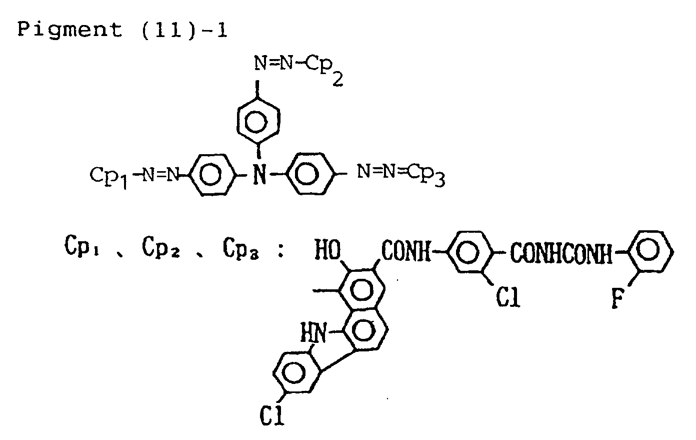

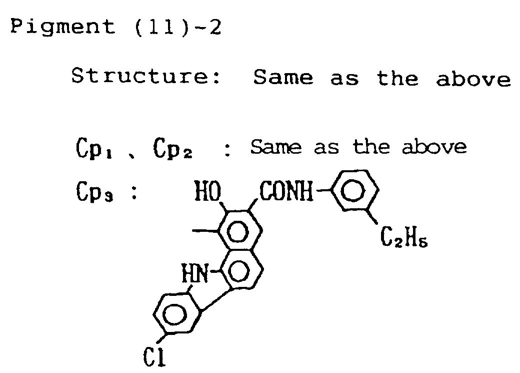

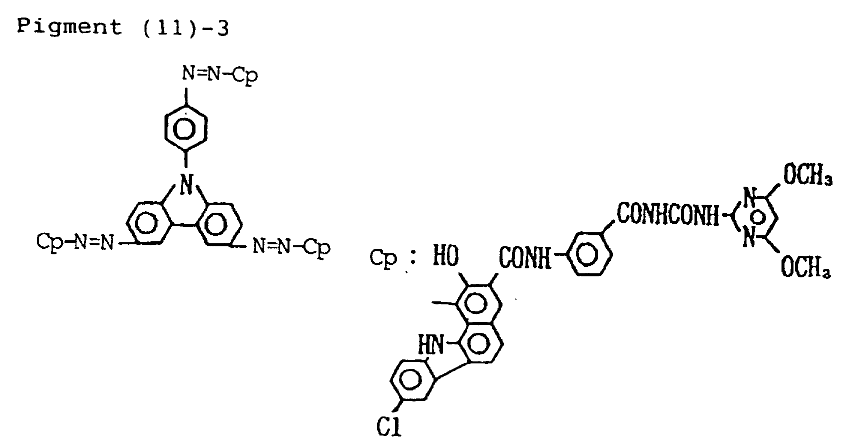

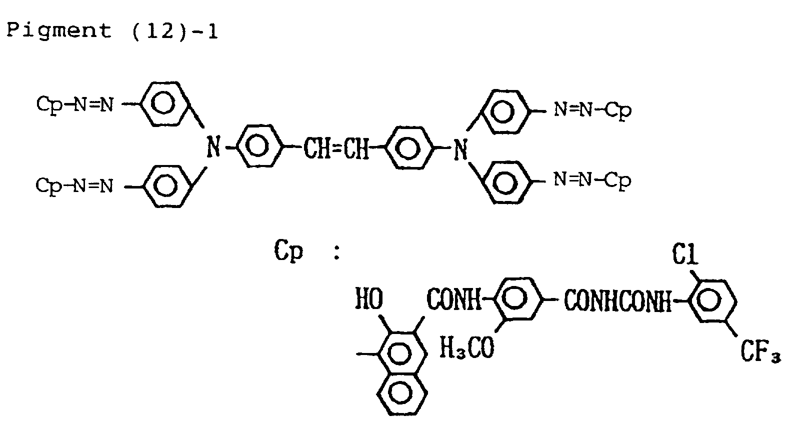

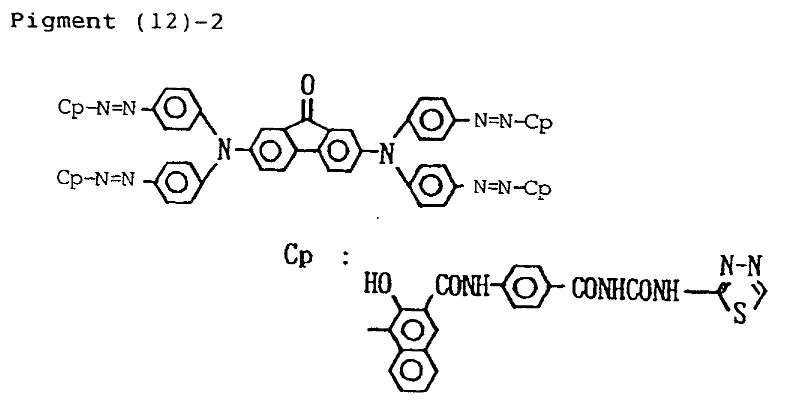

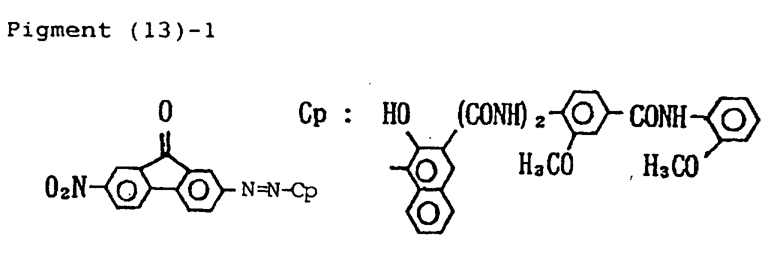

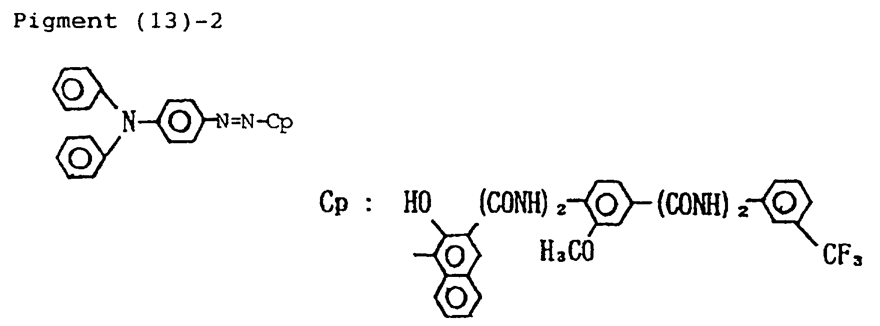

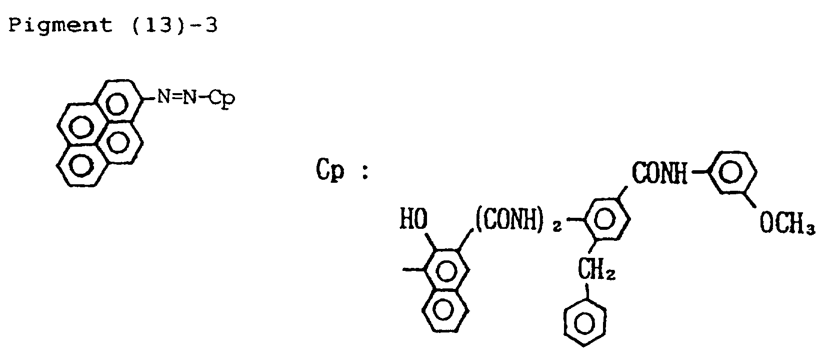

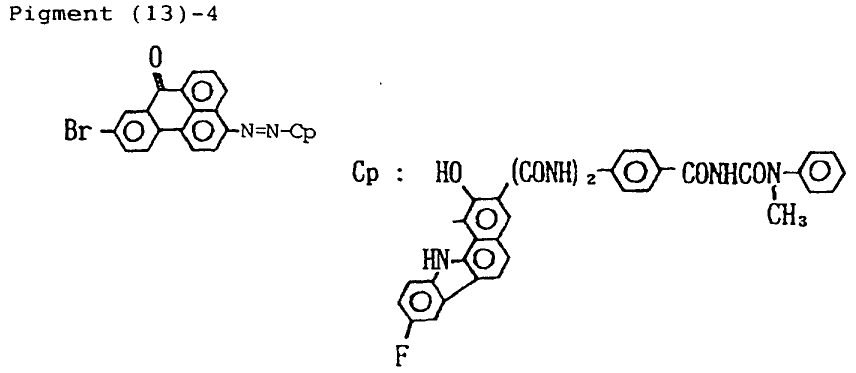

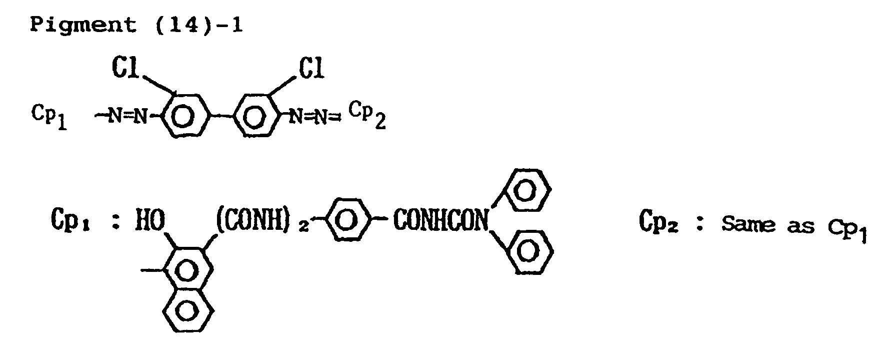

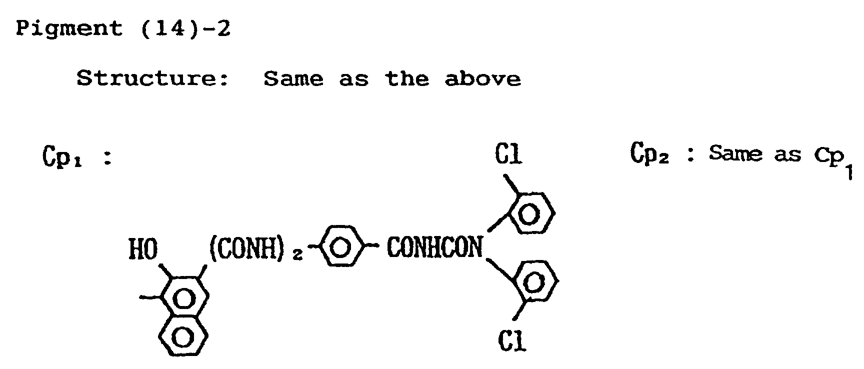

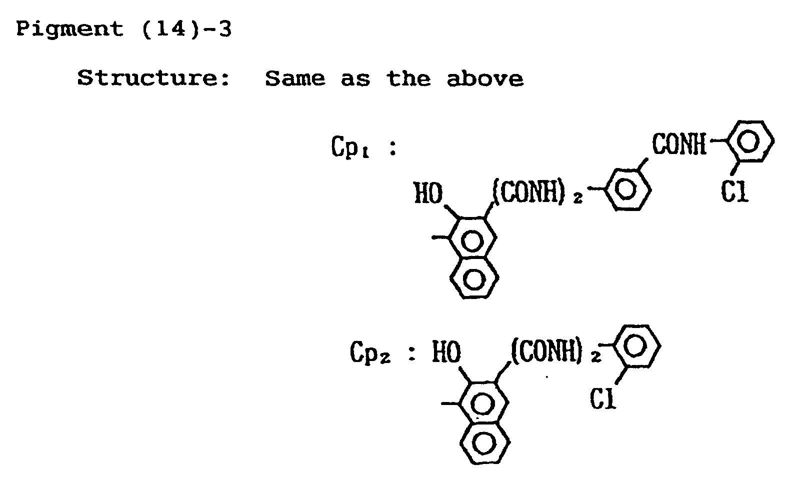

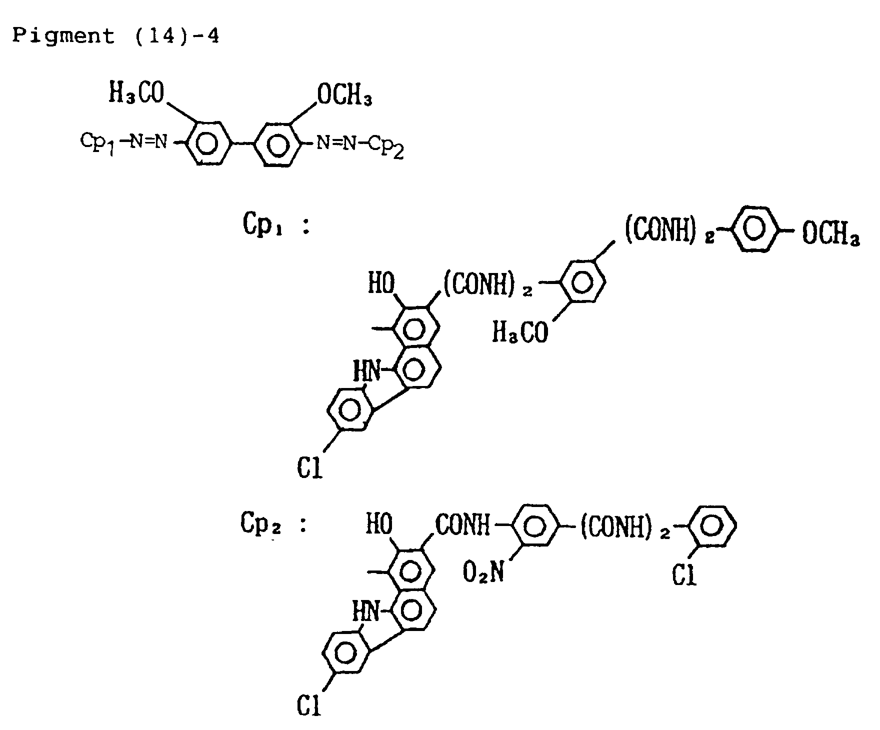

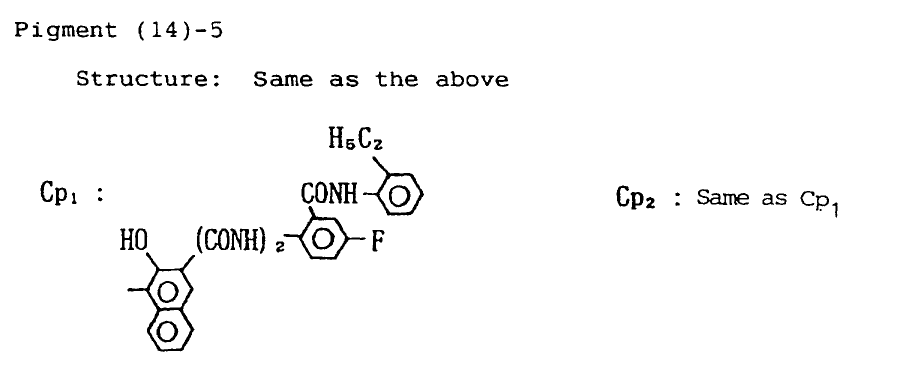

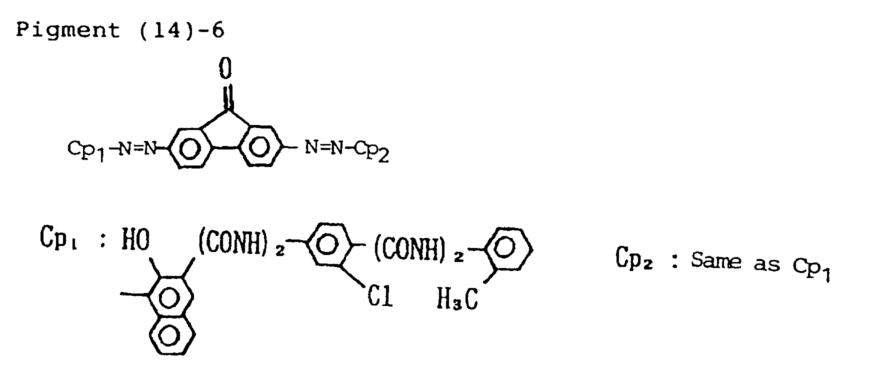

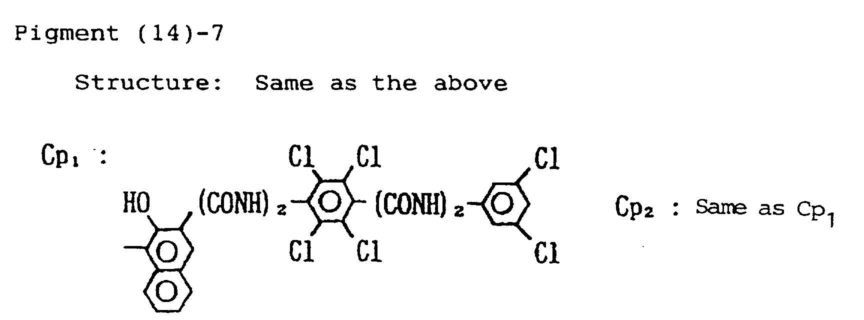

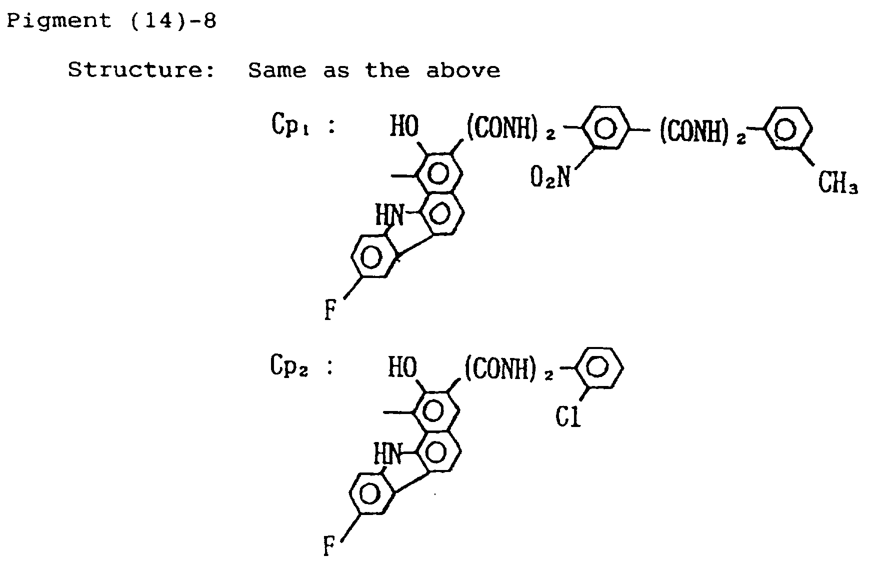

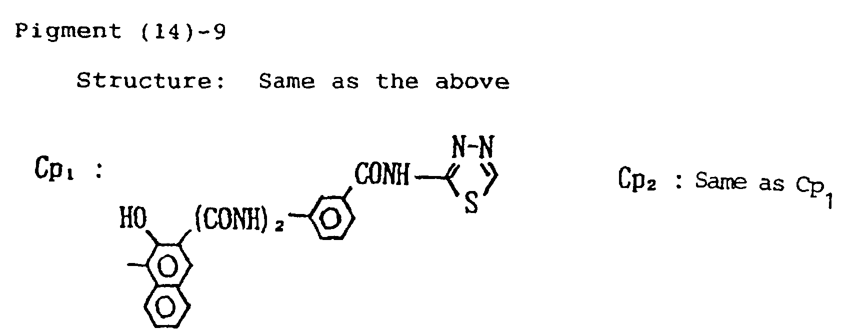

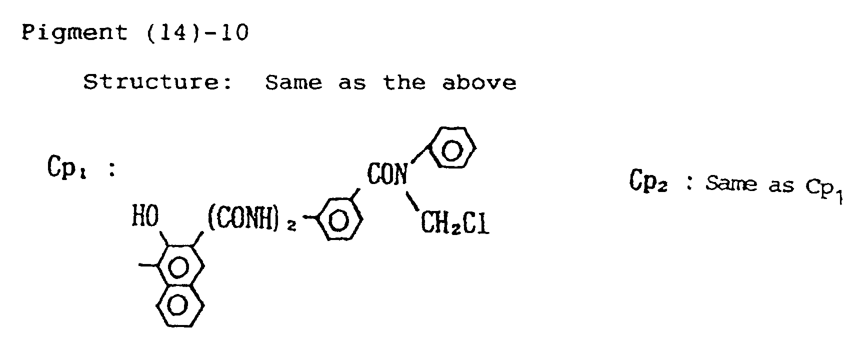

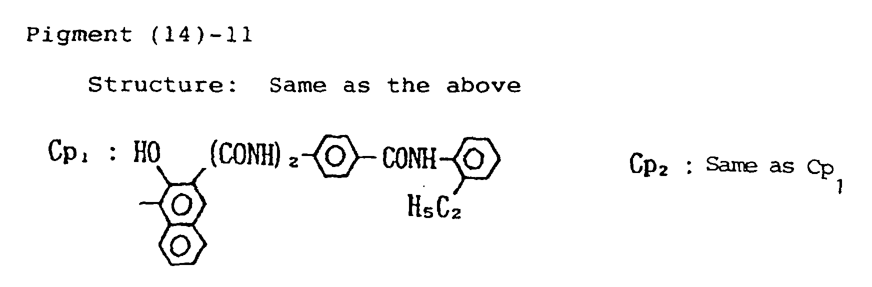

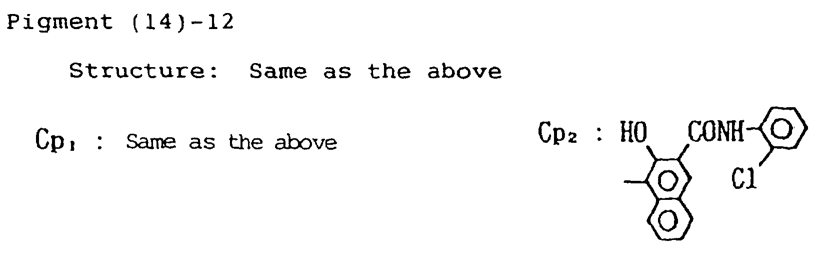

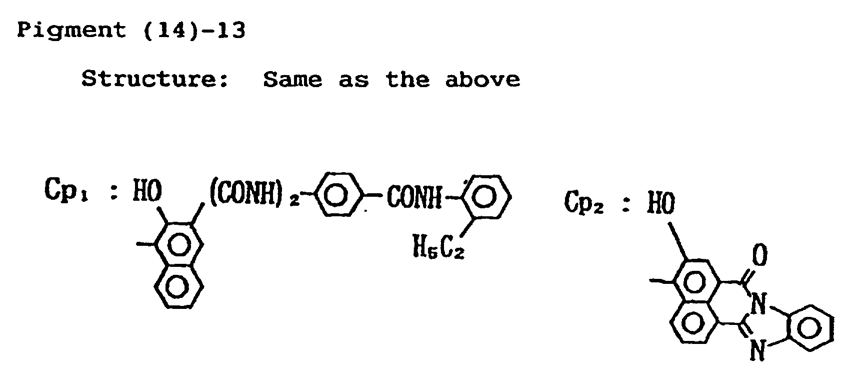

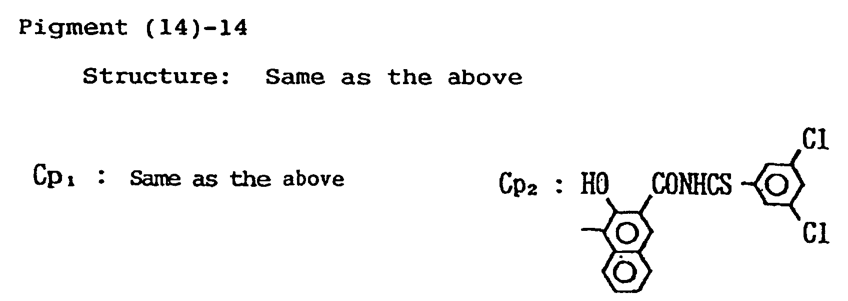

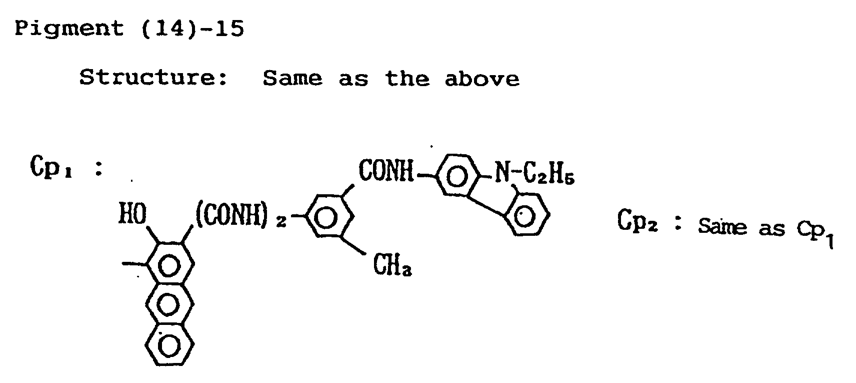

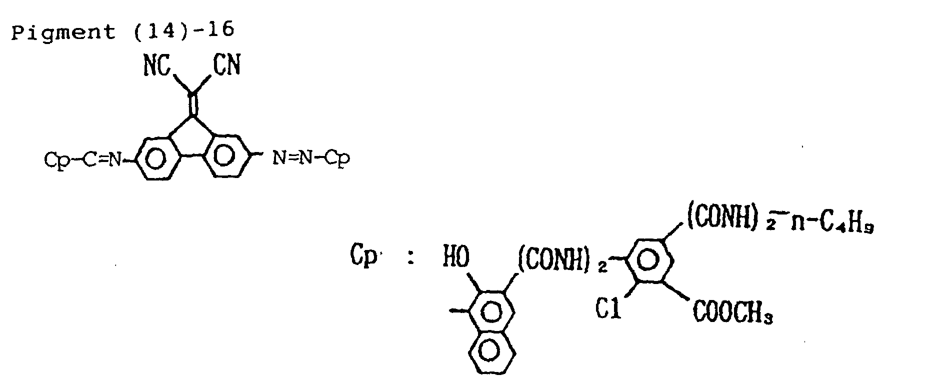

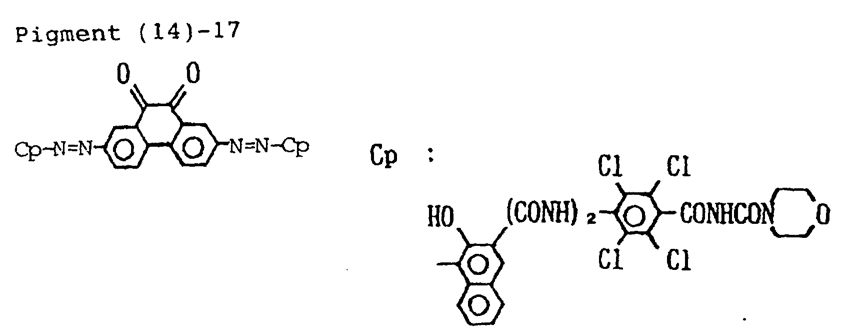

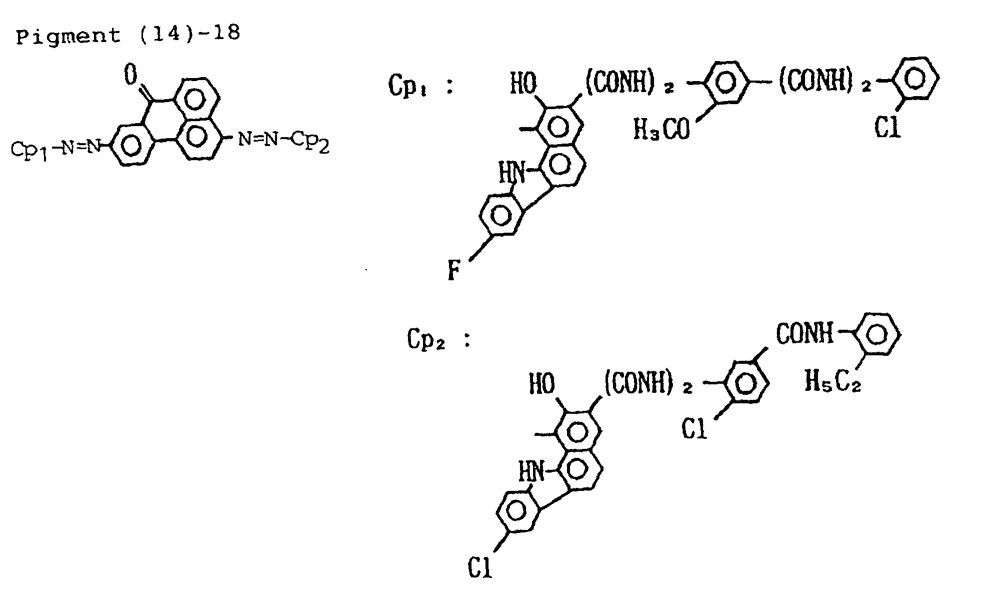

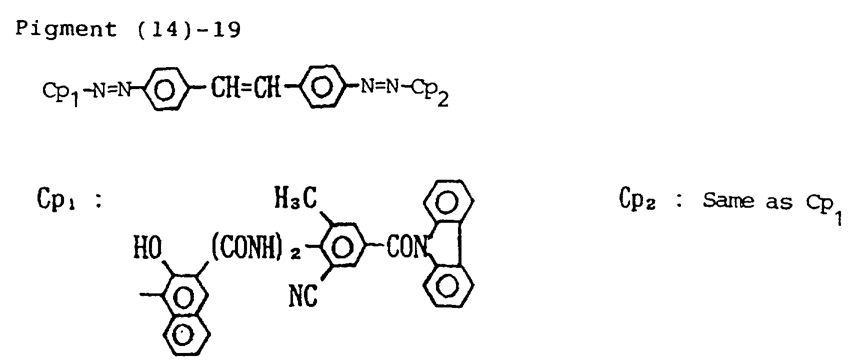

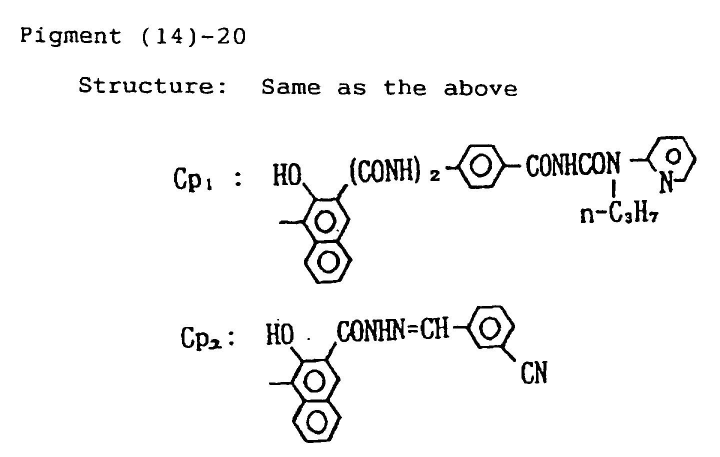

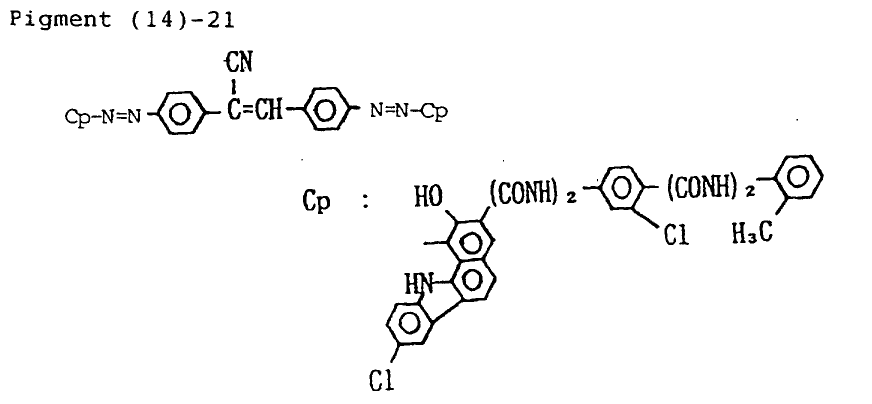

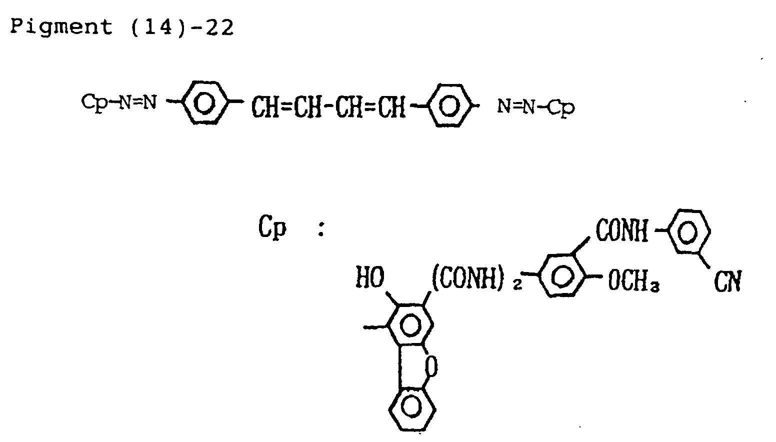

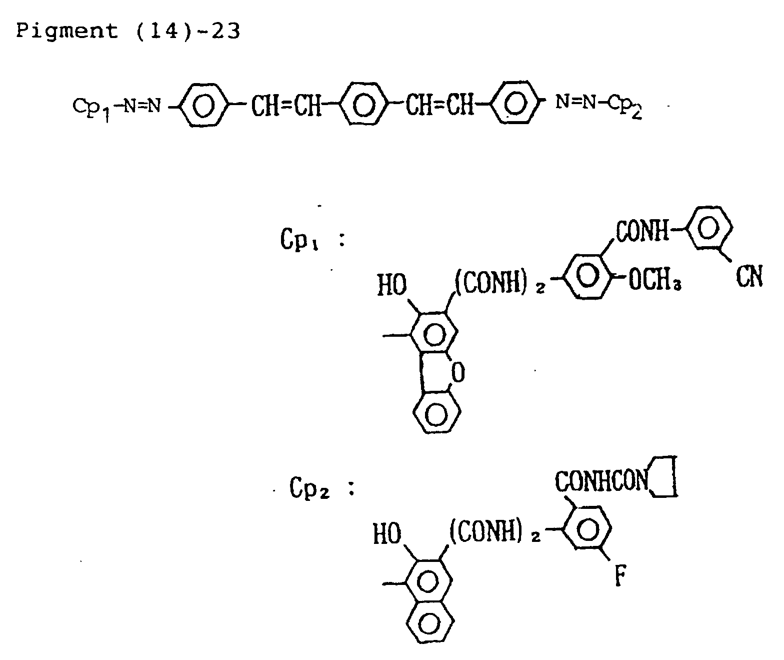

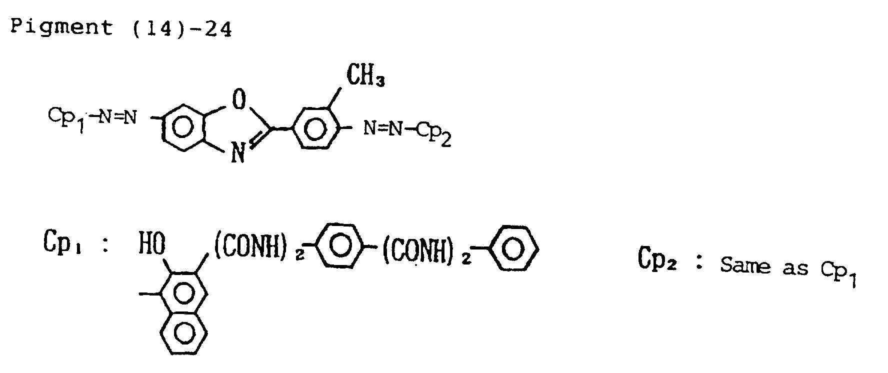

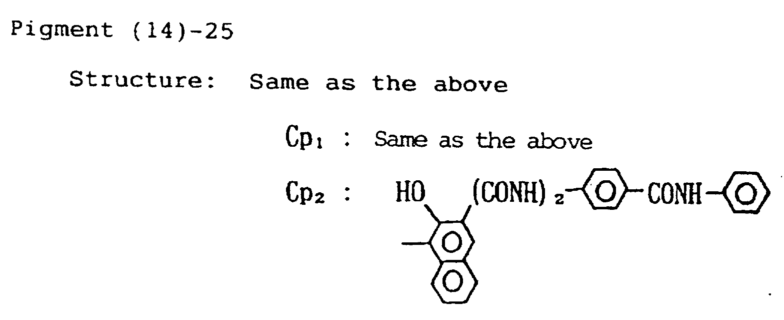

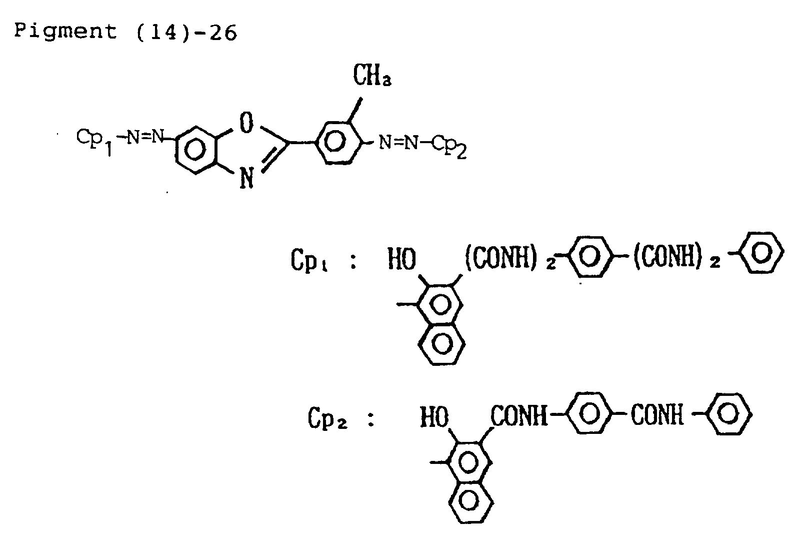

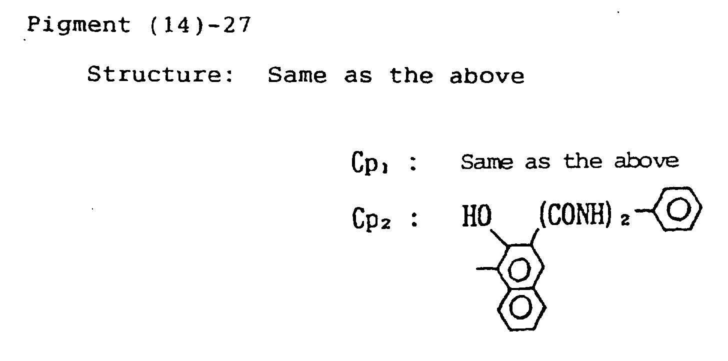

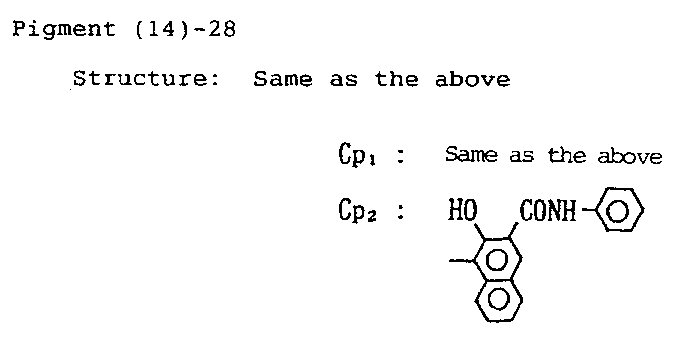

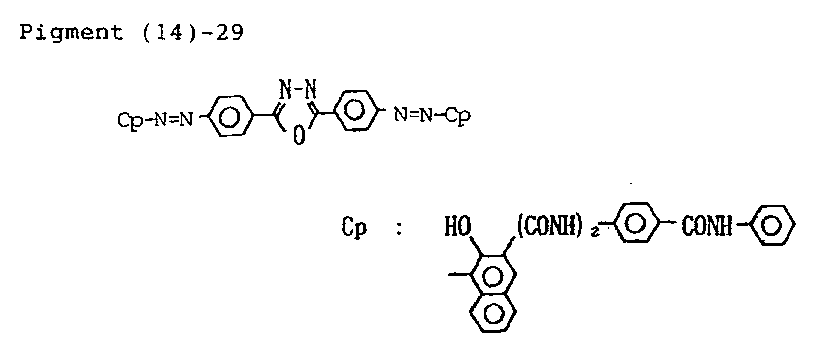

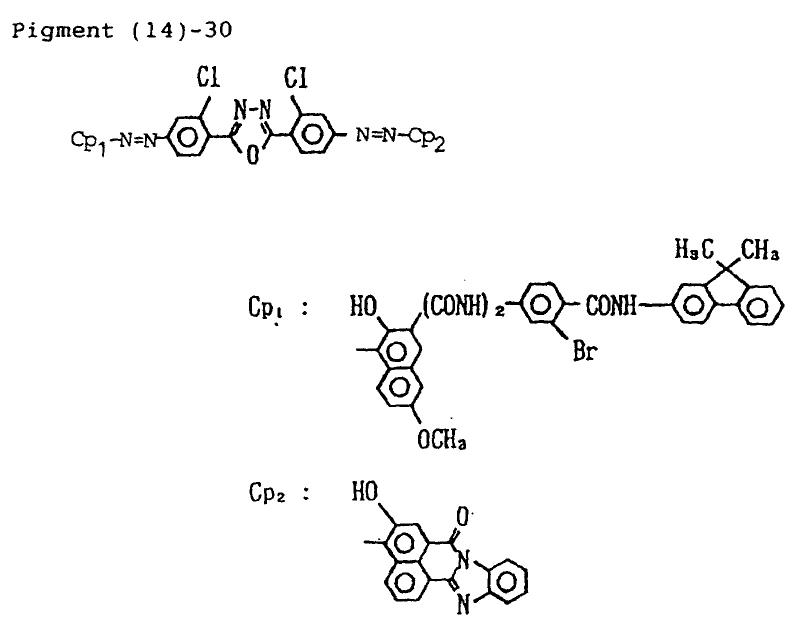

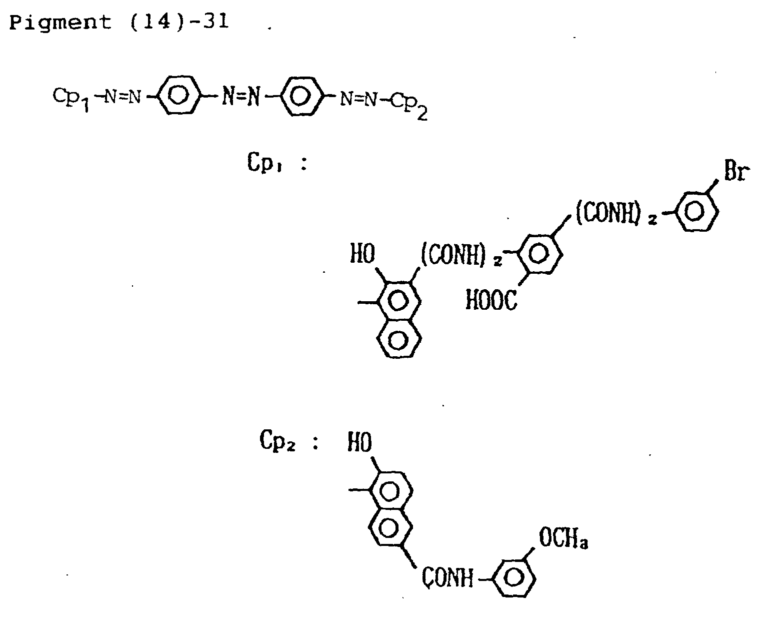

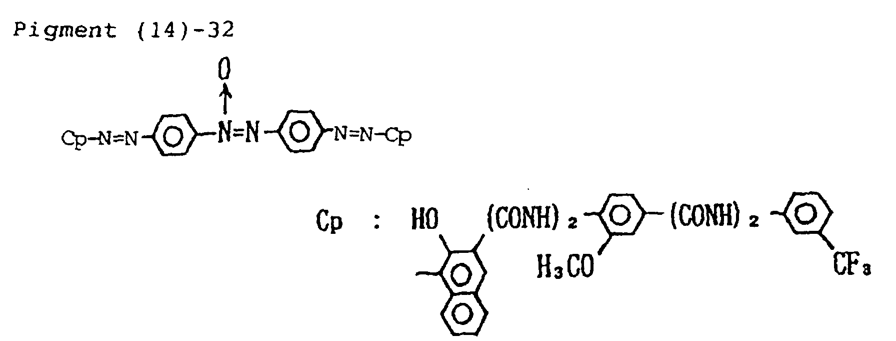

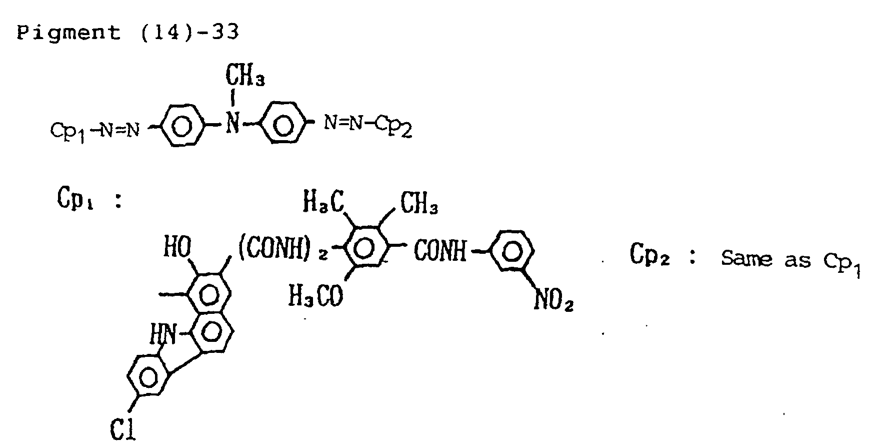

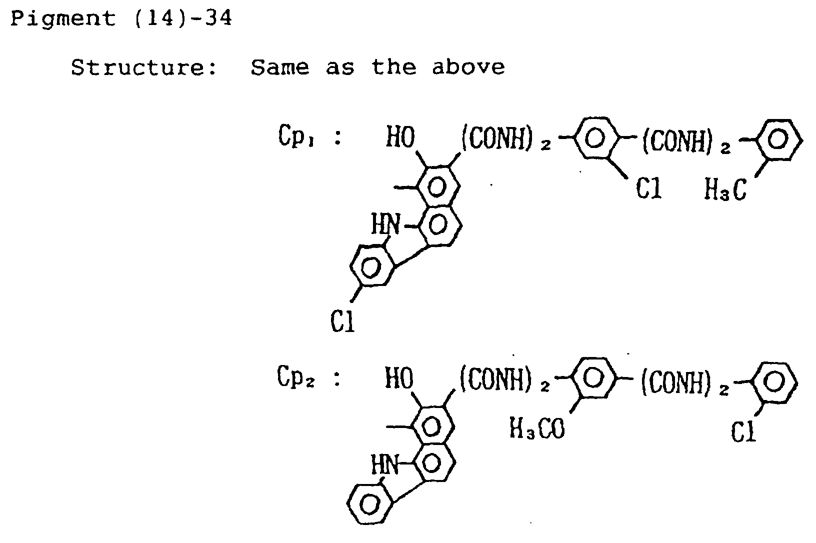

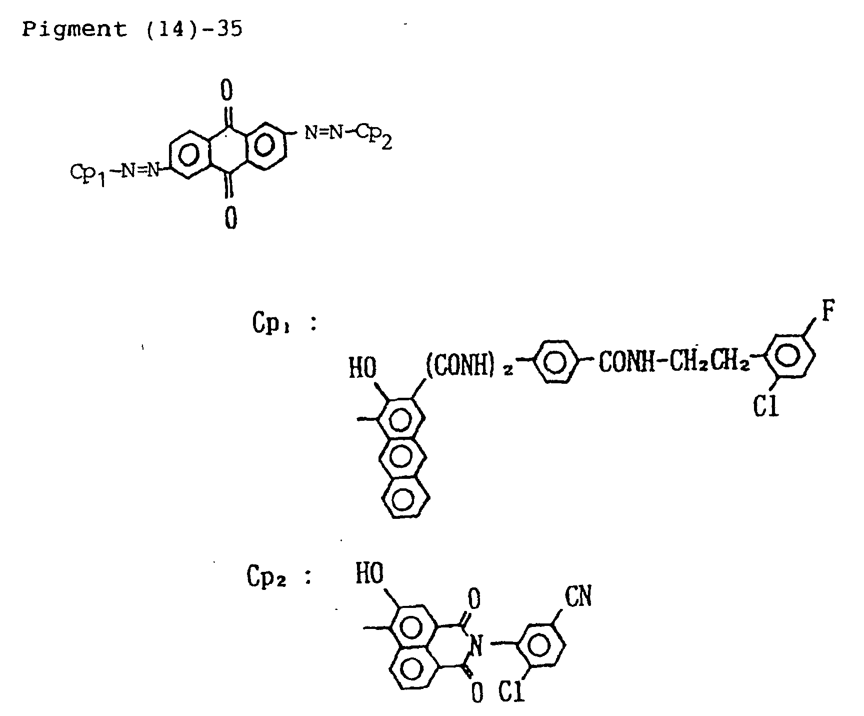

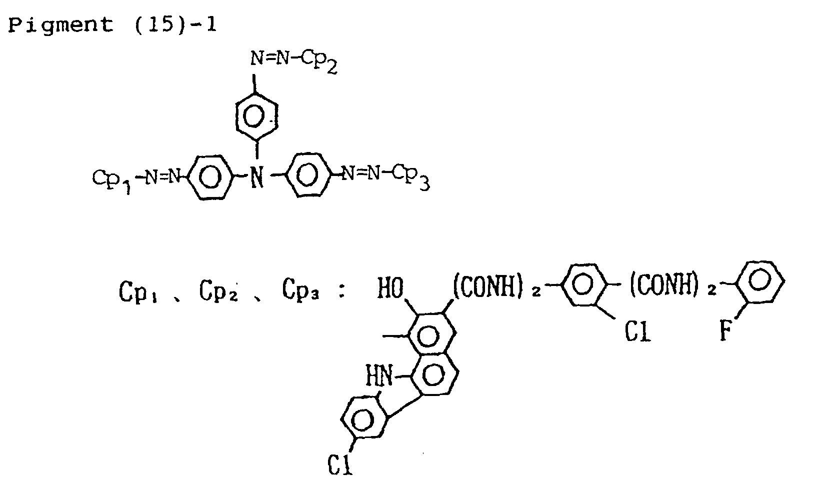

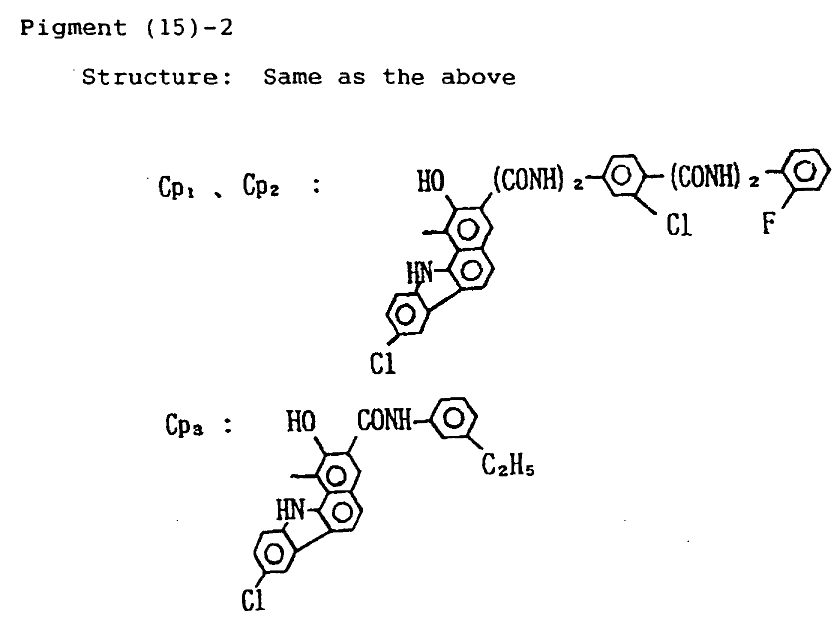

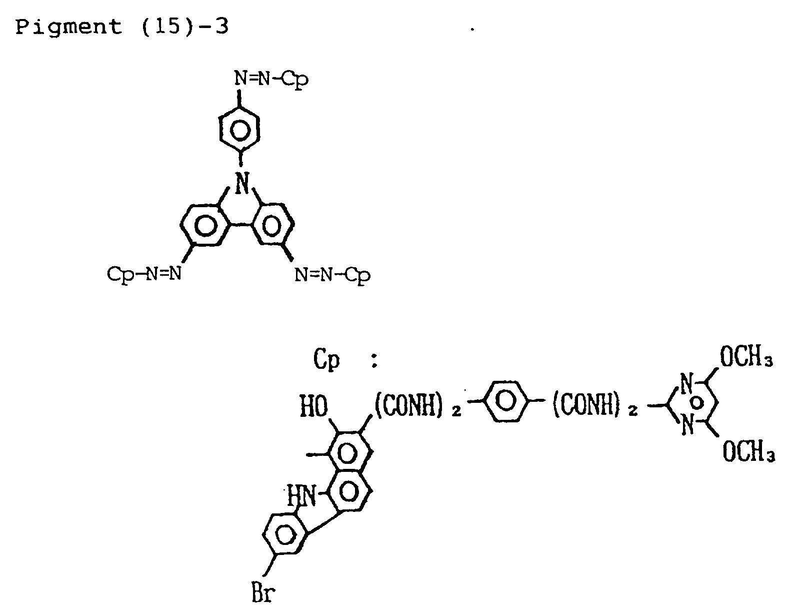

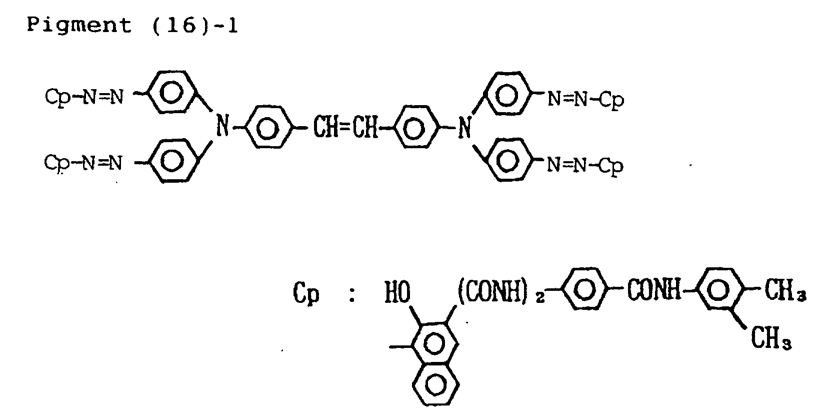

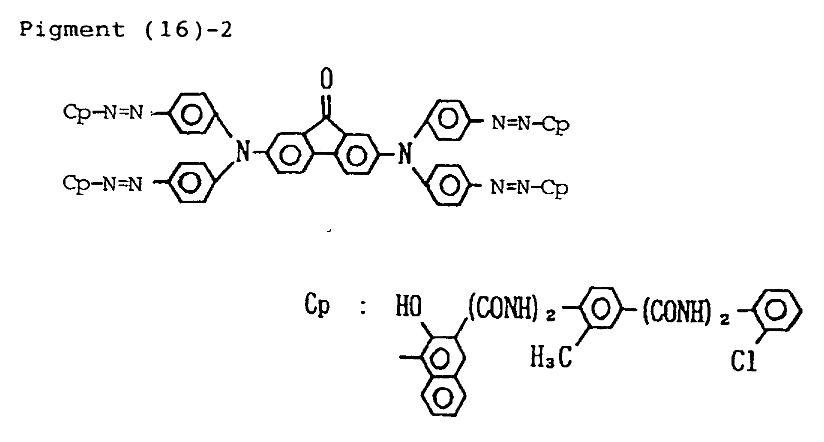

The azo pigment having an organic group represented by the above-mentioned formula (1) used in the present invention may be easily synthesized by subjecting a coupler component of formula (18) below: 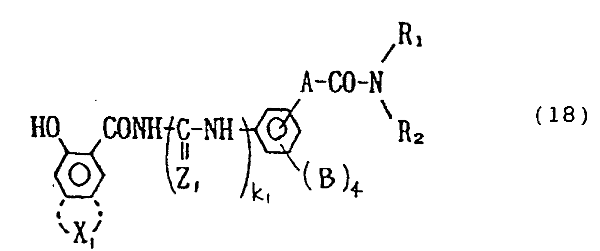 (wherein X₁, B, R₁, R₂, Z₁, k₁ and A are the same as in the formula (1)) and a compound having a diazonium salt structure to a coupling reaction in the presence of an alkali.

Further, a coupler component of the formula (18) (k₁ = 0) may be synthesized by subjecting a carboxylic acid of the following formula (19): 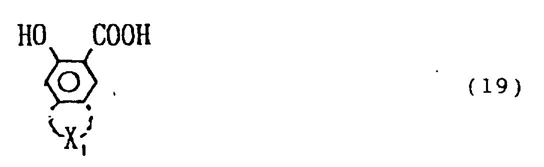 (wherein X₁ is the same as in the formula (1)) and an aniline compound of the following formula (20): 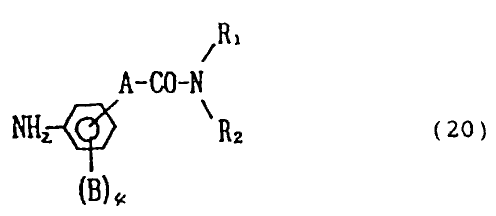 (wherein B, R₁, R₂ and A are the same as in the formula (1)), and
a coupler component of the formula (18) (k₁ = 1) may be synthesized by subjecting a carboxylic acid of the above formula (19) and a urea compound of the following formula (21): 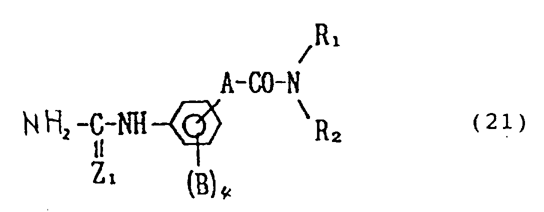 (wherein B, R₁, R₂, Z₁ and A are the same as in the formula (1)), respectively, to a condensation reaction under heating at 80 - 200 °C in the presence of phosphorus trichloride in an aromatic solvent selected from benzene, toluene, xylene, chlorobenzene, o-dichlorobenzene, etc.; or
   by causing an acid chloride of the following formula (22): 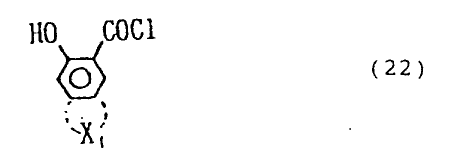 (wherein X₁ is the same as in the formula (1)) to react with an aniline compound of the formula (20) for the coupler component (k = 0), or a urea compound of the above formula (21) for the coupler component of (k = 1), respectively, in an aromatic solvent as described above.

The azo pigment used in the present invention may be synthesized by subjecting the thus-obtained coupler component of the formula (18) and a diazotization product of an amino compound of the following formula (23):

Ar(̵NH₂)ₙ (23)

(wherein Ar and n are the same as in the above formula (2)) to a coupling reaction in the presence of an alkali in an aqueous medium according to an ordinary manner. Further, it is also possible to isolate such a diazonium salt obtained from the amino compound once in the form of a borofluoride salt, a zinc chloride complex salt, etc., and subject the isolated salt to a coupling reaction in the presence of a base, such as sodium acetate, pyridine, trimethylamine or triethylamine, in an appropriate organic solvent, such as N,N-dimethylformamide, N,N-dimethylacetamide or dimethyl sulfoxide, to obtain an azo pigment having an organic group of the formula (1) used in the present invention.

In case where the azo pigment used in the present invention has a plurality of coupler residue groups (Cp) having a phenolic hydroxyl group (e.g., n = 2, 3 or 4 in the formula (2)), it is sufficient that the azo pigment includes at least one organic group (coupler residue group) according to the formula (1) but it is preferred that two or more organic groups according to the formula (1) are included.

An azo pigment having a coupler residue group other than the one according to the formula (1) in addition to the one according to the formula (1), may for example be synthesized by subjecting an amino compound of the following formula (24): 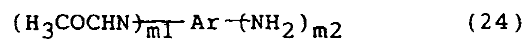 (wherein Ar is the same as in the formula (2), and m₁ and m₂ are independently 1, 2 or 3 with the proviso of m₁+m₂ ≦ 4) to an ordinary manner of diazotization, and subjecting the resultant diazonium salt to a coupling reaction with a coupler component of the above formula (18), followed by hydrolysis with a mineral acid such as hydrochloric acid to form an intermediate product of the following formula (25): 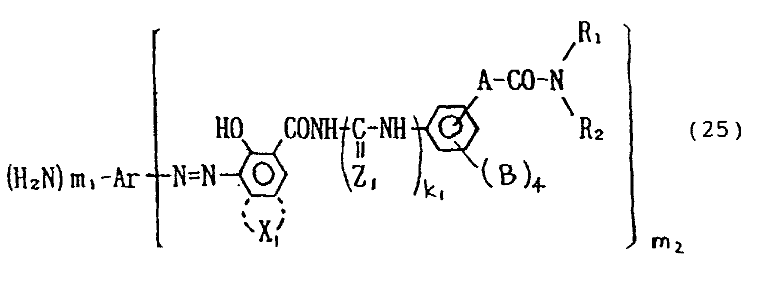 (wherein X₁, B, z₁, k₁, R₁, R₂ and A are the same as in the formula (1), and Ar, m₁ and m₂ are the same as in the formula (24)). Then, the intermediate product is again subjected to an ordinary manner of diazotization and then to a coupling reaction with a coupler component having a phenolic hydroxyl group other than those represented by the formula (18), e.g., those providing coupler residue groups (Cp) as represented by the above formulae (3) - (17), to provide such an azo pigment having also a coupler residue group other than the one according to the formula (1). Further, it is also possible to add a diazonium salt obtained from an amino compound of the formula (23) in an ordinary manner to a coupler mixture solution containing a plurality of couplers including at least one species according to the formula (18) to cause a coupling reaction in the presence of an alkali, thereby obtaining an objective azo pigment having also a coupler residue group other than the one according to the formula (1). Such an objective azo pigment may also be obtained by first performing a primary coupling reaction with a species of coupler component of the formula (18) in the presence of an alkali and then adding an alkaline solution of another coupler component to cause a further coupling reaction.

### Synthesis Example 1 (Synthesis of Pigment (2)-1)

Into a 300 ml-beaker, 150 ml of water, 20 ml (0.23 mol) of conc. hydrochloric acid and 7.8 g (0.032 mol) of anisidine were placed and cooled to 0 °C, followed by dropwise addition of a solution of 4.6 g (0.067 mol) of sodium nitrite in 10 ml of water in 10 min. while maintaining the system liquid temperature at 5 °C. After 15 min. of stirring, the reaction liquid was filtrated through carbon, and into the resultant filtrate, a solution of 10.5 g (0.096 mol) of sodium borofluoride in 90 ml of water was added dropwise under stirring. The resultant precipitated borofluoride salt was filtered out and washed with cold water, followed by washing with acetonitrile and dried at a reduced pressure at room temperature. The yield was 12.0 g (85 %).

Then, into a 1 liter-beaker, 50 ml of N,N-dimethylformamide (DMF) was placed, and 16.7 g (0.042 mol) of a coupler compound of the following formula: 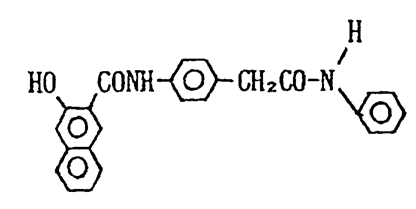 was dissolved therein, followed by cooling to 5 °C, dissolution therein of 8.8 g (0.020 mol) of the above-prepared borofluoride and dropwise addition of 5.1 g (0.050 mol) of triethylamine in 5 min. After two hours of stirring, a precipitated pigment was recovered by filration, washed four times with DMF and three times with water, and then freeze-dried. The yield was 19.1 g (90 %). The pigment exhibited the following elementary analysis result.

| (Elementary analysis) | | |
|---|---|---|
| | Calculated (%) | Measured (%) |
| C | 72.58 | 72.63 |
| H | 4.76 | 4.82 |
| N | 10.58 | 10.43 |

### Synthesis Example 2 (Synthesis of Pigment (6)-1)

Into a 1 liter-beaker, 50 ml of N,N-dimethylformamide (DMF) was placed, and 18.5 g (0.042 mol) of a compound of the following structure: 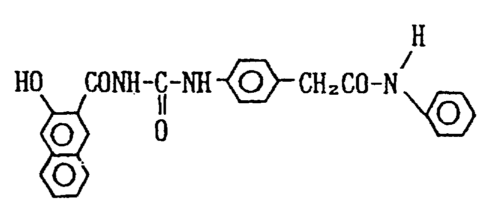 was dissolved therein, followed by cooling to 5 °C, addition of 8.8 g (0.020 mol) of a borofluoride salt obtained in the same manner as in Synthesis Example 1, and dropwise addition of 5.1 g (0.050 mol) of triethylamine in 5 min. After 2 hours of stirring, a precipitated pigment was recovered by filtration, washed 4 times with DMF and 3 times with water, and then freeze-dried. The yield was 21.3 g (93 %).

| (Elementary analysis) | | |
|---|---|---|
| | Calculated (%) | Measured (%) |
| C | 69.22 | 69.41 |
| H | 4.58 | 4.52 |
| N | 12.23 | 12.19 |

### Synthesis Example 3 (Synthesis of Pigment (10)-14)

Into a 300 ml-beaker, 150 ml of water, 20 ml (0.23 mol) of conc. hydrochloric acid and 7.5 g (0.032 mol) of an amino compound of the following formula: 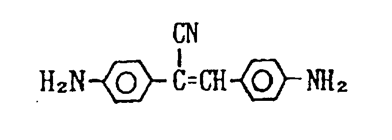 were placed and cooled to 0 °C, followed by dropwise addition of a solution of 4.6 g (0.067 mol) of sodium nitrite in 10 ml of water in 10 min. while maintaining the system liquid temperature at 2 °C or below. After 15 min. of stirring, the reaction liquid was filtrated through carbon, and into the resultant filtrate, a solution of 10.5 g (0.096 mol) of sodium borofluoride in 90 ml of water was added dropwise under stirring. The resultant precipitated borofluoride salt was filtered out and washed with cold water, followed by washing with acetonitrile and dried at a reduced pressure at room temperature. The yield was 10.9 g (79 %).

Then, into a 2 liter-beaker, 800 ml of N,N-dimethylformamide (DMF) was placed, and 17.9 g (0.030 mol) of a coupler compound of the following formula: 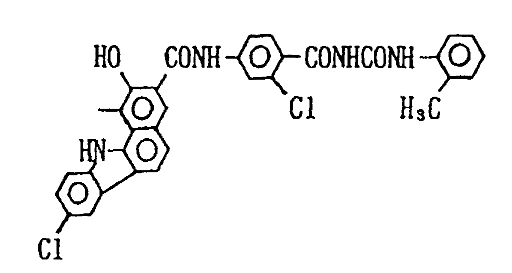 was dissolved therein, followed by cooling to 5 °C, dissolution therein of 6.1 g (0.014 mol) of the above-prepared borofluoride and dropwise addition of 3.5 g (0.035 mol) of triethylamine in 5 min. After two hours of stirring, a precipitated pigment was recovered by filration, washed four times with DMF and three times with water, and then freeze-dried. The yield was 16.5 g (81 %). The pigment exhibited the following elementary analysis result.

| (Elementary analysis) | | |
|---|---|---|
| | Calculated (%) | Measured (%) |
| C | 65.34 | 65.25 |
| H | 3.54 | 3.53 |
| N | 12.54 | 12.39 |

### Synthesis Example 4 (Synthesis of Pigment (14)-21)

Into a 3 liter-beaker, 920 ml of N,N-dimethylformamide (DMF) was placed, and 19.2 g (0.030 mol) of a compound of the following structure: 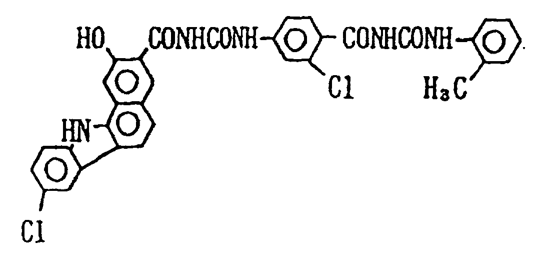 was dissolved therein, followed by cooling to 5 °C, addition of 6.1 g (0.014 mol) of a borofluoride salt obtained in the same manner as in Synthesis Example 3, and dropwise addition of 3.5 g (0.035 mol) of triethylamine in 5 min. After 2 hours of stirring, a precipitated pigment was recovered by filtration, washed 5 times with DMF and 3 times with water, and then freeze-dried. The yield was 16.6 g (77.%).

| (Elementary analysis) | | |
|---|---|---|
| | Calculated (%) | Measured (%) |
| C | 63.25 | 63.37 |
| H | 3.47 | 3.59 |
| N | 13.66 | 13.38 |

The electrophotographic photosensitive member according to the present invention comprises a support, and a photosensitive layer disposed on the support and comprising such an azo pigment having an organic group represented by the formula (1). In a preferred form of the electrophotographic photosensitive member, the photosensitive layer may be functionally separated into a charge generation layer and a charge transport layer disposed in lamination with each other.

The charge generation layer may be formed by applying a coating liquid prepared by dispersing the above-mentioned azo pigment together with a binder resin in an appropriate solvent onto a support in a known manner. The thickness may preferably be at most 5 µm, more preferably 0.1 - 1 µm.

The binder resin used for the above purpose may be selected from a wide scope of insulating resins, or alternatively selected from organic photoconductive polymers, such as poly-N-vinylcarbazole, polyvinylanthracene, and polyvinylpyrene. Preferred examples of the binder resin may include: polyvinyl butyral, polyvinylbenzal, polyarylates (e.g., polycondensate between bisphenol and phthalic acid), polycarbonate, polyester, phenoxy resin, polyvinyl acetate, acrylic resin, polyacrylamide, polyamide, polyvinylpyridine, cellulose resin, polyurethane, casein, polyvinyl alcohol, and polyvinyl pyrrolidone. The content of the binder resin in the charge generation layer may preferably be at most 80 wt. %, more preferably at most 40 wt. %.

The solvent used for the above purpose may preferably be selected from solvents that dissolve the above-mentioned binder resin but do not dissolve a charge transport layer or an undercoating layer which will be described hereinafter. Specific examples thereof may include: alcohols, such as methanol, ethanol and isopropanol; ketones, such as acetone, methyl ethyl ketone, and methyl isobutyl ketone; amides, such as N,N-dimethylacetamide, sulfoxides, such as dimethyl sulfoxide; ethers, such as tetrahydrofuran, dioxane, and ethylene glycol monomethyl ether; esters, such as methyl acetate and ethyl acetate; aliphatic halogenated hydrocarbons, such as chloroform, methylene chloride, dichloroethylene, carbon tetrachloride, dichlorohexane and trichloroethylene; and aromatic compounds, such as benzene, toluene, xylene, monochrolobenzene and dichlorobenzene.

The application of or coating with the coating liquid may be performed by coating methods, such as dip coating, spray coating, spinner coating, bead coating, wire bar coating, blade coating, roller coating and curtain coating.

The drying of the applied coating layer may preferably be performed by first drying at room temperature to a dryness felt by a finger touch, and then heat-drying. The heat-drying may be performed at 3 - 200 °C for 5 min. to 2 hours in a still state or under flowing air or gas.

The charge transport layer may be disposed on or below the charge generation layer in lamination, and functions to receive and transfer a charge carrier from the charge generation layer in the presence of an electric field.

Charge-transporting substances contained in the charge transport layer may include electron-transporting substances and hole-transporting substances. Examples of the electron-transporting substances may include: electron attractive substances, such as chloranil, bromanil, tetracyanoethylene, tetracyanoquinodimethane, 2,4,7-trinitro-9-fluorenone, 2,4,5,7-tetranitro-9-fluorenone, 2,4,7-trinitro-9-dicyanomethylenefluorenone, 2,4,5,7-tetranitroxanthone, and 2,4,8-trinitrothioxanthone, and polymers derived from such electron attractive substances.

Examples of the hole-transporting substance may include: carbazole compounds, such as N-ethylcarbazole and N-isopropylcarbazole; hydrazone compounds, such as N-methyl-N-phenylhydrazino-3-methylidene-9-ethylcarbazole, N,N-diphenylhydrazino-3-methylidene-10-ethylphenothiazine, N,N-diphenylhydrazino-3-methylidene-10-ethylphenoxazine, p-diethylaminobenzaldehyde-N,N-diphenylhydrazone and p-pyrrolidinobenzaldehyde-N,N-diphenylhydrazone; pyrazoline compounds, such as 1-[pyridyl(2)]-3-(α-methyl-p-diethylaminostyryl)-5-(p-diethylaminophenyl)-pyrazoline, 1-diphenyl-3-(p-diethylaminostyryl)-4-methyl-5-(p-diethylaminophenyl)pyrazoline, and 1-phenyl-3-(α-benzyl-p-diethylaminostyryl)-5-(p-diethylaminophenyl)pyrazoline; styryl compounds, such as 4-diethylamino-β-naphthylstyrene, and 4-diphenylamino-4'-methoxystilbene; oxazole compounds, such as 2-(p-diethylaminostyryl)-6-diethylaminobenzoxazole, and 2-(p-diethylaminophenyl)-4-(p-diethylaminophenyl)-5-(2-chlorophenyl)oxazole; thiazole compounds, such as 2-(p-diethylaminostyryl)-6-diethylaminobenzothiazole; triarylmethane compounds, such as bis(4-diethylamino-2-methylphenyl)phenylmethane, and 2-(N,N-p-ditolyl)amino-9,9-dimethylfluorene; polyarylalkane compounds, such as 1,1-bis(4-N,N-diethylamino-2-methylphenyl)heptane, and 1,1,2,2-tetrakis(4-N,N-diethylamino-2-methylphenyl)ethane; triphenylamine, poly-N-vinylcarbazole, polyvinylpyrene, polyvinylanthracene, polyvinylacridine, poly-9-vinylanthracene, pyrene-formaldehyde resin, and ethylcarbazole-formaldehyde resin. In addition to these organic charge-transporting substances, it is also possible to use inorganic materials, such as selenium, selenium-tellurium, amorphous silicon and cadmium sulfide. These charge-transporting substances may be used alone or in combination of two or more species.

In case where a charge-transporting substance having no film-formability is used, an appropriately selected binder resin may be used in combination therewith for forming a charge transport layer. Examples of such a binder resin may include: insulating resins, such as acrylic resin, polyallylate, polyester, polycarbonate, polystyrene, acrylonitrile-styrene copolymer, acrylonitrilebutadiene copolymer, polyvinyl butyral, polyvinyl formal, polysulfone, polyacrylamide, polyamide, and chlorinated rubber; and organic photoconductive polymers, such as poly-N-vinylcarbazole, polyvinylanthracene, and polyvinylpyrene.

The charge transport layer cannot have an unnecessarily large thickness because there is a certain limit for ensuring a charge carrier-transportability. The thickness may generally be 5 - 30 µm, preferably 10 - 25 µm. The formation of the charge transport layer by wet application may be performed according to appropriate coating methods as described with reference to the formation of the charge generation layer.

According to another embodiment, the electrophotographic photosensitive member according to the present invention may include a single photosensitive layer containing both the azo pigment and a charge-transporting substance. In this embodiment, in place of or in addition to a charge-transporting substance as described above, it is also possible to use a charge transfer complex comprising poly-N-vinylcarbazole and trinitrofluorenone. Such a photosensitive layer may for example be formed by dispersing the above-mentioned azo pigment and such a charge transfer complex in a solution of polyester in tetrahydrofuran, and applying the resultant coating liquid.

In any form of the photosensitive layer, at least one species of the specific azo pigment having an organic group represented by the formula (1) is contained. The azo pigment may be amorphous or crystalline. It is also possible to use a combination of two or more species of the specific azo pigment having an organic group according to the formula (1) or a combination of at least one species of the specific azo pigment and a known other charge-generating substance for the purpose of, e.g., providing the photosensitive member with an enhanced sensitivity or providing a panchromatic photosensitive member by combining pigments having different light-absorption characteristics.

The support on which the photosensitive layer is disposed may comprise any form or material as far as it can exhibit electroconductivity. For example, the support may comprise aluminum, aluminum alloy, copper, zinc, stainless steel, vanadium, molybdenum, chromium, titanium, nickel, indium, gold or platinum. In addition, it is also possible to use a plastic material (such as a shaped body of polyethylene, polypropylene, polyvinyl chloride, polyethylene terephthalate, acrylic resin, or polyethylene fluoride) coated with a vapor-deposited film of, e.g., aluminum, aluminum alloy, indium oxide, tin oxide or indium tin oxide; a support of plastic or other material further coated with a conductive material formed by dispersing electroconductive particles (of, e.g., aluminum, titanium oxide, tin oxide, zinc oxide, carbon black or silver) in an appropriate binder resin; a support comprising plastic or paper impregnated with electroconductive particles; or a support comprising an electroconductive polymer.

In the photosensitive member according to the present invention, it is also possible to dispose an undercoating layer functioning as a barrier and an adhesive. The undercoating layer may have a thickness of 0.1 - 10 µm, preferably 0.5 - 5 µm, and may comprise, e.g., casein, polyvinyl alcohol, nitrocellulose, polyamide (e.g., nylon 6, nylon 66, nylon 610, copolymer nylon, or N-alkoxymethylated nylon), polyurethane, or aluminum oxide.

The photosensitive member of the present invention can be further provided with a protective layer over the photosensitive layer for the purpose of, e.g., protecting the photosensitive layer from mechanical and chemical adverse effects of the exterior. Such a protective layer may comprise a resin or a resin containing electroconductive particles or a charge-transporting substance.

The electrophotographic photosensitive member according to the present invention may be used not only in electrophotographic copying machines but also widely in a field of various applied electrophotography inclusive of laser beam printers, CRT printers, LED printers, liquid crystal printers, printing plate production by laser beam irradiation, and digital recording system using near infrared rays.

Next, some description will be made on the process cartridge and the electrophotographic apparatus according to the present invention.

The sole figure in the drawing shows a schematic structural view of an electrophotographic apparatus including a process cartridge using an electrophotographic photosensitive member of the invention. Referring to the figure, a photosensitive member 1 in the form of a drum is rotated about an axis 2 at a prescribed peripheral speed in the direction of the arrow shown inside of the photosensitive member 1. The peripheral surface of the photosensitive member 1 is uniformly charged by means of a primary charger 3 to have a prescribed positive or negative potential. At an exposure part, the photosensitive member 1 is imagewise exposed to light 4 (as by slit exposure or laser beam-scanning exposure) by using an image exposure means (not shown), whereby an electrostatic latent image is successively formed on the surface of the photosensitive member 1. The thus formed electrostatic latent image is developed by using a developing means 5 to form a toner image. The toner image is successively transferred to a transfer (-receiving) material 7 which is supplied from a supply part (not shown) to a position between the photosensitive member 1 and a transfer charger 5 in synchronism with the rotation speed of the photosensitive member 1, by means of the transfer charger 6. The transfer material 7 carrying the toner image thereon is separated from the photosensitive member 1 to be conveyed to a fixing device 8, followed by image fixing to print out the transfer material 7 as a copy outside the electrophotographic apparatus. Residual toner particles remaining on the surface of the photosensitive member 1 after the transfer operation are removed by a cleaning means 9 to provide a cleaned surface, and residual charge on the surface of the photosensitive member 1 is erased by a pre-exposure means issuing pre-exposure light 10 to prepare for the next cycle. When a contact charging means is used as the primary charger 3 for charging the photosensitive member 1 uniformly, when a contact (or proximity) charging means is used, the pre-exposure means may be omitted, as desired.

According to the present invention, in the electrophotographic apparatus, it is possible to integrally assemble a plurality of elements or components thereof, such as the above-mentioned photosensitive member 1, the primary charger (charging means) 3, the developing means and the cleaning means 9, into a process cartridge detachably mountable to the apparatus main body, such as a copying machine or a laser beam printer. The process cartridge may, for example, be composed of the photosensitive member 1 and at least one of the primary charging means 3, the developing means 5 and cleaning means 9, which are integrally assembled into a single unit capable of being attached to or detached from the apparatus body by the medium of a guiding means such as a rail 12 of the apparatus body.

Incidentally, in case where the electrophotographic apparatus in a copying machine or a printer, the exposure light 4 is reflected light or transmitted light from an original, or illumination light provided by scanning with a laser beam, drive of an LED array or drive of a liquid crystal array, based on a signal produced, e.g., by reading an original with a sensor.

Hereinbelow, the present invention will be described more specifically with reference to Examples and Comparative Examples.

### Example 1

A sheet-form aluminum support was coated with a solution of 5 g of methoxymethylated nylon (Mw (weight-average molecular weight) = 32,000) and 10 g of alcohol-soluble copolymer nylon (Mw = 29,000) in 95 g of methanol by means of a wire bar, followed by drying to form a 1 µm-thick undercoating layer.

Then, 5 g of Pigment (2)-1 was added to a solution of 2 g of polyvinyl butyral (butyral degree = 63 mol. %) in 95 g of cyclohexanone and dispersed therein by means of a sand mill for 20 hours. The resultant dispersion was applied by a wire bar onto the undercoating layer and dried to form a 0.2 µm-thick charge generation layer.

Then, 5 g of a hydrazone compound of the following formula: 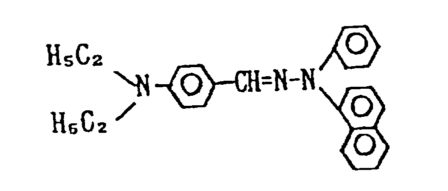 and 5 g of polymethyl methacrylate (Mn (number-average molecular weight) = 100,000) were dissolved in 35 g of chlorobenzene, and the resultant liquid was applied by a wire bar onto the charge generation layer and dried to form a 20 µm-thick charge transport layer, thereby providing an electrophotographic photosensitive member of Example 1.

### Examples 2 - 36

Electrophotographic photosensitive members of Examples 2 - 36 were prepared in the same manner as in Example 1 except for using Pigments, respectively indicated in Table 1.

Each of the above prepared photosensitive members of Examples 1 - 36 were subjected to evaluation of charging performances by negatively charging the photosensitive member with -5 kV of corona discharge, followed by standing for 1 sec. in the dark and exposure to light at a luminance of 10 lux from a halogen lamp, by means of an electrostatic copying paper tester ("SP-428" (trade name), mfd. by Kawaguchi Denki K.K.). Evaluated charging performances were a surface potential V₀ immediately after the charging and an exposure light quantity E_{1/2} required for lowering the surface potential after standing in the dark to a half thereof. The results are also shown in Table 1 below.

**Table 1**

| Ex. | Pigment | V ₀ (-V) | E _{1/2} (lux.sec) |
|---|---|---|---|
| 1 | (2)-1 | 725 | 1.75 |
| 2 | (2)-2 | 715 | 1.72 |
| 3 | (2)-3 | 720 | 1.85 |
| 4 | (2)-4 | 705 | 2.00 |
| 5 | (2)-17 | 730 | 1.27 |
| 6 | (2)-19 | 705 | 1.52 |
| 7 | (2)-21 | 710 | 1.38 |
| 8 | (2)-22 | 720 | 1.75 |
| 9 | (2)-24 | 715 | 1.62 |
| 10 | (2)-25 | 695 | 3.02 |
| 11 | (2)-35 | 725 | 1.25 |
| 12 | (2)-36 | 730 | 1.42 |
| 13 | (2)-37 | 720 | 1.18 |
| 14 | (2)-39 | 715 | 1.77 |
| 15 | (3)-1 | 720 | 1.25 |
| 16 | (3)-2 | 720 | 1.38 |
| 17 | (3)-9 | 710 | 1.17 |
| 18 | (4)-4 | 705 | 1.72 |
| 19 | (6)-1 | 720 | 1.62 |
| 20 | (6)-4 | 705 | 2.03 |
| 21 | (6)-17 | 710 | 1.35 |
| 22 | (6)-20 | 725 | 1.82 |
| 23 | (6)-21 | 720 | 1.63 |
| 24 | (6)-22 | 715 | 1.25 |
| 25 | (6)-23 | 730 | 1.32 |
| 26 | (6)-28 | 730 | 1.10 |
| 27 | (6)-29 | 705 | 1.87 |
| 28 | (6)-34 | 715 | 1.35 |
| 29 | (6)-35 | 720 | 1.25 |
| 30 | (6)-36 | 720 | 1.35 |
| 31 | (6)-39 | 720 | 1.75 |
| 32 | (6)-40 | 710 | 1.35 |
| 33 | (7)-1 | 720 | 1.90 |
| 34 | (7)-9 | 705 | 1.25 |
| 35 | (8)-2 | 710 | 1.73 |
| 36 | (8)-3 | 720 | 1.52 |

### Comparative Examples 1 - 5

Electrophotographic photosensitive members of Comparative Examples 1 - 5 were prepared in the same manner as in Example 1 except for using Comparative Pigments 1 - 5, respectively, shown below instead of Pigment (2)-1, and were evaluated in the same manner as in Example 1. The results are shown in Table 2.

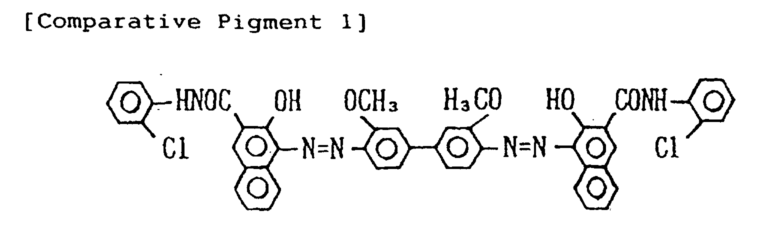

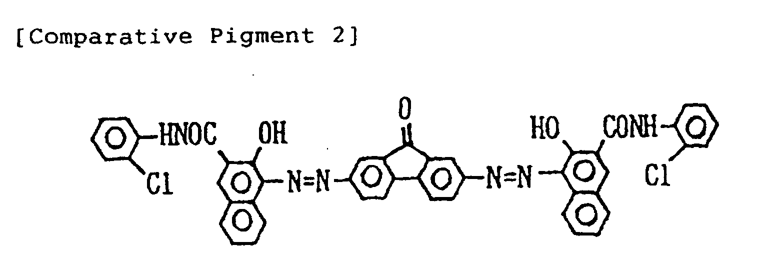

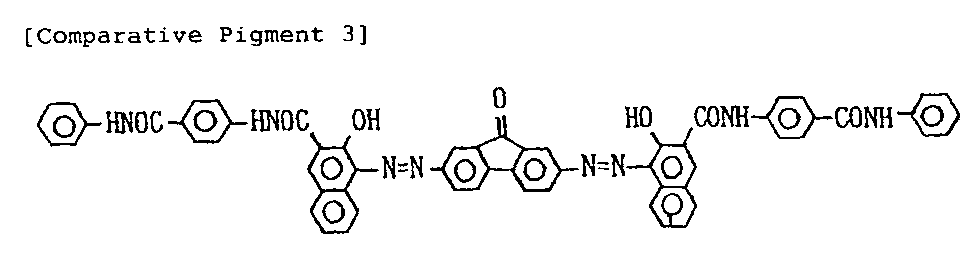

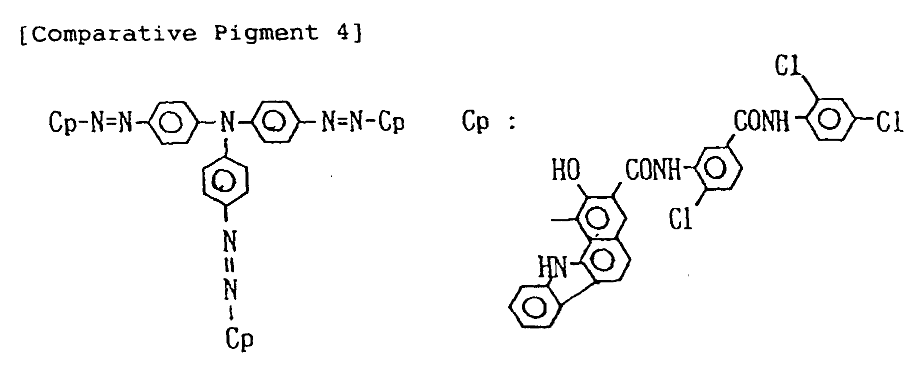

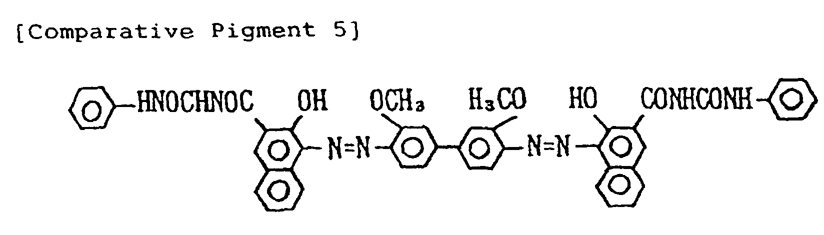

**Table 2**

| Comp. Ex. | Comp. Pigment | V₀ (-V) | E_{1/2} (lux.sec) |
|---|---|---|---|
| 1 | 1 | 695 | 5.1 |
| 2 | 2 | 690 | 3.3 |
| 3 | 3 | 695 | 3.7 |
| 4 | 4 | 670 | 4.5 |
| 5 | 5 | 710 | 3.5 |

From the results shown in Table 1 in comparison with those in Table 2, the electrophotographic photosensitive members according to the present invention all exhibited a sufficient chargeability and an excellent sensitivity.

### Example 37

The sheet-form electrophotographic photosensitive member prepared in Example 1 was wound about a cylinder of 30 mm in diameter, and the resultant cylindrical photosensitive member was incorporated in an electrophotographic copying machine equipped with a corona charger of -6.5 kV, an exposure optical system, a developing device, a transfer charger, a charge-removal exposure optical system and a cleaner.

The photosensitive member was subjected to 5000 cycles (rotations) of charging and exposure while setting the initial-stage dark-part potential V_{D} and light-part potential V_{L} to approximately -700 volts and -200 volts, respectively. The changes in dark-part potential ΔV_{D} and the change in light-part potential ΔV_{L} were measured as differences between the last values and the initial values V_{D} and V_{L}. The results are shown in Table 3. A positive sign (+) and a negative sign (-) in ΔV_{D} and ΔV_{L} represent an increase and a decrease, respectively, in terms of absolute values of potentials.

### Examples 38 - 60

The evaluation of ΔV_{D} and ΔV_{L} in Example 37 was repeated by using photosensitive members of Examples 4, 5, 7, 9, 11 - 16, 18, 19, 20, 22, 24, 26, 28, 29, 30, 32 - 44 and 36. The results are also shown in Table 3.

**Table 3**

| Ex. | Photosensitive member | ΔV_{D} (V) | ΔV_{L} (V) |
|---|---|---|---|
| 37 | Ex. 1 | -20 | +15 |
| 38 | Ex. 4 | -15 | +5 |
| 39 | Ex. 5 | -10 | +15 |
| 40 | Ex. 7 | -15 | +5 |
| 41 | Ex. 9 | -25 | +5 |
| 42 | Ex. 11 | -20 | +15 |
| 43 | Ex. 12 | -5 | +5 |
| 44 | Ex. 13 | 0 | +10 |
| 45 | Ex. 14 | -5 | +15 |
| 46 | Ex. 15 | -5 | +5 |
| 47 | Ex. 16 | 0 | +15 |
| 48 | Ex. 18 | -25 | +20 |
| 49 | Ex. 19 | -10 | +10 |
| 50 | Ex. 20 | -10 | +5 |
| 51 | Ex. 22 | -10 | +5 |
| 52 | Ex. 24 | -5 | +10 |
| 53 | Ex. 26 | -10 | -5 |
| 54 | Ex. 28 | -5 | +5 |
| 55 | Ex. 29 | -15 | +15 |
| 56 | Ex. 30 | 0 | -20 |
| 57 | Ex. 32 | -10 | +10 |
| 58 | Ex. 33 | -5 | +15 |
| 59 | Ex. 34 | +10 | +10 |
| 60 | Ex. 36 | +5 | +5 |

### Comparative Examples 6 - 10

The electrophotographic photosensitive members prepared in Comparative Examples 1 - 5 were respectively evaluated in the same manner as in Example 37. The results are shown in Table 4.

**Table 4**

| Comp. Ex. | Photosensitive member | ΔV_{D} (V) | ΔV_{L} (V) |
|---|---|---|---|
| 6 | Comp.Ex. 1 | -75 | +25 |
| 7 | Comp.Ex. 2 | -60 | +45 |
| 8 | Comp.Ex. 3 | -30 | +40 |
| 9 | Comp.Ex. 4 | -65 | +35 |
| 10 | Comp.Ex. 5 | -45 | +40 |

From the results shown in Table 3 in comparison with those in Table 4, the electrophotographic photosensitive members of the present invention exhibited little potential change during repetitive use.

### Example 61

On an aluminum vapor deposition layer formed on a polyethylene terephthalate film, a 0.8 µm-thick undercoating layer of polyvinyl alcohol was formed, and further thereon, a charge generation layer-forming dispersion liquid identical to the one prepared in Example 1 was applied by a wire bar and dried to form a 0.2 µm-thick charge generation layer.

Then 5 g of a styryl compound of the following formula: 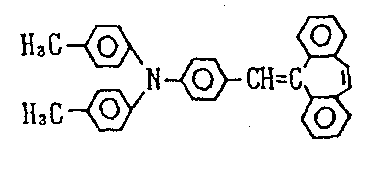 and 5 g of polycarbonate (Mw = 55,000) were dissolved in 40 g of tetrahydrofuran, and the resultant solution was applied by a wire bar on the charge generation layer and dried to form a 20 µm-thick charge transport layer.

The thus-prepared electrophotographic photosensitive member was evaluated with respect to electrophotographic performances in the same manner as in Examples 1 and 37 to provide the following results:

| | |
|---|---|
| V₀ | -705 V |
| E_{1/2} | 1.62 lux.sec |
| ΔV_{D} | -5 V |
| ΔV_{L} | +5 V |

### Example 62

An electrophotographic photosensitive member was prepared and evaluated in the same manner as in Example 61 except for using a charge generation layer-forming dispersion liquid identical to the one prepared in Example 29, thereby providing the following results:

| | |
|---|---|
| V₀ | -710 V |
| E_{1/2} | 1.13 lux.sec |
| ΔV_{D} | -10 V |
| ΔV_{L} | +10 V |

### Example 63

On an aluminum vapor deposition layer formed on a polyethylene terephthalate film, a 0.5 µm-thick undercoating layer of polyvinyl alcohol was formed, and further thereon, a charge generation layer-forming dispersion liquid identical to the one prepared in Example 11 was applied by a wire bar and dried to form a 0.2 µm-thick charge generation layer.

Then 5 g of a triarylamine compound of the following formula: 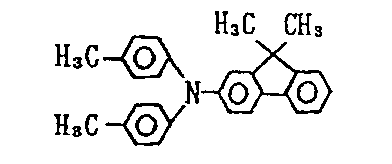 and 5 g of polycarbonate (Mw = 55,000) were dissolved in 40 g of tetrahydrofuran, and the resultant solution was applied by a wire bar on the charge generation layer and dried to form a 21 µm-thick charge transport layer.

The thus-prepared electrophotographic was evaluated with respect to electrophotographic performances in the same manner as in Examples 1 and 37 to provide the following results:

| | |
|---|---|
| V₀ | -720 V |
| E_{1/2} | 1.07 lux.sec |
| ΔV_{D} | 0 V |
| ΔV_{L} | +15 V |

### Example 64

An electrophotographic photosensitive member was prepared and evaluated in the same manner as in Example 63 except for using a charge generation layer-forming dispersion liquid identical to the one prepared in Example 22, thereby providing the following results:

| | |
|---|---|
| V₀ | -725 V |
| E_{1/2} | 1.57 lux.sec |
| ΔV_{D} | 0 V |
| ΔV_{L} | +10 V |

### Example 65

An electrophotographic photosensitive member was prepared in the same manner as in Example 17 except that the charge generation layer and the charge transport layer were laminated in a reverse order, and the photosensitive member was evaluated in the same manner as in Example 17 except that the photosensitive member was initially charged in a positive polarity, whereby the following results were obtained:

| | |
|---|---|
| V₀ | +700 V |
| E_{1/2} | 1.42 lux.sec |

### Example 66

An electrophotographic photosensitive member was prepared in the same manner as in Example 35 except that the charge generation layer and the charge transport layer were laminated in a reverse order, and the photosensitive member was evaluated in the same manner as in Example 35 except that the photosensitive member was initially charged in a positive polarity, whereby the following results were obtained:

| | |
|---|---|
| V₀ | +700 V |
| E_{1/2} | 1.97 lux.sec |

### Example 67

The preparation of the electrophotographic photosensitive member was proceeded with up to the formation of a charge generation layer in the same manner as in Example 8. Then, on the charge generation layer, a solution of 5 g of 2,4,7-trinitro-9-fluorenone and 5 g of poly-4,4'-dioxydiphenyl-2,2-propane carbonate (Mw = 300,000) in 50 g of tetrahydrofuran was applied by means of a wire bar and dried to form a 20 µm-thick charge transport layer.

The electrophotographic performances of the resultant photosensitive member were evaluated in the same manner as in Example 1 except that the photosensitive member was initially charged in a positive polarity, whereby the following results were obtained:

| | |
|---|---|
| V₀ | +700 volts |
| E_{1/2} | 2.55 lux.sec |

### Example 68

An electrophotographic photosensitive member was prepared and evaluated in the same manner as in Example 67 except for using a charge generation layer-forming dispersion liquid identical to the one prepared in Example 23, thereby providing the following results:

| | |
|---|---|
| V₀ | +710 volts |
| E_{1/2} | 2.75 lux.sec |

### Example 69

0.5 g of Pigment (3)-20 and 9.5 g of cyclohexanone were subjected to 5 hours of dispersion in a paint shaker. Into the dispersion, a solution of 5 g of the charge transport substance used in Example 1 and 5 of polycarbonate in 40 g of tetrahydrofuran was added, and the mixture was subjected to further 1 hour of shaking. The resultant coating liquid was applied on an aluminum support by means of a wire bar and dried to form a 15 µm-thick photosensitive layer.

The electrophotographic performance of the resultant photosensitive member was evaluated in a similar manner as in Example 1 except for using a positive charging polarity, whereby the following results were obtained.

| | |
|---|---|
| V₀ | +700 volts |
| E_{1/2} | 1.35 lux.sec |

### Example 70

An electrophotographic photosensitive member was prepared and evaluated in the same manner as in Example 69 except for using Pigment (7)-4 instead of Pigment (3)-20, to provide the following results:

| | |
|---|---|
| V₀ | +685 volts |
| E_{1/2} | 1.79 lux.sec |

### Example 71

A sheet-form aluminum support was coated with a solution of 5 g of methoxymethylated nylon (Mw = 30,000) and 9.5 g of alcohol-soluble copolymer nylon (Mw = 25,000) in 90 g of methanol by means of a wire bar, followed by drying to form a 0.5 µm-thick undercoating layer.

Then, 4.5 g of Pigment (10)-1 was added to a solution of 2.2 g of polyvinyl butyral (butyral degree = 63 mol. %, Mw = 35,000) in 95 g of cyclohexanone and dispersed therein by means of a sand mill for 24 hours. The resultant dispersion was applied by a wire bar onto the undercoating layer and dried to form a 0.2 µm-thick charge generation layer.

Then, 4 g of an amine compound of the following formula: 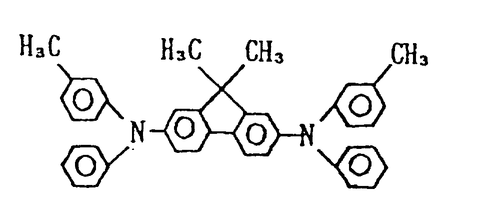 and 5 g of polycarbonate (Mw = 40,000) were dissolved in 40 g of chlorobenzene, and the resultant liquid was applied by a wire bar onto the charge generation layer and dried to form a 24 µm-thick charge transport layer, thereby providing an electrophotographic photosensitive member of Example 71, which was then evaluated in the same manner as in Example 1. The results are shown in Table 5.

### Examples 72 - 108

Electrophotographic photosensitive members of Examples 72 - 108 were prepared and evaluated in the same manner as in Example 71 except for using Pigments, respectively indicated in Table 5. The results are also shown in Table 5.

**Table 5**

| Ex. | Pigment | V₀ (-V) | E_{1/2} (lux.sec) |
|---|---|---|---|
| 71 | (10)-1 | 695 | 1.03 |
| 72 | (9)-4 | 690 | 2.19 |
| 73 | (10)-3 | 705 | 1.16 |
| 74 | (10)-6 | 700 | 0.97 |
| 75 | (10)-11 | 695 | 1.70 |
| 76 | (10)-12 | 695 | 1.38 |
| 77 | (10)-14 | 695 | 0.85 |
| 78 | (10)-16 | 700 | 1.01 |
| 79 | (10)-17 | 690 | 1.12 |
| 80 | (10)-18 | 695 | 1.71 |
| 81 | (10)-19 | 700 | 1.26 |
| 82 | (10)-20 | 705 | 1.83 |
| 83 | (10)-21 | 700 | 1.10 |
| 84 | (10)-23 | 710 | 1.20 |
| 85 | (10)-24 | 700 | 0.97 |
| 86 | (10)-25 | 690 | 1.85 |
| 87 | (11)-1 | 695 | 1.33 |
| 88 | (11)-2 | 690 | 1.63 |
| 89 | (14)-6 | 700 | 0.82 |
| 90 | (13)-4 | 695 | 2.23 |
| 91 | (14)-2 | 705 | 1.23 |
| 92 | (14)-3 | 705 | 0.89 |
| 93 | (14)-8 | 700 | 1.05 |
| 94 | (14)-11 | 695 | 0.85 |
| 95 | (14)-12 | 700 | 1.38 |
| 96 | (14)-13 | 705 | 1.47 |
| 97 | (14)-18 | 695 | 1.25 |
| 98 | (14)-21 | 695 | 0.99 |
| 99 | (14)-24 | 695 | 1.26 |
| 100 | (14)-25 | 705 | 1.23 |
| 101 | (14)-26 | 690 | 1.70 |
| 102 | (14)-27 | 695 | 1.26 |
| 103 | (14)-28 | 700 | 1.84 |
| 104 | (14)-29 | 705 | 1.67 |
| 105 | (14)-32 | 690 | 0.84 |
| 106 | (14)-34 | 705 | 1.33 |
| 107 | (15)-1 | 690 | 1.42 |
| 108 | (15)-2 | 705 | 1.68 |

### Comparative Examples 11 - 14

Electrophotographic photosensitive members of Comparative Examples 11 - 14 were prepared in the same manner as in Example 71 except for using Comparative Pigments 11 - 14, respectively, shown below instead of Pigment (10)-1, and were evaluated in the same manner as in Example 71. The results are shown in Table 6.

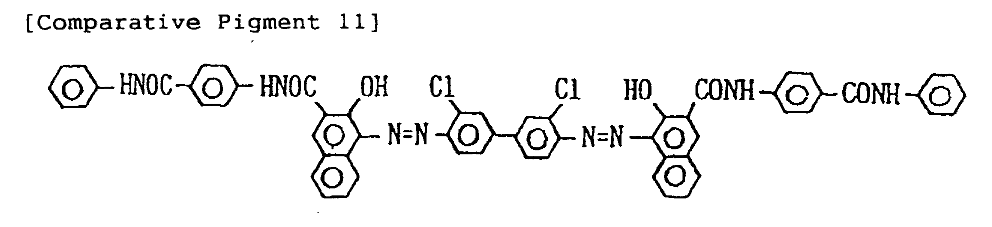

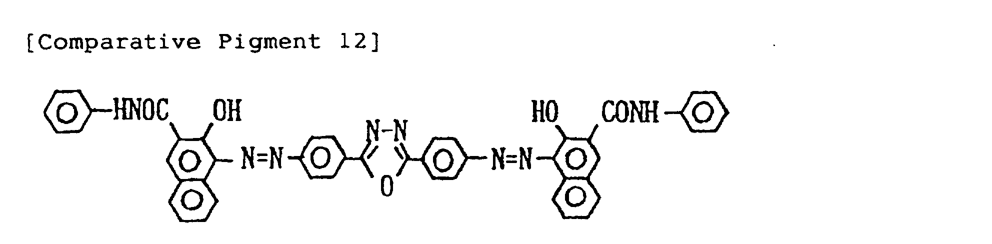

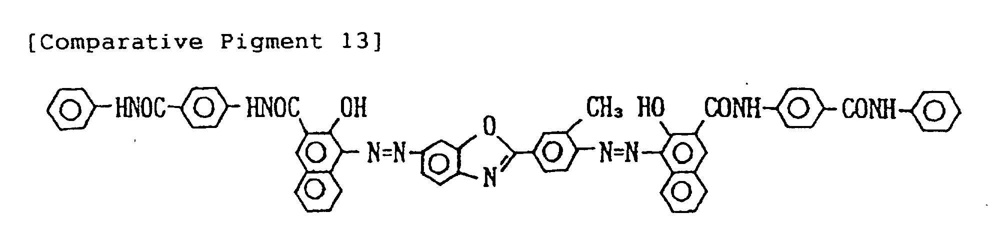

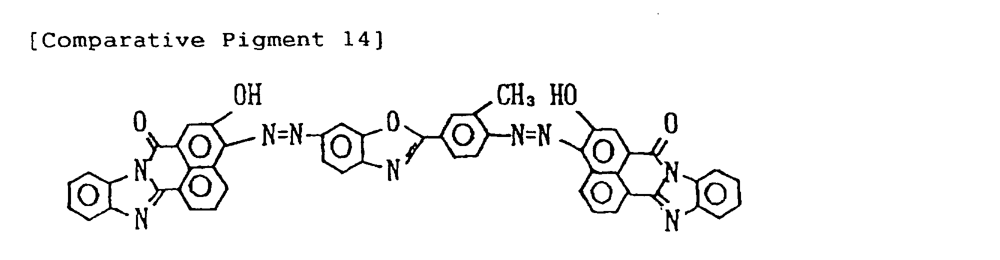

**Table 6**

| Comp. Ex. | Comp. Pigment | V₀ (-V) | E_{1/2} (lux.sec) |
|---|---|---|---|
| 11 | 11 | 625 | 2.63 |
| 12 | 12 | 670 | 2.12 |
| 13 | 13 | 660 | 3.82 |
| 14 | 14 | 655 | 4.28 |

From the results shown in Table 5 in comparison with those in Table 6, the electrophotographic photosensitive members according to the present invention all exhibited a sufficient chargeability and an excellent sensitivity.

### Examples 109 - 133

The evaluation of ΔV_{D} and ΔV_{L} in Example 37 was repeated by using photosensitive members of Examples 71, 72, 74, 76 - 80, 84 - 87, 89, 91, 92, 94, 97 - 99, 101 - 105 and 107. The results are shown in Table 7.

**Table 7**

| Ex. | Photosensitive member | ΔV_{D} (V) | ΔV_{L} (V) |
|---|---|---|---|
| 109 | Ex. 71 | -10 | 0 |
| 110 | Ex. 72 | -20 | +10 |
| 111 | Ex. 74 | -5 | -5 |
| 112 | Ex. 76 | 0 | +10 |
| 113 | Ex. 77 | -10 | +5 |
| 114 | Ex. 78 | -20 | -5 |
| 115 | Ex. 79 | +5 | 0 |
| 116 | Ex. 80 | -5 | +5 |
| 117 | Ex. 84 | -10 | +10 |
| 118 | Ex. 85 | +5 | +5 |
| 119 | Ex. 86 | 0 | 0 |
| 120 | Ex. 87 | -10 | -5 |
| 121 | Ex. 89 | -5 | +5 |
| 122 | Ex. 91 | -15 | -5 |
| 123 | Ex. 92 | 0 | 0 |
| 124 | Ex. 94 | -10 | +5 |
| 125 | Ex. 97 | -10 | +10 |
| 126 | Ex. 98 | 0 | 0 |
| 127 | Ex. 99 | -10 | +5 |
| 128 | Ex. 101 | +5 | +15 |
| 129 | Ex. 102 | -5 | +5 |
| 130 | Ex. 103 | 0 | +20 |
| 131 | Ex. 104 | -10 | +10 |
| 132 | Ex. 105 | -10 | -5 |
| 133 | Ex. 107 | +5 | +10 |

### Comparative Examples 15 - 18

The electrophotographic photosensitive members prepared in Comparative Examples 11 - 14 were respectively evaluated in the same manner as in Example 109. The results are shown in Table 8.

**Table 8**

| Comp. Ex. | Photosensitive member | ΔV_{D} (V) | ΔV_{L} (V) |
|---|---|---|---|
| 15 | Comp.Ex. 11 | -75 | +80 |
| 16 | Comp.Ex. 12 | -10 | +25 |
| 17 | Comp.Ex. 13 | -65 | +35 |
| 18 | Comp.Ex. 14 | -55 | +60 |
| 10 | Comp.Ex. 5 | -45 | +40 |

From the results shown in Table 7 in comparison with those in Table 8, the electrophotographic photosensitive members of the present invention exhibited little potential change during repetitive use.

### Example 134

On an aluminum vapor deposition layer formed on a polyethylene terephthalate film, a 0.5 µm-thick undercoating layer of polyvinyl alcohol was formed, and further thereon, a charge generation layer-forming dispersion liquid identical to the one prepared in Example 87 was applied by a wire bar and dried to form a 0.2 µm-thick charge generation layer.

Then 5 g of a styryl compound of the following formula: 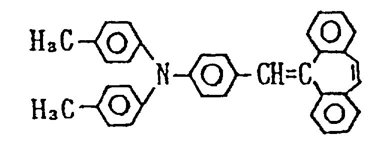 and 5 g of polycarbonate (Mw = 40,000) were dissolved in 40 g of tetrahydrofuran, and the resultant solution was applied by a wire bar on the charge generation layer and dried to form a 20 µm-thick charge transport layer.

The thus-prepared electrophotographic photosensitive member was evaluated with respect to electrophotographic performances in the same manner as in Examples 71 and 109 to provide the following results:

| | |
|---|---|
| V₀ | -700 V |
| E_{1/2} | 1.42 lux.sec |
| ΔV_{D} | -10 V |
| ΔV_{L} | +5 V |

### Example 135

An electrophotographic photosensitive member was prepared and evaluated in the same manner as in Example 61 except for using a charge generation layer-forming dispersion liquid identical to the one prepared in Example 97 and changing the charge transport layer thickness to 23 µm, thereby providing the following results:

| | |
|---|---|
| V₀ | -705 V |
| E_{1/2} | 1.31 lux.sec |
| ΔV_{D} | -5 V |
| ΔV_{L} | 0 V |

### Example 136

On an aluminum vapor deposition layer formed on a polyethylene terephthalate film, a 0.3 µm-thick undercoating layer of polyvinyl alcohol was formed, and further thereon, a charge generation layer-forming dispersion liquid identical to the one prepared in Example 85 was applied by a wire bar and dried to form a 0.2 µm-thick charge generation layer.

Then 5 g of a triacylamine compound of the following formula: 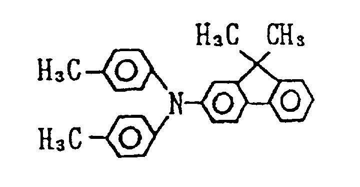 and 5 g of polycarbonate (Mw = 30,000) were dissolved in 40 g of tetrahydrofuran, and the resultant solution was applied by a wire bar on the charge generation layer and dried to form a 25 µm-thick charge transport layer.

The thus-prepared electrophotographic was evaluated with respect to electrophotographic performances in the same manner as in Examples 71 and 109 to provide the following results:

| | |
|---|---|
| V₀ | -705 V |
| E_{1/2} | 0.90 lux.sec |
| ΔV_{D} | -5 V |
| ΔV_{L} | 0 V |

### Example 137

An electrophotographic photosensitive member was prepared and evaluated in the same manner as in Example 136 except for using a charge generation layer-forming dispersion liquid identical to the one prepared in Example 105, thereby providing the following results:

| | |
|---|---|
| V₀ | -705 V |
| E_{1/2} | 0.87 lux.sec |
| ΔV_{D} | -5 V |
| ΔV_{L} | +10 V |

### Example 138

An electrophotographic photosensitive member was prepared in the same manner as in Example 71 except that the charge generation layer and the charge transport layer were laminated in a reverse order, and the photosensitive member was evaluated in the same manner as in Example 71 except that the photosensitive member was initially charged in a positive polarity, whereby the following results were obtained:

| | |
|---|---|
| V₀ | +690 V |
| E_{1/2} | 1.62 lux.sec |

### Example 139

An electrophotographic photosensitive member was prepared in the same manner as in Example 89 except that the charge generation layer and the charge transport layer were laminated in a reverse order, and the photosensitive member was evaluated in the same manner as in Example 89 except that the photosensitive member was initially charged in a positive polarity, whereby the following results were obtained:

| | |
|---|---|
| V₀ | +685 V |
| E_{1/2} | 1.65 lux.sec |

### Example 140

The preparation of the electrophotographic photosensitive member was proceeded with up to the formation of a charge generation layer in the same manner as in Example 77. Then, on the charge generation layer, a solution of 5 g of 2,4,7-trinitro-9-fluorenone and 7 g of polycarbonate (Mw = 30,000) in 50 g of tetrahydrofuran was applied by means of a wire bar and dried to form a 20 µm-thick charge transport layer.

The electrophotographic performances of the resultant photosensitive member were evaluated in the same manner as in Example 71 except that the photosensitive member was initially charged in a positive polarity, whereby the following results were obtained:

| | |
|---|---|
| V₀ | +695 volts |
| E_{1/2} | 1.82 lux.sec |

### Example 141

An electrophotographic photosensitive member was prepared and evaluated in the same manner as in Example 140 except for using a charge generation layer-forming dispersion liquid identical to the one prepared in Example 91 and changing the charge transport layer thickness to 24 µm, thereby providing the following results:

| | |
|---|---|
| V₀ | +705 volts |
| E_{1/2} | 1.77 lux.sec |

### Example 142

0.6 g of Pigment (10)-10 and 9.5 g of cyclohexanone were subjected to 10 hours of dispersion in a paint shaker. Into the dispersion, a solution of 5.2 g of the charge transport substance used in Example 136 and 5 of polycarbonate (Mw = 60,000) in 40 g of tetrahydrofuran was added, and the mixture was subjected to further 1.5 hours of shaking. The resultant coating liquid was applied on an aluminum support by means of a wire bar and dried to form a 20 µm-thick photosensitive layer.

The electrophotographic performance of the resultant photosensitive member was evaluated in a similar manner as in Example 71 except for using a positive charging polarity, whereby the following results were obtained.

| | |
|---|---|
| V₀ | +700 volts |
| E_{1/2} | 1.51 lux.sec |

### Example 143

An electrophotographic photosensitive member was prepared and evaluated in the same manner as in Example 142 except for using Pigment (16)-2 instead of Pigment (10)-10 and changing the time for dispersion with cyclohexanone to 16 hours, to provide the following results:

| | |
|---|---|
| V₀ | +690 volts |
| E_{1/2} | 1.81 lux.sec |

## Claims

1. An electrophotographic photosensitive member, comprising: a support and a photosensitive layer disposed on the support; said photosensitive layer containing an azo pigment having an organic group represented by formula (1) below: 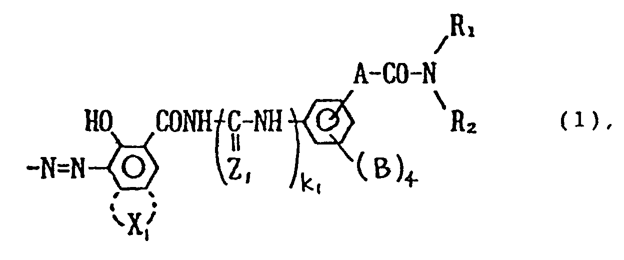 wherein X₁ is a group bonded to the benzene ring in the formula (1) to form a substituted or unsubstituted condensed hydrocarbon ring or substituted or unsubstituted condensed heterocyclic ring; each B independently denotes a hydrogen atom, halogen atom, nitro group, cyano group, carboxyl group, alkoxycarbonyl group, substituted or unsubstituted alkyl group, substituted or unsubstituted aralkyl group, or substituted or unsubstituted alkoxy group; R₁ and R₂ independently denote a hydrogen atom, a substituted or unsubstituted alkyl group, a substituted or unsubstituted aralkyl group, a substituted or unsubstituted aryl group, a substituted or unsubstituted heterocyclic group, or a group forming a substituted or unsubstituted cyclic amino group by a combination of the groups R₁ and R₂ together with the nitrogen (N) atom in the formula (1); Z₁ denotes an oxygen atom or sulfur atom; k₁ is 0 or 1; A denotes a substituted or unsubstituted alkylene group, substituted or unsubstituted alkenylene group, -R₃-CO- or 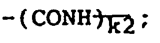 R₃ denotes a substituted or unsubstituted alkylene group; and k₂ is 0 or 1;
with the proviso that k₁ and k₂ cannot simultaneously be 0.

2. A photosensitive member according to Claim 1, wherein the azo pigment has an entire structure including a core unit to which the organic group of the formula (1) is bonded; said core unit including at least one ring unit each comprising at least one of substituted or unsubstituted aromatic hydrocarbon rings and substituted or unsubstituted heterocyclic rings with the proviso that a plurality of such ring units can be bonded to each other via an intervening bonding group.

3. A photosensitive member according to Claim 2,
wherein the azo pigment has an entire structure represented by formula (2) below:
Ar(̵N=N-Cp)ₙ (2),
wherein Ar denotes a core unit including at least one ring unit each comprising at least one of substituted or unsubstituted aromatic hydrocarbon rings and substituted or unsubstituted heterocyclic rings with the proviso that a plurality of such ring units can be bonded to each other via an intervening bonding group; n is an integer of 1 - 4; and each Cp denotes a coupler residue group having a phenolic hydroxy group with the proviso that at least one of up to 4 Cp groups constitutes the organic group of the formula (1).

4. A photosensitive member according to Claim 3, wherein n in the formula (2) is at least 2.

5. A photosensitive member according to Claim 1, wherein the azo pigment is selected by determining parameters in the formula (1) to additionally satisfy the following condition (a) or (b):
(a) A is an alkylene group or alkenylene group selected from -CH₂-, -CH₂CH₂-, -CH(CH₃)-, - CH₂CH₂CH₂- or -CH=CH, R₃ is -CH₂-, and each B is a hydrogen atom, or
(b) A is 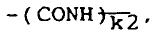 k₂ is 0 or 1, and Z is an oxygen atom.

6. A photosensitive member according to Claim 1, wherein R₁ in the formula (1) is a hydrogen atom.

7. A photosensitive member according to Claim 6, wherein R₂ in the formula (1) is a substituted or unsubstituted alkyl group, a substituted or unsubstituted aralkyl group, or a substituted or unsubstituted aryl group.

8. A photosensitive member according to Claim 7, wherein R₂ in the formula (1) is a substituted or unsubstituted aryl group.

9. A photosensitive member according to Claim 8, wherein R₂ in the formula (1) is a substituted or unsubstituted phenyl group.

10. A photosensitive member according to Claim 5, wherein R₁ in the formula (1) is a hydrogen atom.

11. A photosensitive member according to Claim 10, wherein R₂ in the formula (1) is a substituted or unsubstituted alkyl group, a substituted or unsubstituted aralkyl group, or a substituted or unsubstituted aryl group.

12. A photosensitive member according to Claim 11, wherein R₂ in the formula (1) is a substituted or unsubstituted aryl group.

13. A photosensitive member according to Claim 12, wherein R₂ in the formula (1) is a substituted or unsubstituted phenyl group.

14. A process cartridge, comprising: an electrophotographic photosensitive member and at least one means selected from the group consisting of charging means, developing means and cleaning means; said electrophotographic photosensitive member and said at least one means being integrally supported to form a unit which is detachably mountable to a main assembly of an electrophotographic apparatus;
wherein said electrophotographic photosensitive member is an electrophotographic photosensitive member according to any preceding claim.

15. An electrophotographic apparatus, comprising:
an electrophotographic photosensitive member, charging means, exposure means, developing means, and transfer means;
wherein said electrophotographic photosensitive member is an electrophotographic photosensitive member according to any one of claims 1 to 13.

## Patentansprüche

1. Elektrofotografisches lichtempfindliches Element, dass umfasst: einen Träger und eine lichtempfindliche Schicht, die auf dem Träger angeordnet ist; wobei die lichtempfindliche Schicht ein Azopigment mit einer organischen Gruppe enthält, die durch die nachstehende Formel (1) angegeben ist: 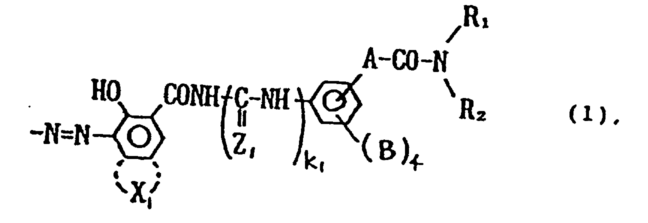 worin X₁ eine Gruppe ist, die an den Benzolring in der Formel (1) gebunden ist, um einen substituierten oder unsubstituierten kondensierten Kohlenwasserstoffring oder substituierten oder unsubstituierten kondensierten heterocyclischen Ring zu bilden; jedes B unabhängig voneinander ein Wasserstoffatom, Halogenatom, Nitrogruppe, Cyanogruppe, Carboxylgruppe, Alkoxycarbonylgruppe, substituierte oder unsubstituierte Alkylgruppe, substituierte oder unsubstituierte Aralkylgruppe, oder substituierte oder unsubstituierte Alkoxygruppe bezeichnet; R₁ und R₂ unabhängig voneinander ein Wasserstoffatom, eine substituierte oder unsubstituierte Alkylgruppe, eine substituierte oder unsubstituierte Aralkylgruppe, eine substituierte oder unsubstituierte Arylgruppe, eine substituierte oder unsubstituierte heterocyclische Gruppe, oder eine Gruppe, die eine substituierte oder unsubstituierte cyclische Aminogruppe durch eine Kombination der Gruppen R₁ und R₂ mit dem Stickstoff (N) Atom der Fromel (1) bildet, bezeichnen; Z₁ ein Sauerstoffatom oder Schwefelatom bezeichnet; k₁ 0 oder 1 ist; A eine substituierte oder unsubstituierte Alkylengruppe, substituierte oder unsubstituierte Alkenylengruppe, -R₃-CO- oder 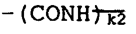 bezeichnet; R₃ eine substituierte oder unsubstituierte Alkylengruppe bezeichnet; und k₂ 0 oder 1 ist; unter der Vorraussetzung, dass k₁ und k₂ nicht gleichzeitig 0 sein können.

2. Lichtempfindliches Element gemäß Anspruch 1, wobei das Azopigment eine Gesamtstruktur besitzt, die eine Kerneinheit einschließt, an welche die organische Gruppe der Formel (1) gebunden ist; wobei die Kerneinheit wenigstens eine Ringeinheit einschließt, die wenigstens eines von substituierten oder unsubstituierten aromatischen Kohlenwasserstoffringen und substituierten oder unsubstituierten heterocyclischen Ringen umfasst, unter Vorraussetzung, dass eine Mehrzahl von derartigen Ringeinheiten aneinander über eine zwischenstehende Bindungsgruppe gebunden werden kann.

3. Lichtempfindliches Element gemäß Anspruch 2, wobei das Azopigment eine Gesamtstruktur besitzt, die durch die nachstehende Formel (2) dargestellt ist:
Ar―(N=N-Cp)ₙ (2)
worin Ar eine Kerneinheit bezeichnet, die wenigstens eine Ringeinheit einschließt, die jeweils wenigstens eine der substituierten oder unsubstituierten aromatischen Kohlenwasserstoffringe und substituierte oder unsubstituierte heterocyclische Ringe umfasst, unter der Vorraussetzung, dass eine Mehrzahl von derartigen Ringeinheiten aneinander über eine zwischenstehende Bindungsgruppe gebunden werden kann; n eine ganze Zahl von 1 bis 4 ist; und jedes Cp eine Kupplungsrestgruppe mit einer phenolischen Hydroxygruppe bezeichnet, unter der Vorraussetzung, dass wenigstens eines von bis zu 4 Cp Gruppen die organische Gruppe der Formel (1) zusammensetzt.

4. Lichtempfindliches Element gemäß Anspruch 3, wobei n in der Formel (2) wenigstens 2 beträgt.

5. Lichtempfindliches Element gemäß Anspruch 1, wobei das Azopigment ausgewählt ist, indem Parameter in der Formel (1) bestimmt sind, um zusätzlich die folgenden Bedingungen (a) oder (b) zu erfüllen:
(a) A ist eine Alkylengruppe oder Alkenylengruppe, die aus -CH₂-, -CH₂CH₂-, -CH(CH₃)-, -CH₂CH₂CH₂- oder - CH=CH ausgewählt ist, R₃ -CH₂- ist, und jedes B ein Wasserstoffatom ist, oder
(b) A 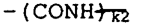 ist, k₂ 0 oder 1 ist, und Z ein Sauerstoffatom ist.

6. Lichtempfindliches Element gemäß Anspruch 1, wobei R₁ in der Formel (1) ein Wasserstoffatom ist.

7. Lichtempfindliches Element gemäß Anspruch 6, wobei R₂ in der Formel (1) eine substituierte oder unsubstituierte Alkylgruppe, eine substituierte oder unsubstituierte Aralkylgruppe, oder eine substituierte oder unsubstituierte Arylgruppe ist.

8. Lichtempfindliches Element gemäß Anspruch 7, wobei R₂ in der Formel (1) eine substituierte oder unsubstituierte Arylgruppe ist.

9. Lichtempfindliches Element gemäß Anspruch 8, wobei R₂ in der Formel (1) eine substituierte oder unsubstituierte Phenylgruppe ist.

10. Lichtempfindliches Element gemäß Anspruch 5, wobei R₁ in der Formel (1) ein Wasserstoffatom ist.

11. Lichtempfindliches Element gemäß Anspruch 10, wobei R₂ in der Formel (1) eine substituierte oder unsubstituierte Alkylgruppe, eine substituierte oder unsubstituierte Aralkylgruppe, oder eine substituierte oder unsubstituierte Arylgruppe ist.

12. Lichtempfindliches Element gemäß Anspruch 11, wobei R₂ in der Formel (1) eine substituierte oder unsubstituierte Arylgruppe ist.

13. Lichtempfindliches Element gemäß Anspruch 12, wobei R₂ in der Formel (1) eine substituierte oder unsubstituierte Phenylgruppe ist.

14. Prozesskassette, die umfasst: ein elektrofotografisches lichtempfindliches Element und wenigstens eine Einrichtung, die aus der Gruppe ausgewählt ist, die aus Aufladungseinrichtungen, Entwicklungseinrichtungen und Reinigungseinrichtungen besteht; wobei das elektrofotografische lichtempfindliche Element und die wenigstens eine Einrichtung als Einheit unterstützt ist, um eine Einheit zu bilden, welche abnehmbar auf eine Hauptanordnung eines elektrofotografischen Geräts montiert ist;
wobei das elektrofotografische lichtempfindliche Element ein elektrofotografisches lichtempfindliches Element gemäß einem vorhergehenden Anspruch ist.

15. Elektrofotografisches Gerät, dass umfasst:
ein elektrofotografisches lichtempfindliches Element, Aufladungseinrichtung, Belichtungseinrichtung, Entwicklungseinrichtung, und Übertragungseinrichtung;
wobei das elektrofotografische lichtempfindliche Element ein elektrofotografisches lichtempfindliches Element gemäß einem der Ansprüche 1 bis 13 ist.

## Revendications

1. Elément photosensible électrophotographique, comprenant : un support et une couche photosensible disposée sur le support ; ladite couche photosensible contenant un pigment azoïque comprenant un groupe organique représenté par la formule (1) ci-dessous : 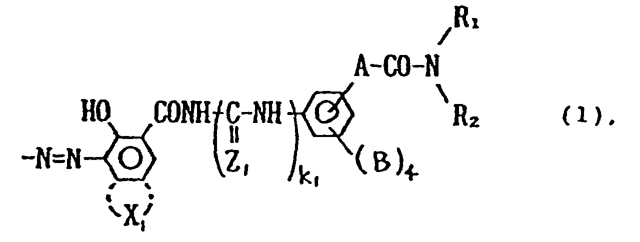 dans laquelle X₁ représente un groupe lié au noyau benzénique dans la formule (1) pour former un noyau hydrocarboné condensé substitué ou non substitué ou un noyau hétérocyclique condensé substitué ou non substitué ; chaque groupe B représente indépendamment un atome d'hydrogène, un atome d'halogène, un groupe nitro, un groupe cyano, un groupe carboxyle, un groupe alkoxycarbonyle, un groupe alkyle substitué ou non substitué, un groupe aralkyle substitué ou non substitué ou un groupe alkoxy substitué ou non substitué ; R₁ et R₂ représentent indépendamment un atome d'hydrogène, un groupe alkyle substitué ou non substitué, un groupe aralkyle substitué ou non substitué, un groupe aryle substitué ou non substitué, un groupe hétérocyclique substitué ou non substitué ou un groupe formant un groupe aminocyclique substitué ou non substitué par une association des groupes R₁ et R₂ conjointement avec l'atome d'azote (N) dans la formule (1) ; Z₁ représente un atome d'oxygène ou un atome de soufre ; k₁ est égal à 0 ou 1 ; A représente un groupe alkylène substitué ou non substitué, un groupe alcénylène substitué ou non substitué, un groupe -R₃-CO- ou (CONH)ₖ₂ ; R₃ représente un groupe alkylène substitué ou non substitué ; et k₂ est égal à 0 ou 1 ; sous réserve que k₁ et k₂ ne puissent être simultanément égaux à 0.

2. Elément photosensible suivant la revendication 1, dans lequel le pigment azoïque a une structure totale comprenant un motif central auquel le groupe organique de formule (1) est lié ; ledit motif central comprenant au moins un motif de noyau comprenant chacun au moins un des noyaux consistant en noyaux hydrocarbonés aromatiques substitués ou non substitués et noyaux hétérocycliques substitués ou non substitués, sous réserve que, sous forme d'une pluralité, ces motifs de noyaux puissent être liés les uns aux autres par un groupe de liaison intermédiaire.

3. Elément photosensible suivant la revendication 2, dans lequel le pigment azoïque a une structure totale représentée par la formule (2) ci-dessous :
Ar-(N=N-Cp)ₙ (2)
dans laquelle Ar représente un motif central comprenant au moins un motif de noyau, chacun comprenant au moins un des noyaux consistant en noyaux hydrocarbonés aromatiques substitués ou non substitués et noyaux hétérocycliques substitués ou non substitués, sous réserve que, sous forme d'une pluralité, ces motifs de noyaux puissent être liés les uns aux autres par un groupe de liaison intermédiaire ; n représente un nombre entier de 1 à 4 ; et chaque groupe Cp désigne un groupe de résidus de couplage ayant un groupe hydroxy phénolique, sous réserve qu'au moins un d'un nombre allant jusqu'à 4 groupes Cp constitue le groupe organique de formule (1).

4. Elément photosensible suivant la revendication 3, dans lequel n dans la formule (2) est égal à au moins 2.

5. Elément photosensible suivant la revendication 1, dans lequel le pigment azoique est choisi en déterminant les paramètres dans la formule (1) pour satisfaire en outre la condition (a) ou (b) suivante :
(a) A représente un groupe alkylène ou un groupe alcénylène choisi entre des groupes -CH₂-, -CH₂CH₂-, -CH(CH₃)-, -CH₂CH₂CH₂- ou -CH=CH, R₃ représente un groupe -CH₂- et chaque symbole B représente un atome d'hydrogène, ou
(b) A représente un groupe -(CONH)ₖ₂, k₂ est égal à 0 ou 1, et Z représente un atome d'oxygène.

6. Elément photosensible suivant la revendication 1, dans lequel R₁ dans la formule (1) représente un atome d'hydrogène.

7. Elément photosensible suivant la revendication 6, dans lequel R₂ dans la formule (1) représente un groupe alkyle substitué ou non substitué, un groupe aralkyle substitué ou non substitué ou un groupe aryle substitué ou non substitué.

8. Elément photosensible suivant la revendication 7, dans lequel R₂ dans la formule (1) représente un groupe aryle substitué ou non substitué.

9. Elément photosensible suivant la revendication 8, dans lequel R₂ dans la formule (1) représente un groupe phényle substitué ou non substitué.

10. Elément photosensible suivant la revendication 5, dans lequel R₁ dans la formule (1) représente un atome d'hydrogène.

11. Elément photosensible suivant la revendication 10, dans lequel R₂ dans la formule (1) représente un groupe alkyle substitué ou non substitué, un groupe aralkyle substitué ou non substitué ou un groupe aryle substitué ou non substitué.

12. Elément photosensible suivant la revendication 11, dans lequel R₂ dans la formule (1) représente un groupe aryle substitué ou non substitué.

13. Elément photosensible suivant la revendication 12, dans lequel R₂ dans la formule (1) représente un groupe phényle substitué ou non substitué.

14. Cartouche de traitement, comprenant : un élément photosensible électrophotographique et au moins un moyen choisi dans le groupe consistant en un moyen de charge, un moyen de développement et un moyen de nettoyage ; ledit élément photosensible électrophotographique et ledit au moins un moyen étant supportés de manière intégrée pour former une unité qui peut être montée de manière amovible dans un assemblage principal d'un appareil électrophotographique ;
dans lequel ledit élément photosensible électrophotographique est un élément photosensible électrophotographique suivant l'une quelconque des revendications précédentes.

15. Appareil électrophotographique, comprenant :
un élément photosensible électrophotographique, un moyen de charge, un moyen d'exposition, un moyen de développement et un moyen de transfert ;
dans lequel ledit élément photosensible électrophotographique est un élément photosensible électrophotographique suivant l'une quelconque des revendications 1 à 13.
